# EUROPEAN PATENT APPLICATION

(11) **EP 4 485 587 A1**
(43) Date of publication of application: **01.01.2025**
(21) Application number: 23759216.7
(22) Date of filing: 23.02.2023
(51) Int. Cl.: H01M 4/92

(54) **SULFUR-CONTAINING PLATINUM-CARBON CATALYST, PREPARATION METHOD THEREFOR AND USE THEREOF**

(30) Priority: 23.02.2022 CN 202210167782; 23.02.2022 CN 202210168795; 23.02.2022 CN 202210168790; 23.02.2022 CN 202210167772; 23.02.2022 CN 202210167784; 29.11.2022 CN 202211512322
(71) Applicant: China Petroleum & Chemical Corporation, Beijing 100728 (CN); Sinopec Research Institute of Petroleum Processing Co., Ltd., Beijing 100083 (CN)
(72) Inventor: ZHAO, Hong, Beijing 100083 (CN); RONG, Junfeng, Beijing 100083 (CN); CHENG, Yunlv, Beijing 100083 (CN); ZHANG, Qi, Beijing 100083 (CN); MI, Wanliang, Beijing 100083 (CN)
(74) Representative: Patentanwälte Ruff, Wilhelm, Beier, Dauster & Partner mbB
(86) International application number: PCT/CN2023/077761
(87) International publication number: WO 2023/160592

(57) **Abstract**

The invention relates to the field of electrochemical technology, and discloses a sulfur-containing platinum-carbon catalyst, a preparation method thereof, and an application thereof. The sulfur-containing platinum-carbon catalyst comprises sulfur-containing conductive carbon black and a platinum metal loaded thereon, wherein the total sulfur content in the sulfur-containing conductive carbon black is greater than or equal to the surface sulfur content, and the weight fraction of platinum is 20-70% by weight based on the total weight of the catalyst. The sulfur-containing platinum-carbon catalyst of the invention has a lower overpotential and a higher weight specific activity.

## Description

### Technical Field

The invention discloses a sulfur-modified carbon material and its preparation process and application.

### Background Technique

In recent years, major countries in the world have proposed the goals of "carbon emission peak" and "carbon neutrality", and the development of hydrogen energy and fuel cell technology is an important way. Pt/C catalysts are practical catalysts in the fields of fuel cells and water electrolysis, their cost, activity and stability are also one of the key factors restricting the development of fuel cells and water electrolysis. Unlike the sulfur-containing platinum-carbon catalysts used in chemical catalysis, the Pt/C catalysts desired in the field of electrochemistry usually require high Pt loading, uniform particle size, good dispersibility, and strong binding with the carbon carrier. However, it is very difficult to achieve large-scale preparation of high-load Pt/C catalysts while maintaining high dispersion of Pt particles and strong binding with the carrier.

In CN109904474A, sulfur-doped carbon materials were prepared by using sulfur-containing organic small molecules; after mixing it with platinum precursors, sulfur-doped and sulfur-containing platinum-carbon catalysts and carbon are obtained after heat treatment in a reducing atmosphere. The catalyst has good stability due to the anchoring effect of sulfur on platinum. However, since it uses transition metal salts to catalyze the condensation and carbonization of sulfur-containing small molecules, only the surface of conductive carbon black is coated with sulfur-containing substances; on the one hand, due to uneven coating, the platinum particles on the catalyst are not evenly dispersed, especially when the loading becomes higher, the particle size distribution is wider, resulting in a small electrochemical active area (ECSA) of the catalyst, on the other hand, it is also impossible to fully utilize the rich pore structure of the carbon carrier, making it difficult to effectively utilize platinum.

Nature Communications, (2019) 10:4977 uses silica as a template to prepare a mesoporous carbon carrier doped with thiophene sulfur and oxidized sulfur by cobalt-assisted pyrolysis; after wet impregnation of the mesoporous carbon carrier, a Pt/C single-atom catalyst with a loading of 6.24% is obtained; however, its loading and catalytic activity are both low, making it difficult to meet the needs of practical applications.

In addition, for the Pt/C catalyst, especially when used in fuel cells, the impurity CO in H₂, the trace impurity H₂S, and the impurity SOₓ in the air are strongly adsorbed on the surface of the precious metal Pt, making the Pt-based catalyst easily poisoned and causing the problem of reduced catalyst activity. The common solution is to start with controlling the purity of hydrogen or introduce other metal components, but such alloy catalysts have the problems of complex preparation process and poor stability.

Therefore, it is very important to develop Pt/C catalysts with high-loading, high-uniformity, high-activity and high-stability and their preparation process that are easy to be scaled up industrially. Carbon materials have a wide range of sources and rich properties and have been widely used in various technical fields. In the field of electrocatalysts, conductive carbon black is a practical carrier of electrocatalysts. By appropriately modifying conductive carbon black, it is expected to break through the limitations on catalyst performance by using appropriate modified carbon materials as carriers.

### Summary of the Invention

One object of the present invention is to provide a sulfur-modified carbon material, which is particularly suitable as a carrier of a platinum-carbon electrocatalyst and can significantly improve the catalytic performance of the platinum-carbon electrocatalyst. Another object of the present invention is to provide a sulfur-containing platinum-carbon catalyst obtained by using the sulfur-modified carbon material, which has a catalytic activity and stability significantly superior to existing commercial catalysts. Another object of the present invention is to provide the use of the sulfur-containing platinum-carbon catalyst in a fuel cell or water electrolysis. Another object of the present invention is to provide the use of the sulfur-containing platinum-carbon catalyst for improving the resistance of the platinum-carbon catalyst to catalyst poisoning, wherein the poisoning is selected from SOₓ poisoning, CO poisoning and H₂S poisoning.

In order to achieve one or more of the aforementioned objects, the present invention provides the technical solutions of the following exemplary aspects:
1. A sulfur-containing platinum-carbon catalyst, comprising sulfur-containing conductive carbon black as a carrier and a platinum metal loaded thereon, characterized in that at least 70wt.% of platinum metal particles are loaded inside the sulfur-containing conductive carbon black, and compared with the benchmark platinum carbon catalyst using sulfur-free conductive carbon black as a carrier, the sulfur-containing platinum carbon catalyst has a characteristic peak of Pt 4f 7/2 in the XPS spectrum that is increased by at least 0.3 eV.
2. The sulfur-containing platinum-carbon catalyst according to alternative aspect 1, wherein the Pt 4f 7/2 characteristic peak of the benchmark platinum-carbon catalyst is located at about 71.3 eV in the XPS spectrum; the Pt 4f 7/2 characteristic peak of the sulfur-containing platinum-carbon catalyst is located at about 71.6 eV or above, about 71.7 eV or above, or about 71.9 eV or above in the XPS spectrum, and preferably the Pt 4f 7/2 characteristic peak of the sulfur-containing platinum-carbon catalyst is located at about 72.2 eV or less in the XPS spectrum.
3. The sulfur-containing platinum-carbon catalyst according to alternative aspect 1, wherein the sulfur-containing platinum-carbon catalyst has no Pt characteristic peak in the XRD spectrum, or the ratio of the unit weight platinum normalized peak intensity to the full width at half-maximum of the Pt (111) characteristic peak is not greater than 0.8 and the ratio of the unit weight platinum normalized peak intensity to the full width at half-maximum of the Pt (200) characteristic peak is not greater than 0.5;
   preferably, when the platinum content of the sulfur-containing platinum-carbon catalyst is 10wt.% or less, the sulfur-containing platinum-carbon catalyst has no Pt characteristic peak in the XRD spectrum, or the ratio of the unit weight platinum normalized peak intensity to the full width at half-maximum of the Pt (111) characteristic peak is not greater than 0.6 and the ratio of the unit weight platinum normalized peak intensity to the full width at half-maximum of the Pt (200) characteristic peak is not greater than 0.4.
4. The sulfur-containing platinum-carbon catalyst according to alternative aspect 1, wherein the overall average sulfur content of the sulfur-containing conductive carbon black is greater than or equal to the surface sulfur content, and preferably the total sulfur content is equal to or more than 1.2 times, preferably equal to or more than 1.5 times the surface sulfur content.
5. The sulfur-containing platinum-carbon catalyst according to alternative aspect 1, wherein the total sulfur content of the sulfur-containing conductive carbon black is 0.1-10wt.%, preferably 1-8wt.%, and further preferably 1-4wt.%.
6. The sulfur-containing platinum-carbon catalyst according to alternative aspect 1, wherein the content of platinum is 1-20wt.%, preferably 5-20wt.%, preferably 5-15wt.%, and further preferably 7-10wt.%, based on the total weight of the sulfur-containing platinum-carbon catalyst.
7. The sulfur-containing platinum-carbon catalyst according to alternative aspect 1, wherein the content of platinum is 20-70wt.%, preferably 20-60wt.%, and more preferably 40-60wt.%, based on the total weight of the sulfur-containing platinum-carbon catalyst.
8. The sulfur-containing platinum-carbon catalyst according to alternative aspect 1, wherein the platinum metal particles having regular lattice fringes do not exceed 60%, preferably are 40wt.% or less, and further preferably 10wt.% or less.
9. A process for preparing the sulfur-containing platinum-carbon catalyst according to alternative aspect 1, characterized in that the process comprises:
   (1) impregnating the conductive carbon black with a solution containing sulfur at 10-80 °C for 1-5 hours, and drying the impregnated product to obtain sulfur-containing conductive carbon black;
   (2) removing a solvent from the homogeneous mixture containing the sulfur-containing conductive carbon black obtained in step (1), the platinum source and the solvent to obtain a precursor material;
   (3) heat-treating the precursor material in a reducing atmosphere to obtain the sulfur-containing platinum-carbon catalyst.
10. The process according to alternative aspect 9, wherein the concentration of sulfur in the sulfur-containing solution is 0.0004-0.02 g/mL.
11. The process according to alternative aspect 9, wherein the amount of sulfur used is 0.005-0.06 g relative to 1 g of the conductive carbon black.
12. The process according to alternative aspect 9, wherein the heat treatment in step (3) is performed at 80-200 °C.
13. The process according to alternative aspect 9, wherein the drying conditions in step (1) include: a temperature of 20-100 °C and a time of 5-10 hours.
14. Use of the sulfur-containing platinum-carbon catalyst according to any one of alternative aspects 1 to 8 in a fuel cell or water electrolysis, preferably use in a proton exchange membrane fuel cell or proton exchange membrane electrolysis of water.
15. Use of the sulfur-containing platinum-carbon catalyst according to any one of alternative aspects 1-8 for improving the resistance of a platinum-carbon catalyst to catalyst poisoning, wherein the poisoning is selected from SOₓ poisoning, CO poisoning and H₂S poisoning.
16. The use according to alternative aspect 15, the sulfur-containing platinum-carbon catalyst is used in the cathode reaction of fuel cells, wherein O₂ in a raw gas is contacted with the sulfur-containing platinum-carbon catalyst, and the content of SOₓ in the raw gas is 120 ppm or less, preferably 100 ppm or less, and also preferably 50 ppm or less.
17. The use according to alternative aspect 15, the sulfur-containing platinum-carbon catalyst is used in the anode reaction of hydrogen fuel cells, wherein H₂ in a raw gas is contacted with the sulfur-containing platinum-carbon catalyst, and the CO content in the raw gas is 1500 ppm or less, preferably 1200 ppm or less, and also preferably 1000 ppm or less.
18. The use according to alternative aspect 15, the sulfur-containing platinum-carbon catalyst is used in the anode reaction of hydrogen fuel cells, wherein H₂ in the raw gas is contacted with the sulfur-containing platinum-carbon catalyst, and the content of H₂S in the raw gas is 15 ppm or less, preferably 10 ppm or less, and further preferably 5 ppm or less.

Alternatively, or in combination with the above-mentioned technical solutions of each aspect, the present invention also provides the following technical solutions of alternative aspects:
1. A sulfur-modified carbon material, comprising conductive carbon black and sulfur elements distributed therein, characterized in that the total sulfur content in the sulfur-modified carbon material is equal to or more than 1.2 times, preferably equal to or more than 1.5 times, the surface sulfur content.
2. The sulfur-modified carbon material according to exemplary aspect 1, wherein the total sulfur content in the sulfur-modified carbon material is 0.1-10wt.%, preferably 1-8wt.%, and further preferably 1-4wt.%, based on the total weight of the sulfur-modified carbon material.
3. The sulfur-modified carbon material according to exemplary aspect 1, wherein the surface sulfur content in the sulfur-modified carbon material is 0.1-6wt.%, preferably 0.5-3wt.%, based on the total weight of the surface layer of the sulfur-modified carbon material.
4. The sulfur-modified carbon material according to exemplary aspect 1, wherein the specific surface area of the sulfur-modified carbon material is 200-2000 m²/g.
5. The sulfur-modified carbon material according to exemplary aspect 1, wherein the conductive carbon black is one or more of EC-300J, EC-600JD, ECP600JD, VXC72, VXC72R, Black pearls 2000, PRINTEX XE2-B, PRINTEX L6 and HIBLAXK 40B2.
6. The sulfur-modified carbon material according to exemplary aspect 1, wherein the sulfur-modified carbon material is prepared by impregnation, wherein the conductive carbon black is impregnated with a solution containing a sulfur source.
7. The sulfur-modified carbon material according to exemplary aspect 1, the sulfur element is introduced into the conductive carbon black in the form of elemental sulfur.
   Accordingly, in combination with aspects 6 and 7, it is preferred that the sulfur source used for impregnation is elemental sulfur, so that the sulfur element is introduced into the conductive carbon black in the form of elemental sulfur. Further, after the sulfur element is introduced into the conductive carbon black in the form of elemental sulfur, it is preferred that the sulfur element in the sulfur-modified carbon material is present in the conductive carbon black in the form of elemental sulfur or substantially in the form of elemental sulfur.
8. A process for preparing the sulfur-modified carbon material according to any one of exemplary aspects 1 to 7, comprising:
   A) impregnation step: impregnating the conductive carbon black with a solution containing sulfur at 10-80 °C for 1-5 hours, and
   B) drying step: drying the impregnated product obtained in step A).
9. The process according to exemplary aspect 8, wherein the solvent in the sulfur-containing solution is one or more of CCl₄, CS₂, cyclohexane, and n-hexane.
10. The process according to exemplary aspect 8, wherein the concentration of sulfur in the sulfur-containing solution is 0.0004-0.02 g/mL.
11. The process according to exemplary aspect 8, wherein the amount of sulfur used is 0.005-0.06 g relative to 1 g of the conductive carbon black;
12. The process according to exemplary aspect 8, wherein the impregnation temperature is 10-40 °C, preferably 20-30 °C, particularly preferably room temperature (25 °C), and the impregnation time is preferably 2-4h.
13. The process according to exemplary aspect 8, wherein the drying conditions include: temperature of 20-100 °C and time of 5-10h.
14. Use of the sulfur-modified carbon material according to exemplary aspect 1 as a carrier for preparing a catalyst.
15. The use according to exemplary aspect 14, wherein the catalyst is a platinum-carbon catalyst for an electrode catalyst.

Therefore, the present invention provides the following solutions:

### Solution (I): Sulfur-modified carbon materials and their preparation process and application

The object of one aspect of the present invention is to overcome the above-mentioned technical problems existing in the prior art, and to provide a sulfur-modified carbon material and a preparation process thereof, a sulfur-containing platinum-carbon catalyst and a fuel cell. The sulfur-modified carbon material is suitable as a carrier of the sulfur-containing platinum-carbon catalyst, and can significantly improve the catalytic performance and anti-poisoning of the sulfur-containing platinum-carbon catalyst.

In order to achieve the above-mentioned object, another aspect of the present invention is to provide a sulfur-modified carbon material, which comprises conductive carbon black and sulfur element compounded therein, and the total sulfur content in the sulfur-modified carbon material is greater than or equal to the surface sulfur content, preferably, the total sulfur content in the sulfur-modified carbon material is equal to or more than 1.2 times, and more preferably equal to or more than 1.5 times the surface sulfur content.

Preferably, the total sulfur content in the sulfur-modified carbon material is 0.1-10wt.%, preferably 1-8wt.%, and further preferably 1-4wt. %.

Preferably, the surface sulfur content in the sulfur-modified carbon material is 0.1-6wt.%, preferably 0.5-3wt.%.

Preferably, the oxygen content in the sulfur-modified carbon material is 4-15wt.%.

Preferably, the specific surface area of the sulfur-modified carbon material is 200-2000 m²/g.

Preferably, the conductive carbon black is one or more of EC-300J, EC-600JD, ECP600JD, VXC72, VXC72R, Black pearls 2000, PRINTEX XE2-B, PRINTEX L6 and HIBLAXK 40B2.

Another aspect of the present invention is to provide a process for preparing the sulfur-modified carbon material, the process comprising: impregnating the conductive carbon black with a solution containing sulfur at 10-80 °C for 1-5 hours, and drying the impregnated product to obtain the sulfur-modified carbon material.

Preferably, the solvent in the sulfur-containing solution is one or more of CCl₄, CS₂, cyclohexane and n-hexane.

Preferably, the concentration of sulfur in the sulfur-containing solution is 0.0004-0.02 g/mL.

Preferably, the amount of sulfur used is 0.005-0.06 g relative to 1 g of the conductive carbon black.

Preferably, the drying conditions include: temperature of 20-100 °C and time of 5-10 h.

Preferably, the conductive carbon black is one or more of EC-300J, EC-600JD, ECP600JD, VXC72, VXC72R, Black pearls 2000, PRINTEX XE2-B, PRINTEX L6 and HIBLAXK 40B2.

Another aspect of the present invention is to provide a sulfur-containing platinum-carbon catalyst, which comprises a sulfur-modified carbon material and a platinum metal loaded thereon; wherein the sulfur-modified carbon material is the above-mentioned sulfur-modified carbon material of the present invention, or the sulfur-modified carbon material obtained by the above-mentioned preparation process of the present invention.

Preferably, based on the total weight of the sulfur-containing platinum-carbon catalyst, the weight fraction of platinum is 0. 1-70wt.%; depending on different uses, the weight fraction of platinum can be 0.1-lwt.%, 1-4wt.%, 1-8wt.%, 4-20wt.%, 20-40wt.% or 40-70wt.%.

Preferably, the platinum particles having regular lattice fringes in the sulfur-containing platinum-carbon catalyst do not exceed 60wt.%.

Another aspect of the present invention is to provide an use of the sulfur-modified carbon material of the present invention, of the sulfur-modified carbon material obtained by the preparation process of the present invention, or of the sulfur-containing platinum-carbon catalyst of the present invention as an electrode material.

Another aspect of the present invention is to provide a fuel cell, wherein the fuel cell uses the sulfur-modified carbon material of the present invention, the sulfur-modified carbon material obtained by the preparation process of the present invention, or the sulfur-containing platinum-carbon catalyst of the present invention.

Preferably, the fuel cell is a hydrogen fuel cell.

Another aspect of the present invention is to provide a PEM electrolytic bath, characterized in that the cathode of the PEM electrolytic bath uses the sulfur-modified carbon material of the present invention, the sulfur-modified carbon material obtained by the preparation process of the present invention, or the sulfur-containing platinum-carbon catalyst of the present invention.

Through the above technical solutions, compared with the prior art, the present invention can achieve the following beneficial technical effects.
1. The present invention produces a novel sulfur-modified carbon material by a simple process, and the sulfur in the sulfur-modified carbon material is more distributed inside the sulfur-modified carbon material.
2. The sulfur-modified carbon material produced by the present invention is particularly suitable as a carrier of platinum-carbon electrocatalysts and can significantly improve the catalytic performance of platinum-carbon electrocatalysts.
3. The sulfur-modified carbon material produced by the present invention can be used to produce platinum-carbon electrocatalysts with excellent anti-poisoning performance, high activity and high stability.

### Solution (II): Sulfur-containing platinum-carbon catalyst with high Pt content and its preparation process and application

The object of one aspect of the present invention is to solve the problem that the Pt/C catalyst synthesized in the prior art is difficult to achieve both high loading and high dispersion of Pt, and the problem of a weak interaction between the carrier and Pt. By utilizing the strong interaction between sulfur and Pt, a strong interaction is formed between the carrier and platinum by preparing sulfur-containing conductive carbon black, the dispersibility of platinum is improved, and a Pt/C catalyst with a simple preparation process, high loading, high uniformity, high activity and high stability is developed; secondly, in view of the problems that the current thermal reduction process requires a high temperature, the liquid phase reduction process has a complex process and a lot of wastewater discharge, a new catalyst preparation process that is more green and environmentally friendly is provided.

In order to achieve the above-mentioned object, the present invention provides a sulfur-containing platinum-carbon catalyst, which includes sulfur-containing conductive carbon black and a platinum metal loaded thereon, wherein the total sulfur content in the sulfur-containing conductive carbon black is equal to or more than 1.2 times, and preferably equal to or more than 1.5 times the surface sulfur content, and the weight fraction of platinum is 20-70wt.% based on the total weight of the catalyst.

For the object of the present invention, the sulfur-modified carbon material of the present invention can be used as the sulfur-containing conductive carbon black. Accordingly, the "sulfur-containing conductive carbon black" can also be referred to as "sulfur-modified conductive carbon black".

Preferably, the platinum metal particles having regular lattice fringes in the sulfur-containing platinum-carbon catalyst do not exceed 60wt.%.

Preferably, at least 90wt.% of the platinum metal particles are loaded inside the sulfur-containing conductive carbon black.

According to the present invention, based on the total weight of the catalyst, the weight fraction of platinum is 20-70wt.%, and can be 20-40wt.% or 40-70wt.%. Accordingly, the sulfur-containing platinum-carbon catalyst with a high Pt content provided by the solution (II) of the present invention can be referred to as a high-platinum-content (sulfur-containing platinum-carbon) catalyst.

Preferably, the total sulfur content in the sulfur-containing conductive carbon black is 0.4-8wt.%, preferably 1-6wt.%.

Preferably, the surface sulfur content of the sulfur-containing conductive carbon black is 0. 1-6wt.%, preferably 0.5-4wt.%.

Preferably, the sulfur-containing platinum-carbon catalyst has a Pt 4f 7/2 characteristic peak located at 71.6 eV or above in the XPS spectrum.

Preferably, the conductive carbon black in the sulfur-containing conductive carbon black is one or more of EC-300J, EC-600JD, ECP600JD, VXC72, VXC72R, Black pearls 2000, PRINTEX XE2-B, PRINTEX L6 and HIBLAXK 40B2.

Another aspect of the present invention is to provide a sulfur-containing platinum-carbon catalyst, which includes sulfur-containing conductive carbon black and a platinum metal loaded thereon, wherein the total sulfur content in the sulfur-containing platinum-carbon catalyst is greater than or equal to the surface sulfur content, preferably the total sulfur content is equal to or more than 1.2 times, and more preferably equal to or more than 1.5 times the surface sulfur content; based on the total weight of the catalyst, the weight fraction of platinum is 20-70wt.%.
preferably, the platinum metal particles having regular lattice fringes in the sulfur-containing platinum-carbon catalyst do not exceed 60wt.%.
preferably, at least 90wt.% of the platinum metal particles are loaded inside the sulfur-containing conductive carbon black.

According to the present invention, based on the total weight of the catalyst, the weight fraction of platinum is 20-70wt.%, and can be 20-40wt.% or 40-70wt.%.
preferably, the total sulfur content is 0.4-8wt.%, preferably 1-6wt.%.
preferably, the surface sulfur content is 0.1-6wt.%, preferably 0.5-4wt.%.
preferably, the sulfur-containing platinum-carbon catalyst has a Pt 4f 7/2 characteristic peak located at 71.6 eV or above in the XPS spectrum.
preferably, the conductive carbon black in the sulfur-containing conductive carbon black is one or more of EC-300J, EC-600JD, ECP600JD, VXC72, VXC72R, Black pearls 2000, PRINTEX XE2-B, PRINTEX L6 and HIBLAXK 40B2.

Another aspect of the present invention is to provide a preparation process of a sulfur-containing platinum-carbon catalyst, the process comprising:
(1) impregnating the conductive carbon black with a solution containing sulfur at 10-80 °C for 1-5 hours, and drying the impregnated product to obtain sulfur-containing conductive carbon black;
(2) removing a solvent from the homogeneous mixture containing the sulfur-containing conductive carbon black obtained in step (1), the platinum source and the solvent to obtain a precursor material;
(3) in a reducing atmosphere, heat-treating the precursor material obtained in step (2) at 80-200 °C for 1-4 h to obtain a sulfur-containing platinum-carbon catalyst;
wherein, in step (2), the amount of the platinum source used is 0.25-2.4 g in terms of platinum element relative to 1 g of the sulfur-containing conductive carbon black.

Preferably, in step (1), the conductive carbon black is one or more of EC-300J, EC-600JD, ECP600JD, VXC72, VXC72R, Black pearls 2000, PRINTEX XE2-B, PRINTEX L6 and HIBLAXK 40B2.

Preferably, in step (1), the XPS analysis of the conductive carbon black shows that the oxygen content is greater than 4wt.%.

Preferably, in step (1), the specific surface area of the conductive carbon black is 200-2000 m²/g.

Preferably, in step (1), the solvent in the sulfur-containing solution is one or more of CCl₄, CS₂, cyclohexane, and n-hexane.

Preferably, in step (1), the amount of sulfur used is 0.005-0.06 g relative to 1 g of the carbon carrier.

Preferably, in step (1), the drying conditions include: temperature of 20-100 °C and time of 5-10 h.

Preferably, in step (2), the platinum source is one or more of chloroplatinic acid, chloroplatinate, tetraammineplatinum acetate and platinum acetylacetonate.

Preferably, in step (2), the solvent is one or more of water, alcohol solvents or ketone solvents. Also preferably, the solvent is water and/or ethanol, and also preferably a mixed solvent of water and ethanol.

Preferably, in step (2), the homogeneous mixture is allowed to stand for a period of time of 4 hours or more, preferably 16-30 hours, before the solvent is removed.

Preferably, in step (2), the drying temperature when removing the solvent is 100 °C or below.

Preferably, in step (3), the reducing atmosphere comprises hydrogen, preferably a mixed atmosphere of hydrogen and an inert gas, and further preferably a mixed atmosphere of hydrogen and nitrogen; preferably, hydrogen accounts for 5-30% by volume of the total gas.

Another aspect of the present invention is to provide a sulfur-containing platinum-carbon catalyst, which is prepared by the preparation process of the present invention.

Another aspect of the present invention is to provide the use of the sulfur-containing platinum-carbon catalyst of the present invention in a fuel cell or water electrolysis.

The sulfur-containing platinum-carbon catalyst of the present invention is suitable as an anode catalyst in a fuel cell. There is no particular limitation on the fuel cell, and it can be, for example, a hydrogen fuel cell (proton exchange membrane hydrogen fuel cell), a direct alcohol fuel cell (for example, a direct alcohol fuel cell with methanol or ethanol as the anode fuel), etc.

Another aspect of the present invention is to provide a PEM electrolytic bath, wherein the sulfur-containing platinum-carbon catalyst of the present invention is used in the cathode of the PEM electrolytic bath.

Through the above technical solutions, compared with the prior art, the present invention has the following beneficial technical effects.
1. the overall sulfur content in the carbon carrier of the present invention is greater than the surface sulfur content, which is conducive to making full use of the rich pore structure, so that Pt is not only loaded on the surface of the carrier, but also forms a better dispersion;
2. the preparation process of the present invention has low reduction temperature and low energy consumption;
3. compared with the sulfur-modified sulfur-containing platinum-carbon catalyst prepared by liquid phase reduction process, the preparation process of the sulfur-containing platinum-carbon catalyst of the present invention is simple, easy to be industrially scaled up, and there is obvious interaction between Pt and the carrier; the XPS spectrum peak of Pt is shifted to high electron volts, while the catalyst obtained by liquid phase reduction process has no such shift; it is believed that this interaction is greatly beneficial to improve the catalyst performance;
4. the sulfur-containing platinum-carbon catalyst prepared by the process of the present invention has ORR and HER catalytic activity and stability significantly superior to commercial catalysts;
5. the sulfur-containing platinum-carbon catalyst prepared by the process of the present invention has a large electrochemical active area ECSA because the Pt particles are small, uniformly distributed, and form an incompletely regular special structure.

### Solution (III): Sulfur-containing platinum-carbon catalyst with low Pt content and its preparation process and application

In view of the problem of low catalytic activity of the sulfur-containing platinum-carbon catalyst in the prior art, one object of the present invention is to provide a sulfur-containing platinum-carbon catalyst and its preparation process and application, wherein the Pt in the sulfur-containing platinum-carbon catalyst is present in the form of atomic clusters, has high dispersibility, and has a weight specific activity and overpotential far superior to commercial catalysts. In addition, the present invention also improves the wet impregnation process for manufacturing the sulfur-containing platinum-carbon catalyst, and realizes the preparation of the catalyst with lower energy consumption.

In order to achieve the above-mentioned object, one aspect of the present invention is to provide a sulfur-containing platinum-carbon catalyst, which comprises a sulfur-modified carbon carrier and a platinum metal loaded thereon, wherein the sulfur-modified carbon carrier is a sulfur-modified conductive carbon black, the total sulfur content in the sulfur-modified carbon carrier is greater than or equal to the surface sulfur content and the total sulfur content is 1-8wt.%, preferably the total sulfur content is equal to or more than 1.2 times, and more preferably equal to or more than 1.5 times the surface sulfur content; based on the total weight of the sulfur-containing platinum-carbon catalyst, the weight fraction of platinum is 1-20wt.%.

Preferably, the sulfur-containing platinum-carbon catalyst has no Pt characteristic peak in the XRD spectrum, or the ratio of the unit weight platinum normalized peak intensity to the full width at half-maximum of the Pt (111) characteristic peak is not greater than 0.8 and the ratio of the unit weight platinum normalized peak intensity to the full width at half-maximum of the Pt (200) characteristic peak is not greater than 0.5.

Preferably, when the platinum content of the sulfur-containing platinum-carbon catalyst is 10wt.% or less, the sulfur-containing platinum-carbon catalyst has no Pt characteristic peak in the XRD spectrum, or the ratio of the unit weight platinum normalized peak intensity to the full width at half-maximum of the Pt (111) characteristic peak is not greater than 0.6 and the ratio of the unit weight platinum normalized peak intensity to the full width at half-maximum of the Pt (200) characteristic peak is not greater than 0.4.

Preferably, based on the total weight of the sulfur-containing platinum-carbon catalyst, the weight fraction of platinum is 5-20wt.%, preferably 5-15%, and further preferably 7-10wt.%. Accordingly, the sulfur-containing platinum-carbon catalyst with a low Pt content provided by the solution (III) of the present invention can be referred to as a low-platinum-content (sulfur-containing platinum-carbon) catalyst.

Preferably, the total sulfur content in the sulfur-modified carbon carrier is 1-8wt.%, preferably 3-6wt.%.

Preferably, the surface sulfur content in the sulfur-modified carbon carrier is 0.1-6wt.%, preferably 0.5-3wt.%.

Preferably, the sulfur-containing platinum-carbon catalyst has a Pt 4f 7/2 characteristic peak located at 71.7 eV or above in the XPS spectrum.

Preferably, the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2.

Preferably, the XPS analysis of the conductive carbon black shows that the oxygen content is greater than 4wt.%.

Preferably, the conductive carbon black has a specific surface area of 200-2000 m²/g.

Another aspect of the present invention is to provide a sulfur-containing platinum-carbon catalyst, which comprises a sulfur-modified carbon carrier and a platinum metal loaded thereon, wherein the sulfur-modified carbon carrier is sulfur-modified conductive carbon black, the total sulfur content in the sulfur-containing platinum-carbon catalyst is greater than or equal to the surface sulfur content and the total sulfur content is 1-8wt.%, preferably the total sulfur content is equal to or more than 1.2 times, and also preferably equal to or more than 1.5 times the surface sulfur content; based on the total weight of the sulfur-containing platinum-carbon catalyst, the weight fraction of platinum is 1-20wt.%.

Preferably, the sulfur-containing platinum-carbon catalyst has no Pt characteristic peak in the XRD spectrum, or the ratio of the unit weight platinum normalized peak intensity to the full width at half-maximum of the Pt (111) characteristic peak is not greater than 0.8 and the ratio of the unit weight platinum normalized peak intensity to the full width at half-maximum of the Pt (200) characteristic peak is not greater than 0.5.

Preferably, when the platinum content of the sulfur-containing platinum-carbon catalyst is 10wt.% or less, the sulfur-containing platinum-carbon catalyst has no Pt characteristic peak in the XRD spectrum, or the ratio of the unit weight platinum normalized peak intensity to the full width at half-maximum of the Pt (111) characteristic peak is not greater than 0.6 and the ratio of the unit weight platinum normalized peak intensity to the full width at half-maximum of the Pt (200) characteristic peak is not greater than 0.4.

Preferably, based on the total weight of the sulfur-containing platinum-carbon catalyst, the weight fraction of platinum is 5-20wt.%, preferably 5-15%, and further preferably 7-10wt.%.

Preferably, the total sulfur content is 1-8wt.%, preferably 3-6wt.%.

Preferably, the surface sulfur content is 0. 1-6wt.%, preferably 0.5-3wt.%.

Preferably, the sulfur-containing platinum-carbon catalyst has a Pt 4f 7/2 characteristic peak located at 71.7 eV or above in the XPS spectrum.

Preferably, the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2.

Preferably, the XPS analysis of the conductive carbon black shows that the oxygen content is greater than 4wt.%.

Preferably, the conductive carbon black has a specific surface area of 200-2000 m²/g.

Another aspect of the present invention is to provide a preparation process of a sulfur-containing platinum-carbon catalyst, the process comprising:
(1) impregnating the carbon carrier with a solution containing sulfur at 10-80 °C for 1-5h, and drying the impregnated product to obtain a sulfur-modified carbon carrier;
(2) removing a solvent from the homogeneous mixture containing the sulfur-modified carbon carrier obtained in step (1), the platinum source and the solvent to obtain a precursor material;
(3) in a reducing atmosphere, heat-treating the precursor material obtained in step (2) at 80-200 °C for 1-4 h to obtain a sulfur-containing platinum-carbon catalyst;

wherein, in step (1), the carbon carrier is conductive carbon black;
in step (2), the amount of the platinum source used is 0.01-0.25 g in terms of platinum element, relative to 1 g of the sulfur-modified carbon carrier.

Preferably, in step (1), the conductive carbon black is one or more of EC-300J, EC-600JD, ECP600JD, VXC72, VXC72R, Black pearls 2000, PRINTEX XE2-B, PRINTEX L6 and HIBLAXK 40B2.

Preferably, in step (1), the XPS analysis of the conductive carbon black shows that the oxygen content is greater than 4wt.%.

Preferably, in step (1), the specific surface area of the conductive carbon black is 200-2000 m²/g.

Preferably, in step (1), the solvent in the sulfur-containing solution is one or more of CCl₄, CS₂, cyclohexane, and n-hexane.

Preferably, in step (1), the concentration of sulfur in the sulfur-containing solution is 0.0004-0.02 g/mL.

Preferably, in step (1), the amount of sulfur used is 0.005-0.06 g relative to 1 g of the carbon carrier.

Preferably, in step (1), the drying conditions include: temperature of 20-100 °C and time of 5-10 h.

Preferably, in step (2), the platinum source is one or more of chloroplatinic acid, chloroplatinate, tetraammineplatinum acetate and platinum acetylacetonate.

Preferably, in step (2), the solvent is one or more of water, alcohol solvents or ketone solvents. Also preferably, the solvent is water and/or ethanol, and also preferably a mixed solvent of water and ethanol.

Preferably, in step (2), the homogeneous mixture is allowed to stand for a period of time of 10 hours or more, preferably 15-24 hours, before the solvent is removed.

Preferably, in step (2), the drying temperature when removing the solvent is 100 °C or below.

Preferably, in step (3), the reducing atmosphere comprises hydrogen, preferably a mixed atmosphere of hydrogen and an inert gas, and further preferably a mixed atmosphere of hydrogen and nitrogen; preferably, hydrogen accounts for 5-30% by volume of the total gas.

Another aspect of the present invention is to provide a sulfur-containing platinum-carbon catalyst, which is prepared by the preparation process of the present invention.

Another aspect of the present invention is to provide the use of the sulfur-containing platinum-carbon catalyst of the present invention in a fuel cell or water electrolysis.

Another aspect of the present invention is to provide a PEM electrolytic bath, wherein the sulfur-containing platinum-carbon catalyst of the present invention is used in the cathode of the PEM electrolytic bath.

Through the above technical solutions, compared with the prior art, the present invention has the following beneficial technical effects:
1. the present invention produces a novel carbon carrier by modifying conductive carbon black with elemental sulfur; the sulfur-containing platinum-carbon catalyst manufactured with the carbon carrier can significantly improve the weight specific activity of the catalyst and reduce the overpotential;
2. in a preferred embodiment of the present invention, a sulfur-modified carbon carrier is prepared by simple solution impregnation, without the need for high-temperature calcination treatment. The preparation process is simple and has low energy consumption. The overall sulfur content in the prepared carbon carrier structure is much higher than the surface sulfur content. This novel structure can disperse Pt to the maximum extent, so that Pt atomic cluster catalysts can still be obtained at higher Pt loading.
3. when the commonly used wet impregnation process is used to prepare Pt-based catalysts, the reduction temperature is high and the energy consumption is large. However, the improved process in the present application has a low reduction temperature and can reduce the energy consumption of catalyst preparation.

### Solution (IV): Use of sulfur-containing platinum-carbon catalysts in the resistance to SOₓ toxicity

The sulfur-containing platinum-carbon catalyst of the present invention can be used to improve the resistance of the platinum-carbon catalyst to SOₓ toxicity. The sulfur-containing platinum-carbon catalyst of the present invention utilizes the strong interaction between sulfur and Pt, and the sulfur-modified carbon carrier is prepared by simply modifying the carbon carrier, so that a strong interaction is formed between the carrier and platinum, the adsorption of Pt on SOₓ is weaken and the tolerance of the catalyst to SOₓ is improved.

Accordingly, the present invention provides a cathode reaction process of a fuel cell, the process comprising: under cathode reaction conditions, contacting O₂ in a raw gas with the sulfur-containing platinum-carbon catalyst of the present invention; wherein the SOₓ content in the raw gas is 120 ppm or less, preferably 100 ppm or less, and preferably 50 ppm or less.

Preferably, the sulfur-containing platinum-carbon catalyst of the present invention is used as a cathode catalyst in a fuel cell.

Preferably, the fuel cell is a hydrogen fuel cell.

Preferably, the cathode reaction conditions include: the voltage is 0V or above, preferably 0-1. 1V.

Through the above technical solutions, compared with the prior art, the sulfur-containing platinum-carbon catalyst of the present invention has the following advantages: first, the preparation process is simple and easy to be scaled up industrially, and the improvement of the resistance of catalyst to SOₓ toxicity can be achieved only by carrier modification; second, the Pt particles of the catalyst obtained by the process are uniformly dispersed, and there is an obvious interaction between Pt and the carrier, which not only helps to improve the resistance of catalyst to poisoning, but also improves the catalyst's activity and stability.

### Solution (V): Use of sulfur-containing platinum-carbon catalysts in the resistance to CO toxicity

The sulfur-containing platinum-carbon catalyst of the present invention can be used to improve the resistance of the platinum-carbon catalyst to CO toxicity. The sulfur-containing platinum-carbon catalyst of the present invention utilizes the strong interaction between sulfur and Pt; the sulfur-modified carbon carrier is prepared by simply modifying the carbon carrier, so that a strong interaction is formed between the carrier and platinum, promoting the transfer of electrons from Pt to the carrier, weakening the adsorption of Pt on CO, and improving the tolerance of the catalyst to CO.

Accordingly, the present invention provides an anode reaction process of a fuel cell, the process comprising: under anode reaction conditions, contacting H₂ in a raw gas with the sulfur-containing platinum-carbon catalyst of the present invention; wherein the CO content in the raw gas is 1500 ppm or less, preferably 1200 ppm or less, and preferably 1000 ppm or less.

Preferably, the sulfur-containing platinum-carbon catalyst of the present invention is used as an anode catalyst in a fuel cell.

Preferably, the fuel cell is a hydrogen fuel cell.

Preferably, the anode reaction conditions include: the voltage is 0V or above, preferably 0-0.4V.

Accordingly, the present invention also provides a process for electrolyzing water, which comprises: contacting water with the sulfur-containing platinum-carbon catalyst of the present invention under conditions of electrolyzing water; wherein at least part of the contact is carried out in the presence of CO.

Preferably, the conditions for electrolyzing water include: a voltage of -0.4V or above, preferably -0.4 to 1.0V.

Through the above technical solutions, compared with the prior art, the sulfur-containing platinum-carbon catalyst of the present invention has the following advantages: first, the preparation process is simple and easy to be scaled up industrially, and the resistance of catalyst to CO toxicity can be improved only by carrier modification. In the in-situ infrared characterization of CO, it is shown that the catalyst has no obvious CO chemical adsorption; second, the Pt particles of the catalyst obtained by the process are uniformly dispersed, and there is an obvious interaction between Pt and the carrier, which not only helps to improve the resistance of catalyst to poisoning, but also shifts the XPS spectrum peak of Pt to high electron volts, and can also improve the catalyst activity and stability.

### Solution (VI): Use of sulfur-containing platinum-carbon catalysts in the resistance to H₂S toxicity

The sulfur-containing platinum-carbon catalyst of the present invention can be used to improve the resistance of platinum-carbon catalyst to H₂S toxicity. The sulfur-containing platinum-carbon catalyst of the present invention utilizes the strong interaction between sulfur and Pt, and the sulfur-modified carbon carrier is prepared by simply modifying the carbon carrier, so that a strong interaction is formed between the carrier and platinum, promoting the transfer of electrons from Pt to the carrier, weakening the adsorption of H₂S on Pt, and improving the tolerance of the catalyst to H₂S.

Accordingly, the present invention provides an anode reaction process of a fuel cell, comprising: contacting H₂ in a raw gas with the sulfur-containing platinum-carbon catalyst of the present invention under anode reaction conditions; wherein the H₂S content in the raw gas is 15 ppm or less, preferably 10 ppm or less, preferably 5 ppm or less.

Preferably, the sulfur-containing platinum-carbon catalyst of the present invention is used as an anode catalyst in a fuel cell.

Preferably, the fuel cell is a hydrogen fuel cell.

Preferably, the anode reaction conditions include: the voltage is 0V or above, preferably 0.01-0.4V.

Through the above technical solutions, compared with the prior art, the sulfur-containing platinum-carbon catalyst of the present invention has the following advantages: first, the preparation process is simple and easy to be scaled up industrially, and the resistance of catalyst to H₂S toxicity can be improved only by carrier modification; second, the Pt particles of the catalyst obtained by the process are uniformly dispersed, and there is an obvious interaction between Pt and the carrier, which is helpful to improve the resistance of catalyst to poisoning, and shift the XPS spectrum peak of Pt to high electron volts, which can also improve the catalyst activity and stability.

As examples, the present invention provides the following exemplary embodiments, or combinations thereof:
The first series of exemplary embodiments of the present invention include:
1. A sulfur-modified carbon material, characterized in that the sulfur-modified carbon material comprises conductive carbon black and sulfur element compounded therein, the total sulfur content in the sulfur-modified carbon material is greater than or equal to the surface sulfur content, preferably the total sulfur content in the sulfur-modified carbon material is equal to or more than 1.2 times, more preferably equal to or more than 1.5 times the surface sulfur content.
2. The sulfur-modified carbon material according to exemplary embodiment 1, wherein the total sulfur content in the sulfur-modified carbon material is 0.1-10% by mass, preferably 1-8% by mass, and more preferably 1-4% by mass;
   preferably, the surface sulfur content in the sulfur-modified carbon material is 0.1-6% by mass, preferably 0.5-3% by mass;
   preferably, the oxygen content in the sulfur-modified carbon material is 4-15% by mass.
3. The sulfur-modified carbon material according to exemplary embodiment 1 or 2, wherein the specific surface area of the sulfur-modified carbon material is 200-2000 m²/g;
   preferably, the resistivity of the sulfur-modified carbon material is less than 10.0 Ω·m.
4. The sulfur-modified carbon material according to any one of the exemplary embodiments 1 to 3, wherein the conductive carbon black is one or more of EC-300J, EC-600JD, ECP600JD, VXC72, VXC72R, Black pearls 2000, PRINTEX XE2-B, PRINTEX L6 and HIBLAXK 40B2.
5. A platinum-carbon catalyst, characterized in that the platinum-carbon catalyst comprises a sulfur-modified carbon material and a platinum metal loaded thereon;
   wherein, the sulfur-modified carbon material is the sulfur-modified carbon material according to any one of exemplary embodiments 1-4.
6. The platinum-carbon catalyst according to exemplary embodiment 5, wherein the mass fraction of platinum is 0.1-70% by mass based on the total mass of the platinum-carbon catalyst;
   preferably, the platinum particles having regular lattice fringes in the platinum-carbon catalyst do not exceed 60%.
7. Use of the sulfur-modified carbon material according to any one of exemplary embodiments 1 to 4 or the platinum-carbon catalyst according to exemplary embodiment 5 or 6 as an electrode material.
8. A fuel cell, characterized in that the sulfur-modified carbon material according to any one of exemplary embodiments 1 to 4 or the platinum-carbon catalyst according to exemplary embodiment 5 or 6 is used in the fuel cell;
   preferably, the fuel cell is a hydrogen fuel cell.
9. A PEM electrolytic bath, characterized in that the sulfur-modified carbon material according to any one of exemplary embodiments 1 to 4 or the platinum-carbon catalyst according to exemplary embodiment 5 or 6 is used in the cathode of the PEM electrolytic bath.

### The second series of exemplary embodiments of the present invention include:

1. A platinum-carbon catalyst, characterized in that the platinum-carbon catalyst comprises sulfur-containing conductive carbon black and a platinum metal loaded thereon,
   wherein the total sulfur content in the sulfur-containing conductive carbon black is greater than or equal to the surface sulfur content, preferably the total sulfur content is equal to or more than 1.2 times, more preferably equal to or more than 1.5 times the surface sulfur content;
   based on the total mass of the catalyst, the mass fraction of platinum is 20-70%.
2. The platinum-carbon catalyst according to exemplary embodiment 1, wherein the platinum metal particles having regular lattice fringes in the platinum-carbon catalyst do not exceed 60%;
   preferably, at least 90% of the platinum metal particles are loaded inside the sulfur-containing conductive carbon black;
   preferably, based on the total mass of the catalyst, the mass fraction of platinum is 20-60%, more preferably 20-40%.
3. The platinum-carbon catalyst according to exemplary embodiment 1 or 2, wherein the total sulfur content in the sulfur-containing conductive carbon black is 0.4-8% by mass, preferably 1-6% by mass;
   preferably, the surface sulfur content of the sulfur-containing conductive carbon black is 0.1-6% by mass, preferably 0.5-4% by mass.
4. The platinum-carbon catalyst according to any one of the exemplary embodiments 1-3, wherein the Pt 4f 7/2 characteristic peak of the platinum-carbon catalyst in the XPS spectrum is located at 71.6 eV or above.
5. The platinum-carbon catalyst according to any one of the exemplary embodiments 1 to 4, wherein the conductive carbon black in the sulfur-containing conductive carbon black is one or more of EC-300J, EC-600JD, ECP600JD, VXC72, VXC72R, Black pearls 2000, PRINTEX XE2-B, PRINTEX L6 and HIBLAXK 40B2.
6. A platinum-carbon catalyst, characterized in that the platinum-carbon catalyst comprises sulfur-containing conductive carbon black and a platinum metal loaded thereon,
   wherein the total sulfur content in the platinum-carbon catalyst is greater than or equal to the surface sulfur content, preferably the total sulfur content is equal to or more than 1.2 times, more preferably equal to or more than 1.5 times the surface sulfur content;
   based on the total mass of the catalyst, the mass fraction of platinum is 20-70%.
7. A process for preparing a platinum-carbon catalyst, characterized in that the process comprises:
   (1) impregnating the conductive carbon black with a solution containing sulfur at 10-80 °C for 1-5 hours, and drying the impregnated product to obtain sulfur-containing conductive carbon black;
   (2) removing a solvent from the homogeneous mixture containing the sulfur-containing conductive carbon black obtained in step (1), the platinum source and the solvent to obtain a precursor material;
   (3) in a reducing atmosphere, heat-treating the precursor material obtained in step (2) at 80-200°C for 1-4 hours to obtain a platinum-carbon catalyst;
   wherein, in step (2), relative to 1g of the sulfur-containing conductive carbon black, the amount of the platinum source used is 0.25-2.4g in terms of platinum element.
8. The preparation process according to the exemplary embodiment 7, wherein in step (1), the conductive carbon black is one or more of EC-300J, EC-600JD, ECP600JD, VXC72, VXC72R, Black pearls 2000, PRINTEX XE2-B, PRINTEX L6 and HIBLAXK 40B2;
   preferably, the XPS analysis of the conductive carbon black shows that the oxygen content is greater than 4% by mass;
   preferably, the resistivity of the conductive carbon black is less than 10Ω·m;
   preferably, the specific surface area of the conductive carbon black is 200-2000 m²/g.
9. The preparation process according to exemplary embodiment 7 or 8, wherein in step (1), the solvent in the solution containing sulfur is one or more of CCl₄, CS₂, cyclohexane, and n-hexane;
   preferably, relative to 1 g of the conductive carbon black, the amount of sulfur used is 0.005-0.06 g;
   preferably, the drying conditions include: a temperature of 20-100 °C and a time of 5-10 h.
10. The preparation process according to any one of the exemplary embodiments 7-9, wherein in step (2), the platinum source is one or more of chloroplatinic acid, chloroplatinate, tetraammineplatinum acetate and platinum acetylacetonate.
11. The preparation process according to any one of the exemplary embodiments 7-10, wherein in step (2), the solvent is one or more of water, alcohol solvents or ketone solvents;
   preferably, the solvent is water and/or ethanol, more preferably a mixed solvent of water and ethanol.
12. The preparation process according to any one of the exemplary embodiments 7-11, wherein in step (2), the homogeneous mixture is allowed to stand for a period of 4 hours or more, preferably 16-30 hours, then the solvent is removed.
   preferably, in step (2), the drying temperature when removing the solvent is 100°C or below.
13. The preparation process according to any one of the exemplary embodiments 7-12, wherein in step (3), the reducing atmosphere comprises hydrogen, preferably a mixed atmosphere of hydrogen and an inert gas, more preferably a mixed atmosphere of hydrogen and nitrogen; preferably, hydrogen accounts for 5-30% by volume of the total gas.
14. A platinum-carbon catalyst, characterized in that the platinum-carbon catalyst is prepared by the preparation process according to any one of the exemplary embodiments 7-13.
15. Use of the platinum-carbon catalyst described in any one of exemplary embodiments 1-6 and 14 in a fuel cell or in water electrolysis.
16. A PEM electrolytic bath, characterized in that the platinum-carbon catalyst of any one of exemplary embodiments 1-6 and 14 is used in the cathode of the PEM electrolytic bath.

The third series of exemplary embodiments of the present invention include:
1. A platinum-carbon catalyst, characterized in that the platinum-carbon catalyst comprises a sulfur-modified carbon carrier and a platinum metal loaded thereon,
   wherein, the sulfur-modified carbon carrier is sulfur-modified conductive carbon black, the total sulfur content in the sulfur-modified carbon carrier is greater than or equal to the surface sulfur content and the total sulfur content is 1-8% by mass, preferably the total sulfur content is equal to or more than 1.2 times, more preferably equal to or more than 1.5 times the surface sulfur content;
   based on the total mass of the platinum-carbon catalyst, the mass fraction of platinum is 1-20%.
2. The platinum-carbon catalyst according to exemplary embodiment 1, wherein the platinum-carbon catalyst has no Pt characteristic peak in the XRD spectrum, or the ratio of the unit mass of platinum normalized peak intensity of the Pt (111) characteristic peak to the full width at half-maximum of the Pt (111) characteristic peak is not greater than 0.8, and the ratio of the unit mass of platinum normalized peak intensity of the Pt (200) characteristic peak to the full width at half-maximum of the Pt (200) characteristic peak is not greater than 0.5;
   preferably, when the platinum content of the platinum-carbon catalyst is 10% by mass or less, the platinum-carbon catalyst does not have a Pt characteristic peak in the XRD spectrum, or the ratio of the unit mass of platinum normalized peak intensity of the Pt (111) characteristic peak to the full width at half-maximum of the Pt (111) characteristic peak is not greater than 0.6 and the ratio of the unit mass of platinum normalized peak intensity of the Pt (200) characteristic peak to the full width at half-maximum of the Pt (200) characteristic peak is not greater than 0.4;
   preferably, based on the total mass of the platinum-carbon catalyst, the mass fraction of platinum is 5-20%, preferably 5-15%, and more preferably 7-10%.
3. The platinum-carbon catalyst according to exemplary embodiment 1, wherein the total sulfur content in the sulfur-modified carbon carrier is 3-6% by mass;
   preferably, the surface sulfur content in the sulfur-modified carbon carrier is 0.1-6% by mass, preferably 0.5-3% by mass.
4. The platinum-carbon catalyst according to any one of the exemplary embodiments 1-3, wherein the Pt 4f 7/2 characteristic peak of the platinum-carbon catalyst in the XPS spectrum is located at 71.7 eV or above.
5. The platinum-carbon catalyst according to any one of the exemplary embodiments 1 to 4, wherein the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2;
   preferably, the XPS analysis of the conductive carbon black shows that the oxygen content is greater than 4% by mass;
   preferably, the resistivity of the conductive carbon black is less than 10Ω·m;
   preferably, the conductive carbon black has a specific surface area of 200-2000 m²/g.
6. A platinum-carbon catalyst, characterized in that the platinum-carbon catalyst comprises a sulfur-modified carbon carrier and a platinum metal loaded thereon,
   wherein, the sulfur-modified carbon carrier is sulfur-modified conductive carbon black, the total sulfur content in the platinum-carbon catalyst is greater than or equal to the surface sulfur content and the total sulfur content is 1-8% by mass, preferably the total sulfur content is equal to or more than 1.2 times, more preferably equal to or more than 1.5 times the surface sulfur content;
   based on the total mass of the platinum-carbon catalyst, the mass fraction of platinum is 1-20%.
7. A process for preparing a platinum-carbon catalyst, characterized in that the process comprises:
   (1) impregnating the carbon carrier with a solution containing sulfur at 10-80 °C for 1-5h, and drying the impregnated product to obtain a sulfur-modified carbon carrier;
   (2) removing a solvent from the homogeneous mixture containing the sulfur-modified carbon carrier obtained in step (1), the platinum source and the solvent to obtain a precursor material;
   (3) in a reducing atmosphere, heat-treating the precursor material obtained in step (2) at 80-200 °C for 1-4 h to obtain a platinum-carbon catalyst;
      wherein, in step (1), the carbon carrier is conductive carbon black;
      in step (2), the amount of the platinum source used is 0.01-0.25 g in terms of platinum element, relative to 1 g of the sulfur-modified carbon carrier.
8. The preparation process according to the exemplary embodiment 7, wherein in step (1), the conductive carbon black is one or more of EC-300J, EC-600JD, ECP600JD, VXC72, VXC72R, Black pearls 2000, PRINTEX XE2-B, PRINTEX L6 and HIBLAXK 40B2;
   preferably, the XPS analysis of the conductive carbon black shows that the oxygen content is greater than 4% by mass;
   preferably, the resistivity of the conductive carbon black is less than 10Ω·m;
   preferably, the conductive carbon black has a specific surface area of 200-2000 m²/g.
9. The preparation process according to exemplary embodiment 7 or 8, wherein in step (1), the solvent in the solution containing sulfur is one or more of CCl₄, CS₂, cyclohexane, and n-hexane;
   preferably, the concentration of sulfur in the sulfur-containing solution is 0.0004-0.02 g/mL;
   preferably, relative to 1 g of the carbon carrier, the amount of sulfur used is 0.005-0.06 g;
   preferably, the drying conditions include: temperature of 20-100 °C and time of 5-10 h.
10. The preparation process according to any one of the exemplary embodiments 7-9, wherein in step (2), the platinum source is one or more of chloroplatinic acid, chloroplatinate, tetraammineplatinum acetate and platinum acetylacetonate.
11. The preparation process according to any one of the exemplary embodiments 7-10, wherein in step (2), the solvent is one or more of water, an alcohol solvent or a ketone solvent;
   preferably, the solvent is water and/or ethanol, more preferably a mixed solvent of water and ethanol.
12. The preparation process according to any one of the exemplary embodiments 7-11, wherein in step (2), the homogeneous mixture is allowed to stand for a period of 10 hours or more, preferably 15-24 hours, before the solvent is removed.
   preferably, in step (2), the drying temperature when removing the solvent is 100 °C or below.
13. The preparation process according to any one of the exemplary embodiments 7-12, wherein in step (3), the reducing atmosphere comprises hydrogen, preferably a mixed atmosphere of hydrogen and an inert gas, more preferably a mixed atmosphere of hydrogen and nitrogen; preferably, hydrogen accounts for 5-30% by volume of the total gas.
14. A platinum-carbon catalyst, characterized in that the platinum-carbon catalyst is prepared by the preparation process according to any one of the exemplary embodiments 7-13.
15. Use of the platinum-carbon catalyst according to any one of exemplary embodiments 1-6 and 14 in a fuel cell or water electrolysis.
16. A PEM electrolytic bath, characterized in that the platinum-carbon catalyst according to any one of the exemplary embodiments 1-6 and 14 is used in the cathode of the PEM electrolytic bath.

### The fourth series of exemplary embodiments of the present invention include:

1. Use of a sulfur-containing platinum-carbon catalyst in improving the resistance of a platinum-carbon catalyst to SOₓ toxicity, characterized in that the sulfur-containing platinum-carbon catalyst comprises a sulfur-modified carbon carrier and a platinum metal loaded thereon, the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst.
2. The use according to exemplary embodiment 1, wherein the mass fraction of platinum is 20-60%, preferably 40-60%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
3. The use according to exemplary embodiment 1 or 2, wherein the sulfur-modified carbon carrier is sulfur-modified conductive carbon black;
   preferably, the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2.
4. A cathode reaction process of a fuel cell, characterized in that the process comprises: under cathode reaction conditions, contacting O₂ in a raw gas with a sulfur-containing platinum-carbon catalyst;
   wherein, the content of SOₓ in the raw gas is 120 ppm or less;
   the sulfur-containing platinum-carbon catalyst comprises a sulfur-modified carbon carrier and a platinum metal loaded thereon, the sulfur-modified carbon carrier is sulfur-modified conductive carbon black, the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst.
5. The cathode reaction process according to exemplary embodiment 4, wherein the SOₓ content in the raw gas is 100 ppm or less, preferably 50 ppm or less;
   preferably, the cathode reaction conditions include: the voltage is 0V or above, preferably 0-1.1V.
6. The cathode reaction process according to exemplary embodiment 4 or 5, wherein the mass fraction of platinum is 20-60%, preferably 40-60%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
7. The cathode reaction process according to any one of the exemplary embodiments 4 to 6, wherein the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2.
8. Use of a sulfur-containing platinum-carbon catalyst in a fuel cell, characterized in that the sulfur-containing platinum-carbon catalyst comprises a sulfur-modified carbon carrier and a platinum metal loaded thereon, the sulfur-modified carbon carrier is a sulfur-modified conductive carbon black, the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst;
   wherein the SOₓ content in the raw gas of the fuel cell is 120 ppm or less.
9. The use according to exemplary embodiment 8, wherein the SOₓ content in the raw gas is 100 ppm or less, preferably 50 ppm or less;
   preferably, the sulfur-containing platinum-carbon catalyst is used as a cathode catalyst in a fuel cell.
10. The use according to exemplary embodiment 8 or 9, wherein the mass fraction of platinum is 20-60%, preferably 40-60%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
11. Use of a sulfur-containing platinum-carbon catalyst in improving the resistance of a platinum-carbon catalyst to SOₓ toxicity, characterized in that the sulfur-containing platinum-carbon catalyst comprises a sulfur-modified carbon carrier and a platinum metal loaded thereon, the sulfur-modified carbon carrier is sulfur-modified conductive carbon black, the total sulfur content in the sulfur-containing platinum-carbon catalyst is greater than or equal to the surface sulfur content, preferably the total sulfur content is equal to or more than 1.2 times, more preferably equal to or more than 1.5 times the surface sulfur content, and the mass fraction of platinum is 20-70% by mass based on the total mass of the catalyst.

### The fifth series of exemplary embodiments of the present invention include:

1. Use of a sulfur-containing platinum-carbon catalyst in improving the resistance of platinum-carbon catalyst to CO toxicity, characterized in that the sulfur-containing platinum-carbon catalyst comprises a sulfur-modified carbon carrier and a platinum metal loaded thereon, the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst.
2. The use according to exemplary embodiment 1, wherein the mass fraction of platinum is 20-60%, more preferably 20-40%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
3. The use according to exemplary embodiment 1 or 2, wherein the sulfur-modified carbon carrier is sulfur-modified conductive carbon black;
   preferably, the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2.
4. An anode reaction process of a hydrogen fuel cell, characterized in that the process comprises: contacting H₂ in a raw gas with a sulfur-containing platinum-carbon catalyst under anode reaction conditions;
   wherein, the content of CO in the raw gas is less than 1500ppm;
   the sulfur-containing platinum-carbon catalyst includes a sulfur-modified carbon carrier and a platinum metal loaded thereon, wherein the sulfur-modified carbon carrier is sulfur-modified conductive carbon black, and the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70%, based on the total mass of the catalyst.
5. The anode reaction process according to exemplary embodiment 4, wherein the content of CO in the raw gas is 1200 ppm or less, preferably 1000 ppm or less;
   preferably, the anode reaction conditions include: the voltage is 0V or above, preferably 0-0.4V.
6. The anode reaction process according to example embodiment 4 or 5, wherein the mass fraction of platinum is 20-60%, more preferably 20-40%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
7. The anode reaction process according to any one of the exemplary embodiments 4 to 6, wherein the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2.
8. Use of sulfur-containing platinum-carbon catalyst in fuel cell, characterized in that:
   the sulfur-containing platinum-carbon catalyst comprises a sulfur-modified carbon carrier and a platinum metal loaded thereon, wherein the sulfur-modified carbon carrier is sulfur-modified conductive carbon black, the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst;
   wherein, the CO content in the raw gas of the fuel cell is 1500 ppm or less.
9. The use according to example embodiment 8, wherein the content of CO in the raw gas is 1200 ppm or less, preferably 1000 ppm or less;
   preferably, the fuel cell is a hydrogen fuel cell;
   preferably, the sulfur-containing platinum-carbon catalyst is used as an anode catalyst in the fuel cell.
10. The use according to exemplary embodiment 8 or 9, wherein the mass fraction of platinum is 20-60%, more preferably 20-40%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
11. A process for electrolyzing water, characterized in that the process comprises: contacting water with a sulfur-containing platinum-carbon catalyst under conditions of electrolyzing water;
   wherein at least part of said contacting is performed in the presence of CO;
   the sulfur-containing platinum-carbon catalyst includes a sulfur-modified carbon carrier and a platinum metal loaded thereon, wherein the sulfur-modified carbon carrier is sulfur-modified conductive carbon black, and the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70%, based on the total mass of the catalyst.
12. The process according to example embodiment 11, wherein the conditions for electrolyzing water include: a voltage of -0.4 V or more, preferably -0.4 to 1.0 V;
   preferably, the process for electrolyzing water is proton exchange membrane electrolysis of water.
13. The process according to example embodiment 11 or 12, wherein the mass fraction of platinum is 20-60%, more preferably 20-40%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
14. Use of a sulfur-containing platinum-carbon catalyst in improving the resistance of platinum-carbon catalyst to CO toxicity, characterized in that the sulfur-containing platinum-carbon catalyst comprises a sulfur-modified carbon carrier and a platinum metal loaded thereon, the sulfur-modified carbon carrier is sulfur-modified conductive carbon black, the total sulfur content in the sulfur-containing platinum-carbon catalyst is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst.

### The sixth series of exemplary embodiments of the present invention include:

1. Use of a sulfur-containing platinum-carbon catalyst in improving the resistance of platinum-carbon catalyst to H₂S toxicity, characterized in that the sulfur-containing platinum-carbon catalyst comprises a sulfur-modified carbon carrier and a platinum metal loaded thereon, the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst.
2. The use according to exemplary embodiment 1, wherein the mass fraction of platinum is 20-60%, more preferably 40-60%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
3. The use according to exemplary embodiment 1 or 2, wherein the sulfur-modified carbon carrier is sulfur-modified conductive carbon black;
   preferably, the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2.
4. An anode reaction process of a hydrogen fuel cell, characterized in that the process comprises: under anode reaction conditions, contacting H₂ in a raw gas with a sulfur-containing platinum-carbon catalyst;
   wherein, the content of H₂S in the raw gas is 15 ppm or less;
   the sulfur-containing platinum-carbon catalyst includes a sulfur-modified carbon carrier and a platinum metal loaded thereon, wherein the sulfur-modified carbon carrier is sulfur-modified conductive carbon black, and the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70%, based on the total mass of the catalyst.
5. The anode reaction process according to exemplary embodiment 4, wherein the content of H₂S in the raw gas is 10 ppm or less, preferably 5 ppm or less;
   preferably, the anode reaction conditions include: the voltage is 0V or above, preferably 0.01-0.4V.
6. The anode reaction process according to example embodiment 4 or 5, wherein the mass fraction of platinum is 20-60%, more preferably 40-60%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
7. The anode reaction process according to any one of the exemplary embodiments 4 to 6, wherein the conductive carbon black in the sulfur-modified conductive carbon black is one or more of EC-300J, EC-600JD, ECP600JD, VXC72, VXC72R, Black pearls 2000, PRINTEX XE2-B, PRINTEX L6 and HIBLAXK 40B2.
8. Use of sulfur-containing platinum-carbon catalyst in fuel cell, characterized in that:
   the sulfur-containing platinum-carbon catalyst comprises a sulfur-modified carbon carrier and a platinum metal loaded thereon, wherein the sulfur-modified carbon carrier is sulfur-modified conductive carbon black, the total sulfur content in the sulfur-modified carbon carrier is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst;
   wherein the H₂S content in the raw gas of the fuel cell is 15 ppm or less.
9. The use according to exemplary embodiment 8, wherein the H₂S content in the raw gas is 10 ppm or less, preferably 0.4-10 ppm;
   preferably, the fuel cell is a hydrogen fuel cell;
   preferably, the sulfur-containing platinum-carbon catalyst is used as an anode catalyst in the fuel cell.
10. The use according to exemplary embodiment 8 or 9, wherein the mass fraction of platinum is 20-60%, more preferably 40-60%, based on the total mass of the catalyst;
   preferably, the total sulfur content in the sulfur-modified carbon carrier is 0.4-8% by mass, preferably 1-6% by mass;
   preferably, the surface sulfur content in the sulfur-modified carbon carrier is 0.1-6% by mass, preferably 0.5-4% by mass.
11. Use of a sulfur-containing platinum-carbon catalyst in improving the resistance of platinum-carbon catalyst to H₂S toxicity, characterized in that the sulfur-containing platinum-carbon catalyst comprises a sulfur-modified carbon carrier and a platinum metal loaded thereon, the sulfur-modified carbon carrier is sulfur-modified conductive carbon black, the total sulfur content in the sulfur-containing platinum-carbon catalyst is greater than or equal to the surface sulfur content, preferably the total sulfur content is equal to or more than 1.2 times, more preferably equal to or more than 1.5 times the surface sulfur content, and the mass fraction of platinum is 20-70% based on the total mass of the catalyst.

### BRIEF DESCRIPTION OF THE DRAWINGS

### Embodiment I

Figure I.1 shows a polarization curve of the ORR reaction catalyzed by the sulfur-containing platinum-carbon catalysts prepared by the sulfur-modified carbon materials of Example 1.1 and Comparative Example I.2 and catalyzed by the commercial platinum-carbon catalyst of Comparative Example I.1;
Figure I.2 shows a polarization curve before and after the stability of the HER reaction catalyzed by the sulfur-containing platinum-carbon catalyst prepared by the sulfur-modified carbon material of Example I.1;
Figure I.3 shows a polarization curve before and after the stability of the HER reaction catalyzed by the commercial platinum-carbon catalyst of Comparative Example I.1;
Figure I.4 shows a STEM photograph of a platinum-carbon catalyst prepared using the carbon material having no compounded elements of Comparative Example I.2;
Figure I.5 shows the bond length information of the sample of test example I.5;
Figure I.6 shows the valence information of the samples of Test Example I.5.

### Embodiment II

Figure II. 1 shows a XPS spectrum of the sulfur-containing platinum-carbon catalysts of Example II.2 and Comparative Example II.3;
Figure II.2 shows a STEM photo of the sulfur-containing platinum-carbon catalyst of Example II.2;
Figure II.3 shows a STEM photo of the sulfur-containing platinum-carbon catalyst of Example II.3;
Figure II.4 shows a TEM photo of the sulfur-containing platinum-carbon catalyst of Comparative Example II.1;
Figure II.5 shows a TEM photo of the sulfur-containing platinum-carbon catalyst of Comparative Example II.2;
Figure II.6 shows a STEM photo of the sulfur-containing platinum-carbon catalyst of Comparative Example II.4;
FIG. II.7 shows a STEM photo showing platinum particles with regular lattice fringes;
Figure II.8 shows a TEM photo of the sulfur-containing platinum-carbon catalyst of Example II.2;
Figure II.9 shows a TEM photograph of the sulfur-containing platinum-carbon catalyst of Comparative Example II.4.

### Embodiment III

Figure III.1 shows a XRD spectrum of the sulfur-containing platinum-carbon catalysts of Examples III.1, 3-5 and Comparative Examples III.1-2;
Figure III.2 shows a XPS spectrum of the sulfur-containing platinum-carbon catalysts of Example III.1 and Comparative Examples III.1-3;
Figure III.3 shows LSV curves of the sulfur-containing platinum-carbon catalysts of Example III.1 and Comparative Examples III.1-3.

### Embodiment IV

FIG. IV.1 shows LSV curves of ORR of the platinum-carbon catalysts of Example 1 and Comparative Example 2 before and after SOₓ poisoning treatment.

### Embodiment V

Figure V. 1 shows an XPS spectrum of the platinum-carbon catalyst of Example V. 1 and Comparative Example V.1;
Figure V.2 shows LSV curves of HER of the platinum-carbon catalysts of Example V.1 and Comparative Example V.1 before and after CO poisoning treatment;
Figure V.3 shows LSV curves of HOR of the platinum-carbon catalysts of Example V.1 and Comparative Example V.2 before and after CO poisoning treatment;
Figure V.4 shows CO in-situ infrared curve of the platinum-carbon catalyst of Example V.1 and Comparative Example V. 1;
Figure V.5 shows LSV curves of HOR of the platinum-carbon catalysts of Example V.2 and Comparative Example V.4 before and after CO poisoning treatment.

### Embodiment VI

Figure VI. 1 shows LSV curves of the platinum-carbon catalyst of Example VI.2 before and after being poisoned by H₂S;
Figure VI.2 shows CV curves of the platinum-carbon catalyst of Example VI.2 before and after being poisoned by H₂S;
Figure VI.3 shows LSV curves of the platinum-carbon catalysts of Example VI. 1 and Comparative Example VI. 1 before and after being poisoned by H₂S;
Figure VI.4 shows CV curves of the platinum-carbon catalysts of Example VI. 1 and Comparative Example VI. 1 before and after being poisoned by H₂S.

### Detailed Description of the Invention

The present invention is described in detail below in conjunction with specific embodiments, but it should be noted that the protection scope of the present invention is not limited by these specific embodiments and principle explanations, but is determined by the exemplary embodiments.

The endpoints and any values of the ranges disclosed herein are not limited to the precise ranges or values, and these ranges or values should be understood to include values close to these ranges or values. For numerical ranges, the endpoint values of each range, the endpoint values and the individual point values of each range, and the individual point values of each range can be combined with each other to obtain one or more new numerical ranges, which should be considered as specifically disclosed herein.

In the present invention, except for the contents explicitly described, any matters or items not mentioned are directly applicable to those known in the art without any change. Moreover, any embodiment described herein can be freely combined with one or more other embodiments described herein, and the technical solutions or technical ideas formed thereby are regarded as part of the original disclosure or record of the present invention, and should not be regarded as new contents not disclosed or anticipated herein, unless a person skilled in the art considers that the combination is obviously unreasonable.

All features disclosed in the present invention may be combined arbitrarily, and these combinations shall be understood as the contents disclosed or recorded in the present invention, unless a person skilled in the art considers that the combination is obviously unreasonable, and shall be deemed to be specifically disclosed and recorded in the present invention. The numerical points disclosed in this specification include not only the numerical points specifically disclosed in the examples, but also the endpoints of each numerical range in the specification, and the range formed by any combination of these numerical points shall be deemed to be the range disclosed or recorded in the present invention.

The numerical range defined in the present invention includes the endpoints of the numerical range. "Range" disclosed herein is given in the form of a lower limit and an upper limit, for example, one or more lower limits and one or more upper limits. A given range can be defined by selecting a lower limit and an upper limit, and the selected lower limit and upper limit define the boundary of a given range. All ranges defined in this way are inclusive and combinable, i.e., any lower limit can be combined with any upper limit to form a range. For example, ranges of 60-110 and 80-120 are listed for a particular parameter, and it is understood that the ranges of 60-120 and 80-110 are also expected. In addition, if the lower limit listed is 1 and 2 and the upper limit listed is 3, 4 and 5, then the following ranges are all expected: 1-3, 1-4, 1-5, 2-3, 2-4 and 2-5.

In the present invention, unless otherwise specified, the terms "include", "comprise", "contain", "have" and similar expressions represent open-ended, but should also be understood to explicitly disclose closed-ended situations at the same time. For example, "include" means that other elements not listed may also be included, but the situation of only including the listed elements is also explicitly disclosed at the same time. In addition, as used herein, "include/comprise" is interpreted as explicitly stating the presence of the mentioned features, integers, steps or components, but does not exclude the presence or addition of one or more other features, integers, steps, components or groups thereof. In addition, the term "comprise/contain" is intended to include embodiments covered by the terms "essentially consists of" and "consists of". Similarly, the term "essentially consisting of" is intended to include embodiments covered by the term "consists of".

In the present invention, "charcoal black" and "carbon black" are interchangeable technical terms.

The "inert gas" in the present invention refers to a gas that does not cause any appreciable effect on the performance of the sulfur-containing conductive carbon black/sulfur-modified carbon material in the preparation process of the present invention.

In the present invention, "surface sulfur content" refers to the sulfur weight fraction measured by XPS analysis for the test object. Those skilled in the art will understand that according to the principle and test process of XPS analysis, it can be used to characterize the sulfur concentration on the surface of the test object, which is based on the total weight of the surface layer of the test object.

In the present invention, "total sulfur content" refers to the sulfur weight fraction measured by a sulfur-carbon analyzer for a test object. Those skilled in the art will appreciate that, according to the principle and test process of the sulfur-carbon analyzer, it can be used to characterize the sulfur concentration of the entire test, which is based on the total weight of the test object.

For the sense of the present invention, the sulfur-modified carbon material can generally be used as a carrier for the preparation of catalysts, etc.; therefore, unless otherwise specified, the terms "sulfur-modified carbon material" and "sulfur-modified carbon carrier" in the present invention can be used interchangeably. In addition, for the object of the present invention, the sulfur-modified carbon material of the present invention can be used as the sulfur-containing conductive carbon black; therefore, unless otherwise specified, the terms "sulfur-modified carbon material" and "sulfur-containing conductive carbon black" in the present invention can be used interchangeably. Accordingly, the "sulfur-containing conductive carbon black" can also be referred to as "sulfur-modified conductive carbon black".

According to the technical solution of the present invention, the platinum-carbon catalyst provided by the present invention can be prepared using the sulfur-modified carbon material as a carrier. Accordingly, the platinum-carbon catalyst provided by the present invention is sulfur-containing, and is therefore referred to as a sulfur-containing platinum-carbon catalyst, which is in contrast to the prior art platinum-carbon catalyst that does not contain sulfur. Thus, when describing the technical solution of the present invention, sometimes the term "sulfur-containing platinum-carbon catalyst" and the term "platinum-carbon catalyst" are used interchangeably, unless those skilled in the art can clearly judge that they have different specific meanings, such as when the term "platinum-carbon catalyst" is specifically used to describe the prior art and/or the sulfur-free platinum-carbon catalyst as a comparison.

In the present invention, unless otherwise specified, all solutions, embodiments, series, exemplary embodiments and preferred embodiments mentioned herein and their respective features can be combined with each other to form new technical solutions. In particular, for example, for embodiments I-VI covered by the present invention, the technical features and technical solutions mentioned therein can be combined internally and with each other, unless such a combination is contrary to the object of the present invention; for another example, for the exemplary embodiments of the first to sixth series covered by the present invention, the technical features and technical solutions mentioned therein can be combined internally and with each other, and can also be combined with embodiments I-VI with each other, unless such a combination is contrary to the object of the present invention.

At the same time, the numbers given to the solutions, embodiments, series, exemplary embodiments and preferred embodiments of the present invention, such as "first", "second", etc., and I-VI, etc., are only for the purpose of facilitating description, reading and understanding, and do not mean that there is a sequence or a primary and secondary relationship between them, and no sequential numbering is required. At the same time, unless otherwise specified, the references to terms, features, numbers, etc. Preferably refer to the objects within the same solution, embodiment, series, exemplary embodiment and preferred embodiment.

### Embodiment I: Sulfur-modified carbon material and its preparation process and application

Embodiment I of the present invention provides a sulfur-modified carbon material, which includes conductive carbon black and sulfur element compounded therein, and the total sulfur content in the sulfur-modified carbon material is greater than or equal to the surface sulfur content.

According to the sulfur-modified carbon material of the present invention, preferably, the total sulfur content in the sulfur-modified carbon material may be 1.2 times or more, 1.5 times or more, 1.7 times or more, 2 times or more, 3 times or more, etc., such as 1.2-10 times the surface sulfur content. Wherein, the surface sulfur content represents the sulfur weight fraction measured by XPS analysis, and the total sulfur content represents the sulfur weight fraction measured by a sulfur-carbon analyzer.

According to the present invention, on the one hand, the inventors has found that by compounding more sulfur elements inside the carbon material, it is suitable to prepare a catalyst that is more conducive to platinum loading inside the conductive carbon black and provides better electrocatalytic performance; on the other hand, the inventors has found that introducing elemental sulfur into the conductive carbon black by impregnation and drying can produce a sulfur-containing platinum-carbon catalyst with better performance.

Preferably, the sulfur element is introduced into the conductive carbon black in the form of elemental sulfur. Accordingly, in the process of preparing the sulfur-modified carbon material, the sulfur source used for impregnation is preferably elemental sulfur, so that the sulfur element is introduced into the conductive carbon black in the form of elemental sulfur. Further, after the sulfur element is introduced into the conductive carbon black in the form of elemental sulfur, the sulfur element in the sulfur-modified carbon material is preferably present in the conductive carbon black in the form of elemental sulfur or substantially in the form of elemental sulfur.

Preferably, the total sulfur content in the sulfur-modified carbon material is 0.1-10wt.%, preferably 1-8wt.%, and more preferably 1-4wt.%. Also, the surface sulfur content in the sulfur-modified carbon material is preferably 0.1-6wt.%, and more preferably 0.5-3wt.%.

According to the present invention, it is preferred that the sulfur-modified carbon material is sulfur-containing conductive carbon black, and it is also preferred that the sulfur-modified carbon material includes conductive carbon black and sulfur and oxygen elements compounded therein. The oxygen content in the sulfur-modified carbon material of the present invention is 4-15wt.%, preferably 6-10wt.%. In addition, the sulfur-modified carbon material of the present invention preferably does not contain other compounded elements than sulfur. Here, the "compounded elements" in the present invention refer to nitrogen, phosphorus, boron, sulfur, fluorine, chlorine, bromine and iodine. It is also preferred that the sulfur-modified carbon material is composed of conductive carbon black and sulfur and oxygen elements compounded therein.

As the conductive carbon black that can be used in the present invention, one or more of ordinary conductive carbon black (Conductive Blacks), super conductive carbon black (Super Conductive Blacks) or extra conductive carbon black (Extra Conductive Blacks) can be used, such as Ketjen black, Cabot conductive carbon black (Cabot, Black pearls, etc.), Oliron conductive carbon black (HIBLACK, PRINTEX, etc.), etc., specifically, it can be one or more of EC-300J, EC-600JD, ECP600JD, VXC72, VXC72R, Black pearls 2000, PRINTEX XE2-B, PRINTEX L6 and HIBLAXK 40B2.

The present invention has no limitation on the preparation process and source of the conductive carbon black, which may be Acetylene Black, Furnace Carbon Black, or the like.

Preferably, the specific surface area of the conductive carbon black may be 200-2000 m²/g, preferably 220-1500 m²/g. The specific surface area may be measured by the BET method.

Preferably, the resistivity of the conductive carbon black may be less than 10 Ω·m, preferably less than 5 Ω·m, further preferably less than 3 Ω·m, and further preferably 0.01-1 Ω·m.

Another aspect of the present invention is to provide a process for preparing a sulfur-modified carbon material, the process comprising: impregnating the conductive carbon black with a solution containing sulfur at 10-80 °C for 1-5 hours, and drying the impregnated product to obtain the sulfur-modified carbon material.

The process for preparing the sulfur-modified carbon material of the present invention can be used to prepare the sulfur-containing platinum-carbon catalyst of the present invention, wherein the conductive carbon black is the same as above and will not be described in detail here.

In the above preparation process, the solvent in the sulfur-containing solution can dissolve sulfur. Preferably, from the perspective of better preparing sulfur-modified carbon materials, for example the solvent can be one or more of CCl₄, CS₂, cyclohexane and n-hexane, also preferably cyclohexane, n-hexane, CCl₄, etc.. The concentration of sulfur in the sulfur-containing solution is 0.0004-0.02 g/mL, preferably 0.0005-0.01 g/mL. The amount of the sulfur-containing solution used can be, for example, 5-15 mL relative to 1 g of the conductive carbon black.

In order to obtain a suitable sulfur loading and sulfur distribution, the amount of sulfur used is preferably 0.005-0.06 g, and more preferably 0.01-0.055 g, relative to 1 g of the conductive carbon black. In addition, the impregnation temperature is preferably 10-40 °C, and more preferably 20-30 °C, and particularly preferably room temperature (25 °C), and the time is preferably 2-4 hours.

In addition, there is no particular limitation on the drying process, as long as the solvent in the solution containing sulfur can be removed, preferably vacuum drying is used. The drying conditions may include: a temperature of 20-100 °C and a time of 5-10 hours.

By preparing the sulfur-modified carbon material under the above conditions, the sulfur-modified carbon material with the sulfur distribution desired by the present invention can be obtained. The sulfur-modified carbon material prepared by the preparation process of the present invention can be more easily dispersed in the water phase.

Another aspect of the present invention is to provide a sulfur-containing platinum-carbon catalyst, which includes a sulfur-modified carbon material and a platinum metal loaded thereon; the sulfur-modified carbon material is the sulfur-modified carbon material according to the present invention, or the sulfur-modified carbon material obtained by the preparation process according to the present invention.

According to the present invention, the weight fraction of platinum can be 0.1-70wt.% based on the total weight of the sulfur-containing platinum-carbon catalyst. Depending on different uses, the weight fraction of platinum can be 0.1-1 wt. %, 1-4wt.%, 1-8wt.%, 4-20wt.%, 1-70wt.%, 5-60wt.%, 10-55wt.%, 20-40wt.% or 40-70wt.%. In addition, the sulfur-containing platinum-carbon catalyst of the present invention preferably does not contain other metal elements than platinum.

According to the present invention, the proportion of platinum particles with regular lattice fringes in the sulfur-containing platinum-carbon catalyst is not greater than 60wt.%, preferably is 50wt.% or less, further preferably 40wt.% or less, and further preferably 20wt.% or less, or 10wt.% or less. Wherein, the presence of lattice fringes indicates that the Pt particles exist in the form of nanocrystals, and the absence of lattice fringes indicates that the Pt particles exist in the form of atoms or atomic clusters. Specifically, the lattice fringes can be confirmed by observation under TEM or STEM (preferably AC-TEM or AC-STEM).

In the sulfur-containing platinum-carbon catalyst of the present invention, preferably, 70wt.% or more (preferably 80wt.% or more, 90wt.% or more, preferably 95% or more) of the platinum metal particles are loaded inside the carbon material. The distribution position of the platinum metal particles can be determined by the following method: in the TEM image, the relative positions of 200 metal platinum particles along the edge of the carbon carrier and the carbon material are randomly counted, and the proportion A% of the metal platinum particles protruding from the carbon material is calculated, and (100-A)% is used to represent the proportion of the platinum metal particles loaded inside the carbon material. It can be understood that in the TEM image, "protruding from the carbon material" means that the metal platinum particles are located on the surface of the carbon material, and "not protruding from the carbon material" means that the metal platinum particles are located inside the carbon material.

According to some preferred embodiments of the present invention, the sulfur-containing platinum-carbon catalyst has a Pt 4f 7/2 characteristic peak located at 71.6 eV or above, for example, at 71.6-72.2 eV in the XPS spectrum. The above XPS spectrum refers to the XPS spectrum corrected with the C1s peak located at 284.3 eV. Under normal circumstances, such as when platinum is loaded on a carbon carrier having no compounded elements, the Pt 4f 7/2 characteristic peak is located near 71.3 eV, which indicates that the sulfur-containing platinum-carbon catalyst of the present invention has a Pt 4f 7/2 characteristic peak shifted to high electron volts by 0.3 eV or more in the XPS spectrum.

The sulfur-containing platinum-carbon catalyst of the present invention can be obtained by loading platinum on the sulfur-modified carbon material of the present invention. The preparation process of the sulfur-containing platinum-carbon catalyst may comprise, for example, the following steps:
(1) removing the solvent from a homogeneous mixture containing a sulfur-modified carbon material, a platinum source and a solvent to obtain a precursor material;
(2) in a reducing atmosphere, heat-treating the precursor material obtained in step (1) at 80-200 °C for 1-4 h to obtain a sulfur-containing platinum-carbon catalyst;
according to the present invention, in step (1), the platinum source may be one or more of chloroplatinic acid, chloroplatinate, tetraammineplatinum acetate and platinum acetylacetonate, wherein the chloroplatinate may be potassium chloroplatinate or sodium chloroplatinate.

Preferably, relative to 1 g of the sulfur-modified carbon material, the amount of the platinum source used is 0.01-2.4 g, preferably 0.05-1.5 g, in terms of platinum element.

According to the present invention, in step (2), the precursor material is obtained by dissolving the sulfur-modified carbon material and the platinum source in a solvent to form a homogeneous mixture, and then removing the solvent in the homogeneous mixture. There is no particular limitation on the type of the solvent. The solvent may be one or more of water, an alcohol solvents or a ketone solvents; the alcohol solvents may be, for example, ethanol, and the ketone solvents may be, for example, acetone. The solvent is also preferably water, ethanol, or a mixture of ethanol and water (the volume ratio of ethanol and water may be arbitrarily selected, for example, it may be 0.1-10:1, preferably 1-5:1). The present invention also has no particular limitation on the amount of the solvent, for example, it may be 3-20 mL relative to 1 g of the sulfur-modified carbon material.

The present invention can mix the sulfur-modified carbon material, the platinum source and the solvent to obtain the above-mentioned homogeneous mixture, preferably with stirring. The present invention has no particular limitation on the stirring rate and time, as long as the homogeneous mixture can be formed. In addition, in order to form the homogeneous mixture, the dissolution can also be accelerated further by heating.

As a process for removing the solvent in the uniform mixture, the solvent in the uniform mixture can be removed by evaporation, and the temperature and process of evaporation can adopt the existing technology known to those skilled in the art. According to the present invention, in step (1), the drying temperature when removing the solvent is 100 °C or below, for example, the solvent in the uniform mixture can be removed by drying in an oven at 60-95 °C for 12-24h.

According to a preferred embodiment of the present invention, in step (1), the homogeneous mixture is allowed to stand for a period of 4 hours or more, preferably 16-30 hours, before the solvent is removed.

According to the present invention, in step (2), the temperature of the heat treatment is preferably 100-180 °C, the time is preferably 2-3h. Moreover, the heating rate of the heat treatment can be 4-15 °C/min, generally 5 °C/min.

According to the present invention, in step (2), the heat treatment is carried out in a reducing atmosphere. The reducing atmosphere preferably includes hydrogen, preferably a mixed atmosphere of hydrogen and an inert gas, wherein the inert atmosphere may be nitrogen and/or argon, etc., specifically a mixed atmosphere of hydrogen and nitrogen. Preferably, hydrogen accounts for 5-30% by volume of the total gas. The heat treatment may be carried out in any device that provides the above-mentioned heat treatment conditions, for example, it may be carried out in a tubular furnace.

By carrying out the loading of platinum under the above conditions, a sulfur-containing platinum-carbon catalyst with platinum loading in the form desired by the present invention can be obtained.

Another aspect of the present invention is to provide the use of the above-mentioned sulfur-modified carbon material, the sulfur-modified carbon material obtained by the above-mentioned preparation process, or the above-mentioned sulfur-containing platinum-carbon catalyst as an electrode material.

The sulfur-containing platinum-carbon catalyst of the present invention is suitable as an anode catalyst in a fuel cell. There is no particular limitation on the fuel cell, and it can be, for example, a hydrogen fuel cell (such as a proton exchange membrane hydrogen fuel cell), a direct alcohol fuel cell (such as a direct alcohol fuel cell with methanol or ethanol as the anode fuel), etc.

Another aspect of the present invention is to provide a fuel cell, wherein the fuel cell uses the sulfur-modified carbon material according to the present invention, the sulfur-modified carbon material obtained by the preparation process according to the present invention, or the sulfur-containing platinum-carbon catalyst according to the present invention.

Preferably, the fuel cell is a hydrogen fuel cell.

Another aspect of the present invention is to provide a PEM electrolytic bath, wherein the cathode of the PEM electrolytic bath uses the sulfur-modified carbon material according to the present invention, the sulfur-modified carbon material obtained by the preparation process according to the present invention, or the sulfur-containing platinum-carbon catalyst according to the present invention.

The sulfur-modified carbon material and sulfur-containing platinum-carbon catalyst of the present invention can be applied to hydrogen fuel cell anode hydrogen oxidation reaction, cathode oxygen reduction reaction and PEM water electrolysis cathode hydrogen evolution reaction, and have excellent catalyst activity and stability.

### Embodiment II: Sulfur-containing platinum-carbon catalyst with high Pt content and its preparation process and application

Embodiment II of the present invention provides a sulfur-containing platinum-carbon catalyst, which includes the sulfur-containing conductive carbon black according to the present invention and a platinum metal loaded thereon, wherein the total sulfur content in the sulfur-containing conductive carbon black is greater than or equal to the surface sulfur content, preferably, the total sulfur content in the sulfur-containing conductive carbon black is equal to or more than 1.2 times, and more preferably equal to or more than 1.5 times the surface sulfur content. Based on the total weight of the catalyst, the weight fraction of platinum is 20-70wt.%.

In the present invention, sulfur-containing conductive carbon black is used as the sulfur-containing carbon carrier.

In the sulfur-containing platinum-carbon catalyst of the present invention, the sulfur element inside the carbon carrier is more conducive to platinum loading inside the carbon carrier, so that the sulfur-containing platinum-carbon catalyst has better electrocatalytic performance. Preferably, the total sulfur content in the sulfur-containing conductive carbon black is 1.7 times or more, 2 times or more, 3 times or more, etc., for example, 1.2-10 times the surface sulfur content. Wherein, the surface sulfur content represents the sulfur weight fraction measured by XPS analysis, and the total sulfur content represents the sulfur weight fraction measured by a sulfur-carbon analyzer.

According to the present invention, preferably, the total sulfur content of the sulfur-containing conductive carbon black is 0.4-8wt.%, preferably 1-6wt.%. Preferably, the surface sulfur content of the sulfur-containing conductive carbon black is 0. 1-6wt.%, preferably 0.5-4wt.%.

Preferably, the sulfur element in the sulfur-containing conductive carbon black is present in the form of elemental sulfur.

According to the present invention, preferably, at least 90wt.%, preferably 95% or more of the platinum metal particles are loaded inside the carbon carrier. The distribution position of the platinum metal particles can be determined by the following process: in the TEM image, randomly count the relative positions of 200 metal platinum particles along the edge of the carbon carrier and the carbon carrier, calculate the proportion A% of the metal platinum particles protruding from the carbon carrier, and use (100-A)% to represent the proportion of the platinum metal particles loaded inside the carbon carrier. It can be understood that in the TEM image, "protruding from the carbon carrier" means that the metal platinum particles are located on the surface of the carbon carrier, and "not protruding from the carbon carrier" means that the metal platinum particles are located inside the carbon carrier.

In the sulfur-containing platinum-carbon catalyst of the present invention, the platinum metal particles having regular lattice fringes in the sulfur-containing platinum-carbon catalyst do not exceed 60wt.%, preferably 50wt.% or less, further preferably 40wt.% or less, and further preferably 20wt.% or less or 10wt.% or less. The presence of lattice fringes indicates that the Pt particles exist in the form of nanocrystals, while the absence of lattice fringes indicates that the Pt particles exist in the form of atoms or atomic clusters. Specifically, the lattice fringes can be confirmed by observation under TEM or STEM (preferably AC-TEM or AC-STEM).

In the sulfur-containing platinum-carbon catalyst of the present invention, the sulfur-containing platinum-carbon catalyst has a Pt 4f 7/2 characteristic peak located at 71.6 eV or above in the XPS spectrum, for example, at 71.6-72.2 eV, such as 71.7 eV. The above XPS spectrum refers to the XPS spectrum corrected with the C1s peak located at 284.3 eV. Normally, for example when platinum is loaded on a carbon carrier that does not contain a compounded element, the Pt 4f 7/2 characteristic peak is located near 71.3 eV, which indicates that the sulfur-containing platinum-carbon catalyst of the present invention has a Pt 4f 7/2 characteristic peak shifted to high electron volts by 0.3 eV or more in the XPS spectrum.

In the sulfur-containing platinum-carbon catalyst of the present invention, the weight fraction of platinum is 20-70wt.%, preferably 20-60wt.%, 20-40wt.% or 40-70wt.%, based on the total weight of the catalyst. Preferably, the sulfur-containing platinum-carbon catalyst of the present invention does not contain other metal elements than platinum.

According to the present invention, preferably, the sulfur-containing conductive carbon black comprises conductive carbon black, and sulfur and oxygen elements compounded therein. Moreover, the sulfur-containing conductive carbon black of the present invention preferably does not contain other compounded elements than sulfur. Here, the "compounded elements" in the present invention refer to nitrogen, phosphorus, boron, sulfur, fluorine, chlorine, bromine and iodine. Also preferably, the sulfur-containing conductive carbon black is composed of conductive carbon black, and sulfur and oxygen elements compounded therein.

As the conductive carbon black that can be used in the present invention, one or more of ordinary conductive carbon black (Conductive Blacks), super conductive carbon black (Super Conductive Blacks) or extra conductive carbon black (Extra Conductive Blacks) can be used, such as Ketjen black, Cabot conductive carbon black (Cabot, Black pearls, etc.), Oliron conductive carbon black (HIBLACK, PRINTEX, etc.), etc., specifically, it can be one or more of EC-300J, EC-600JD, ECP600JD, VXC72, VXC72R, Black pearls 2000, PRINTEX XE2-B, PRINTEX L6 and HIBLAXK 40B2.

The present invention has no limitation on the preparation process and source of the conductive carbon black, which may be Acetylene Black, Furnace Carbon Black, or the like.

Preferably, the XPS analysis of the conductive carbon black shows that the oxygen content is greater than 4wt.%, for example, 5-12wt.%.

Preferably, the conductive carbon black has a specific surface area of 200-2000 m²/g, preferably 220-1500 m²/g.

This embodiment II also provides a sulfur-containing platinum-carbon catalyst, which includes sulfur-containing conductive carbon black and a platinum metal loaded thereon, wherein the total sulfur content in the sulfur-containing platinum-carbon catalyst is greater than or equal to the surface sulfur content, preferably the total sulfur content is equal to or more than 1.2 times, and more preferably equal to or more than 1.5 times the surface sulfur content, and the weight fraction of platinum is 20-70wt.% based on the total weight of the catalyst.

This embodiment II also provides a preparation process of a sulfur-containing platinum-carbon catalyst, the process comprising:
(1) impregnating a carbon carrier (conductive carbon black) with a solution containing sulfur at 10-80 °C for 1-5 hours, and drying the impregnated product to obtain a sulfur-containing carbon carrier (also referred to as sulfur-containing conductive carbon black);
(2) removing a solvent from the homogeneous mixture of the sulfur-containing carbon carrier, the platinum source and the solvent obtained in step (1) to obtain a precursor material;
(3) In a reducing atmosphere, heat-treating the precursor material obtained in step (2) at 80-200 °C for 1-4 h to obtain a sulfur-containing platinum-carbon catalyst;
wherein, in step (2), the amount of the platinum source used is 0.25-2.4 g in terms of platinum element relative to 1 g of the sulfur-containing conductive carbon black.

Preferably, in step (1), the solvent in the sulfur-containing solution can dissolve sulfur. From the perspective of better preparation of the sulfur-containing carbon carrier, for example, it can be one or more of CCl₄, CS₂, cyclohexane, and n-hexane, also preferably cyclohexane and n-hexane. The concentration of sulfur in the sulfur-containing solution is 0.0004-0.02 g/mL, preferably 0.0005-0.01 g/mL. The amount of the sulfur-containing solution used is 5-15 mL relative to 1 g of the carbon carrier.

In order to obtain a suitable sulfur loading amount and sulfur distribution, the amount of sulfur used is preferably 0.005-0.06 g, and more preferably 0.01-0.055 g, relative to 1 g of the carbon carrier. In addition, the impregnation temperature is preferably 10-40 °C, and more preferably 20-30 °C, and particularly preferably at room temperature (25 °C), and the time is preferably 2-4 hours.

The drying process is not particularly limited as long as the solvent in the sulfur-containing solution can be removed, and vacuum drying is preferably used.

By preparing the sulfur-containing carbon carrier under the above conditions, a carbon carrier with a sulfur distribution desired by the present invention can be obtained. The sulfur-containing carbon carrier obtained by step (1) can be easily dispersed in an aqueous phase. However, a carbon carrier that has not been treated by step (1), such as Ketjen Black, is difficult to be dispersed directly in an aqueous phase and usually need addition of ethanol or the like to facilitate dispersion.

According to the present invention, in step (2), the platinum source may be one or more of chloroplatinic acid, chloroplatinate, tetraammineplatinum acetate and platinum acetylacetonate, wherein the chloroplatinate may be potassium chloroplatinate or sodium chloroplatinate.

Preferably, the amount of the platinum source used is 0.25-2.4 g, preferably 0.25-0.67 g, in terms of platinum element, relative to 1 g of the sulfur-containing carbon carrier.

According to the present invention, in step (2), the precursor material is obtained by dissolving the sulfur-containing carbon carrier and the platinum source in a solvent to form a homogeneous mixture, and then removing the solvent in the homogeneous mixture. There is no particular limitation on the type of the solvent. The solvent may be one or more of water, an alcohol solvent or a ketone solvent; the alcohol solvent may be, for example, ethanol, and the ketone solvent may be, for example, acetone. The solvent is also preferably water, ethanol, or a mixture of ethanol and water (the volume ratio of ethanol to water may be arbitrarily selected, for example, 0.1-10: 1, preferably 1-5: 1). The present invention also has no particular limitation on the amount of the solvent, for example, the amount of the solvent may be 3-20 mL relative to 1 g of the sulfur-containing carbon carrier.

The present invention can mix the sulfur-containing carbon carrier, the platinum source and the solvent to obtain the above-mentioned homogeneous mixture, preferably with stirring. The present invention has no particular limitation on the stirring rate and time, as long as the homogeneous mixture can be formed. In addition, in order to form the homogeneous mixture, the dissolution can also be accelerated by heating.

As a process for removing the solvent in the uniform mixture, evaporation can used to remove the solvent in the uniform mixture, and the temperature and process of evaporation can adopt the existing technology known to those skilled in the art. According to the present invention, in step (2), the drying temperature when removing the solvent is 100 °C or below, for example, the solvent in the uniform mixture can be removed by drying in an oven at 60-95 °C for 12-24h.

According to a preferred embodiment of the present invention, in step (2), the homogeneous mixture is allowed to stand for a period of time of 4 hours or more, preferably 16-30 hours, before the solvent is removed.

According to the present invention, in step (3), the temperature of the heat treatment is preferably 100-180 °C, and the time is preferably 2-3h. In addition, the heating rate of the heat treatment can be 4-15 °C/min, generally 5 °C/min.

According to the present invention, in step (3), the heat treatment is carried out in a reducing atmosphere. The reducing atmosphere preferably includes hydrogen, preferably a mixed atmosphere of hydrogen and an inert gas, wherein the inert atmosphere may be nitrogen and/or argon, etc., specifically a mixed atmosphere of hydrogen and nitrogen. Preferably, hydrogen accounts for 5-30% by volume of the total gas. The heat treatment may be carried out in any device that provides the above-mentioned heat treatment conditions, for example, it may be carried out in a tubular furnace.

By carrying out the loading of platinum under the above conditions, a sulfur-containing platinum-carbon catalyst with a platinum loading in the form desired by the present invention can be obtained.

In an optional embodiment, the resistivity of the conductive carbon black or sulfur-modified carbon material of the present invention is less than 10Ω·m, for example less than 5Ω·m, for example less than 3Ω·m, for example 0.01-1Ω·m.

This embodiment II provides a sulfur-containing platinum-carbon catalyst, which is prepared by the preparation process according to the present invention.

This embodiment II provides the use of the sulfur-containing platinum-carbon catalyst described above in the present invention in a fuel cell or water electrolysis.

The sulfur-containing platinum-carbon catalyst of the present invention is suitable as an anode catalyst in a fuel cell. There is no particular limitation on the fuel cell, and it can be, for example, a hydrogen fuel cell (such as a proton exchange membrane hydrogen fuel cell), a direct alcohol fuel cell (such as a direct alcohol fuel cell with methanol or ethanol as the anode fuel), etc.

This embodiment II provides a PEM electrolytic bath, and in the cathode of the PEM electrolytic bath, the sulfur-containing platinum-carbon catalyst according to the present invention is used.

The sulfur-containing platinum-carbon catalyst of the present invention can be applied to hydrogen fuel cell anode hydrogen oxidation reaction, cathode oxygen reduction reaction and PEM water electrolysis cathode hydrogen evolution reaction, and has excellent catalyst activity and stability.

### Embodiment III: Sulfur-containing platinum-carbon catalyst with low Pt content and its preparation process and application

Embodiment III of the present invention provides a sulfur-containing platinum-carbon catalyst, which comprises the sulfur-modified carbon carrier according to the present invention and the platinum metal loaded thereon, wherein the sulfur-modified carbon carrier is sulfur-modified conductive carbon black, the total sulfur content in the sulfur-modified carbon carrier is greater than or equal to the surface sulfur content and the total sulfur content is 1-8wt.%, preferably the total sulfur content is equal to or more than 1.2 times, and more preferably equal to or more than 1.5 times the surface sulfur content; based on the total weight of the sulfur-containing platinum-carbon catalyst, the weight fraction of platinum is 1-20wt.%.

In the sulfur-containing platinum-carbon catalyst of the present invention, by constructing a new carbon carrier structure modified by elemental sulfur, it is more conducive to loading platinum inside the carbon carrier, so that the sulfur-containing platinum-carbon catalyst has better electrocatalytic performance. It is also preferred that the total sulfur content in the sulfur-modified carbon carrier is 1.7 times or more, 2 times or more, 3 times or more, for example, 1.5-10 times the surface sulfur content. Wherein, the surface sulfur content represents the sulfur weight fraction measured by XPS analysis, and the total sulfur content represents the sulfur weight fraction measured by a sulfur-carbon analyzer.

Preferably, the total sulfur content in the sulfur-modified carbon carrier is 0.1-8wt.%, preferably 0.5-6wt.%. Preferably, the surface sulfur content in the sulfur-modified carbon carrier is 0.1-6wt.%, preferably 0.5-3wt.%.

As the sulfur-containing platinum-carbon catalyst of the present invention, the total sulfur content can be, for example, 1.2 times, 1.3 times, 1.4 times, 1.5 times, 1.6 times, 1.7 times, 1.8 times, 1.9 times, 2 times, 2.5 times, 3 times, 3.5 times, 4 times, 4.5 times, 5 times, 6 times, 7 times, 8 times, 9 times or 10 times the surface sulfur content. In addition, the total sulfur content can be 0.4wt.%, 0.5wt.%, 1wt.%, 1.5wt.%, 2wt.%, 3wt.%, 4wt.%, 5wt.%, 6wt.%, 7wt.% or 8wt.%; the surface sulfur content can be 0.1wt.%, 0.5wt.%, 1 wt.%, 1.5wt.%, 2wt.%, 3wt.%, 4wt.%, 5wt.% or 6wt.%, etc.

Preferably, the modifying sulfur element in the sulfur-modified carbon carrier is present in the form of elemental sulfur. By adopting the sulfur-modified carbon carrier of the present invention, platinum in the synthesized sulfur-containing platinum-carbon catalyst is loaded inside the carbon carrier in the form of atomic clusters, thereby improving the catalytic activity. Preferably, at least 70wt.%, preferably 70-80wt.% of platinum metal particles are loaded inside the carbon carrier.

The sulfur-containing platinum-carbon catalyst of the present invention, the sulfur-containing platinum-carbon catalyst does not have a Pt characteristic peak in the XRD spectrum, or the ratio of the unit weight platinum normalized peak intensity to the full width at half-maximum of the Pt (111) characteristic peak is not greater than 0.8, and the ratio of the unit weight platinum normalized peak intensity to the full width at half-maximum of the Pt (200) characteristic peak is not greater than 0.5. Preferably, when the platinum content of the sulfur-containing platinum-carbon catalyst is 10wt.% or less, the sulfur-containing platinum-carbon catalyst does not have a Pt characteristic peak in the XRD spectrum, or the ratio of the unit weight platinum normalized peak intensity to the full width at half-maximum of the Pt (111) characteristic peak is not greater than 0.6, and the ratio of the unit weight platinum normalized peak intensity to the full width at half-maximum of the Pt (200) characteristic peak is not greater than 0.4.

Specifically, " has no Pt characteristic peak in the XRD spectrum, or the ratio of the unit weight platinum normalized peak intensity to the full width at half-maximum of the Pt (111) characteristic peak is not greater than 0.8 and the ratio of the unit weight platinum normalized peak intensity to the full width at half-maximum of the Pt (200) characteristic peak is not greater than 0.5" means that at least most of the platinum in the sulfur-containing platinum-carbon catalyst of the present invention exists in an amorphous phase, but it excludes the case that there is a small amount of crystalline phase. As above, the presence of a small amount of crystalline phase does not affect the performance of the sulfur-containing platinum-carbon catalyst. Spherical aberration electron microscopy analysis shows that most of the platinum in the sulfur-containing platinum-carbon catalyst of the present invention is present in the form of atomic clusters.

The ratio of normalized peak intensity per the unit weight of platinum to the full width at half maximum represents the ratio of the normalized peak intensity (Normalization Intensity, NI) to the full width at half maximum (Full Width At Half Maxima, FWHM) and the weight content of platinum in the catalyst, i.e., normalized peak intensity/(full width at half maximum*weight content of platinum), hereinafter also represented by NI/(FWHM*m_{Pt} ). The calculation process is as follows: (1) under the working conditions of the powder X-ray diffractometer (tube voltage 40 kV, tube current 40 mA, Cu target Kα radiation), collecting the X-ray diffraction spectrum of the catalyst to be tested in the range of 2θ of 20-70°. After deducting the background signal and Kα2, the maximum value of the intensity data in the range of 2θ of 22-28° is assigned as 1, and the minimum value of the intensity data in the range of 65-70° is assigned as 0, and normalization processing is performed to obtain the normalized peak intensities of the Pt(111) characteristic peak and the Pt(200) characteristic peak of the catalyst to be tested, respectively. (2) performing peak fitting on the normalized X-ray diffraction spectrum to obtain the full width at half-maximum (°) of the Pt (111) characteristic peak and the Pt (200) characteristic peak. The above-mentioned Pt (111) characteristic peak and Pt (200) characteristic peak usually refer to the characteristic peaks at 2θ of 39.8 ± 0.2° and 46.2 ± 0.2° respectively. (3) Dividing the normalized peak intensity of the Pt (111) characteristic peak and the Pt (200) characteristic peak by the corresponding full width at half-maximum and the weight content of platinum in the catalyst to obtain the ratio of the unit weight platinum normalized peak intensity of the Pt (111) characteristic peak and the Pt (200) characteristic peak of the catalyst to the full width at half-maximum.

In the sulfur-containing platinum-carbon catalyst of the present invention, the sulfur-containing platinum-carbon catalyst has a Pt 4f 7/2 characteristic peak located at 71.7 eV or above, preferably 71.9 eV or above in the XPS spectrum. The above XPS spectrum refers to the XPS spectrum corrected with the C1s peak located at 284.3 eV. Under normal circumstances, such as when platinum is loaded on a carbon carrier having no compounded elements, the Pt 4f 7/2 characteristic peak is located near 71.4 eV, which indicates that the sulfur-containing platinum-carbon catalyst of the present invention has a Pt 4f 7/2 characteristic peak shifted to high electron volts by 0.3 eV or more, preferably 0.5 eV or more in the XPS spectrum.

In the sulfur-containing platinum-carbon catalyst of the present invention, preferably, based on the total weight of the catalyst, the weight fraction of platinum is 5-20wt.%, more preferably 5-15%, and further preferably 7-10wt.%. Preferably, the sulfur-containing platinum-carbon catalyst of the present invention does not contain other metal elements than platinum.

According to the present invention, preferably, the sulfur-modified carbon carrier comprises conductive carbon black and sulfur and oxygen elements compounded therein. Furthermore, the sulfur-modified carbon carrier of the present invention preferably does not contain other compounded elements than sulfur. Here, the "compounded elements" in the present invention refer to nitrogen, phosphorus, boron, sulfur, fluorine, chlorine, bromine and iodine. Also preferably, the sulfur-modified carbon carrier is composed of conductive carbon black and sulfur and oxygen elements compounded therein.

According to the present invention, the sulfur-modified carbon carrier may be sulfur-modified conductive carbon black.

This embodiment III also provides a preparation process of a sulfur-containing platinum-carbon catalyst, the preparation process comprising:
(1) impregnating the carbon carrier with a solution containing sulfur at 10-80 °C for 1-5h, and drying the impregnated product to obtain a sulfur-modified carbon carrier;
(2) removing a solvent from the homogeneous mixture containing the sulfur-modified carbon carrier obtained in step (1), the platinum source and the solvent to obtain a precursor material;
(3) in a reducing atmosphere, heat-treating the precursor material obtained in step (2) at 80-200 °C for 1-4 h to obtain a sulfur-containing platinum-carbon catalyst;

wherein, in step (1), the carbon carrier is conductive carbon black;
in step (2), the amount of the platinum source used is 0.01-0.25 g in terms of platinum element, relative to 1 g of the sulfur-modified carbon carrier.

Preferably, relative to 1 g of the sulfur-modified carbon carrier, the amount of the platinum source used is 0.01-0.25 g, preferably 0.05-0.18 g in terms of platinum element.

According to a preferred embodiment of the present invention, in step (2), the homogeneous mixture is allowed to stand for a period of time of 10 hours or more, preferably 12-72 hours, and more preferably 15-24 hours, before the solvent is removed.

By carrying out the loading of platinum under the above conditions, a sulfur-containing platinum-carbon catalyst with platinum loading in the form desired by the present invention can be obtained.

The features and technical solutions regarding the various components, carbon materials, catalysts, preparation process, uses, etc. not specifically mentioned in this embodiment III can be referred to other embodiments, especially embodiments I and II, as long as they do not contradict the specific disclosures of this embodiment.

### Embodiment IV: Use of sulfur-containing platinum-carbon catalyst in resisting SOₓ toxicity

Embodiment IV of the present invention provides an use of a sulfur-containing platinum-carbon catalyst in improving the resistance of a platinum-carbon catalyst to SOₓ toxicity. The sulfur-containing platinum-carbon catalyst comprises the sulfur-modified carbon carrier of the present invention and a platinum metal loaded thereon. The total sulfur content in the sulfur-modified carbon carrier is greater than or equal to the surface sulfur content; preferably, the total sulfur content is equal to or more than 1.2 times, and more preferably equal to or more than 1.5 times the surface sulfur content. Based on the total weight of the catalyst, the weight fraction of platinum is 20-70wt.%.

In other words, the sulfur-containing platinum-carbon catalyst used in this embodiment IV of the present invention may preferably be the sulfur-containing platinum-carbon catalyst described in embodiment II of the present invention.

According to the present invention, by using the above-mentioned sulfur-containing platinum-carbon catalyst of the present invention, it is possible to provide a better anti-SOₓ toxicity effect on the basis of the existing platinum-carbon catalyst, thereby achieving the effect of extending the life of the platinum-carbon catalyst. Specifically, the sulfur-containing platinum-carbon catalyst is particularly suitable as a cathode catalyst in a fuel cell.

As the source of SOₓ that causes SOₓ toxicity, the oxidant used in fuel cells at present is generally O₂ in the air, and the air contains a lot of SOₓ (such as SO₂, SO₃), the source of which is mainly automobile exhaust, especially in a busy road environment, the SOₓ concentration may reach more than 15ppm.

In the sulfur-containing platinum-carbon catalyst of the present invention, by compounding sulfur elements inside the carbon carrier, it is more conducive to platinum loading inside the carbon carrier, so that the sulfur-containing platinum-carbon catalyst has better electrocatalytic performance. Preferably, the total sulfur content in the sulfur-modified carbon carrier is greater than the surface sulfur content. Wherein, the surface sulfur content represents the sulfur weight fraction measured by XPS analysis, and the total sulfur content represents the sulfur weight fraction measured by a sulfur-carbon analyzer.

According to the present invention, preferably, the total sulfur content in the sulfur-modified carbon carrier is 0.4-8wt.%, preferably 1-6wt.%. Preferably, the surface sulfur content in the sulfur-modified carbon carrier is 0.1-6wt.%, preferably 0.5-4wt.%.

According to the present invention, preferably, at least 90wt.%, preferably equal to or more than 95% of the platinum metal particles are loaded inside the carbon carrier. The distribution position of the platinum metal particles can be determined by the following process: in the TEM image, the relative positions of 200 metal platinum particles along the edge of the carbon carrier and the carbon carrier are randomly counted, and the proportion A% of metal platinum particles protruding from the carbon carrier is calculated, and the proportion of platinum metal particles loaded inside the carbon carrier is expressed as (100-A)%. It can be understood that in the TEM image, "protruding from the carbon carrier" means that the metal platinum particles are located on the surface of the carbon carrier, and "not protruding from the carbon carrier" means that the metal platinum particles are located inside the carbon carrier.

In the sulfur-containing platinum-carbon catalyst of the present invention, the weight fraction of platinum is 20-70wt.%, preferably 20-60wt.%, and more preferably 40-60wt.%, based on the total weight of the catalyst. Preferably, the sulfur-containing platinum-carbon catalyst of the present invention does not contain other metal elements than platinum.

The preparation process of the sulfur-containing platinum-carbon catalyst of the present invention only needs to make the catalyst have the above-mentioned properties. Specifically, as the preparation process of the above-mentioned sulfur-containing platinum-carbon catalyst, for example, it can be as follows:
(1) impregnating the carbon carrier with a solution containing sulfur at 10-80 °C for 1-5h, and drying the impregnated product to obtain a sulfur-modified carbon carrier;
(2) removing a solvent from the homogeneous mixture containing the sulfur-modified carbon carrier obtained in step (1), the platinum source and the solvent to obtain a precursor material;
(3) in a reducing atmosphere, heat-treating the precursor material obtained in step (2) at 80-200 °C for 1-4 h to obtain a sulfur-containing platinum-carbon catalyst.

Preferably, in step (2), the amount of the platinum source used is 0.25-2.4 g, preferably 0.67-1.5 g in terms of platinum element, relative to 1 g of the sulfur-modified carbon carrier.

This embodiment IV also provides a cathode reaction process of a fuel cell, the process comprising: under cathode reaction conditions, contacting O₂ in a raw gas with a sulfur-containing platinum-carbon catalyst; wherein the content of SOₓ in the raw gas is 120 ppm or less; the sulfur-containing platinum-carbon catalyst comprises a sulfur-modified carbon carrier and a platinum metal loaded thereon, the sulfur-modified carbon carrier is sulfur-modified conductive carbon black, the total sulfur content in the sulfur-modified carbon carrier is greater than or equal to the surface sulfur content, preferably the total sulfur content is equal to or more than 1.2 times, and more preferably equal to or more than 1.5 times the surface sulfur content, and the weight fraction of platinum is 20-70wt.% based on the total weight of the catalyst.

As the raw gas in the present invention, an oxygen-containing gas such as pure oxygen or air can be used. Generally, air is used as the raw gas in the present invention.

By using the sulfur-containing platinum-carbon catalyst of the present invention, even if the raw gas contains SOₓ, as long as its content is below a prescribed amount, the catalyst activity can be maintained and the cathode reaction can proceed for a long time.

Preferably, the SOₓ content in the raw gas is preferably 100 ppm or less, and more preferably 50 ppm or less, for example, may be 5-50 ppm. Specifically, the SOₓ content in the raw gas may be 10, 20, 30, 40 or 50 ppm.

According to the present invention, the cathode reaction conditions are sufficient as long as the cathode reaction can be carried out. Specifically, the cathode reaction conditions include: the voltage is 0V or above, preferably 0-1.5V, and more preferably 0-1. 1V. The cathode reaction can be carried out, for example, in an acidic electrolyte solution, and various organic acids and/or inorganic acid solutions, such as perchloric acid solution or sulfuric acid solution can be used. In addition, when the cathode reaction is carried out in an electrolyte solution, the cathode reaction conditions may include: the hydrogen ion concentration in the electrolyte solution is 0.0001M or more, preferably 0.001-1.0M.

This embodiment IV also provides the use of a sulfur-containing platinum-carbon catalyst in a fuel cell, wherein the sulfur-containing platinum-carbon catalyst comprises a sulfur-modified carbon carrier and a platinum metal loaded thereon, wherein the sulfur-modified carbon carrier is a sulfur-modified conductive carbon black, and the total sulfur content in the sulfur-modified carbon carrier is greater than or equal to the surface sulfur content, preferably the total sulfur content is equal to or more than 1.2 times, and more preferably equal to or more than 1.5 times the surface sulfur content, and the weight fraction of platinum is 20-70wt.% based on the total weight of the catalyst; wherein the SOₓ content in the raw gas of the fuel cell is 120 ppm or less.

According to the present invention, the fuel cell may be, for example, a hydrogen fuel cell (e.g., a proton exchange membrane hydrogen fuel cell), a direct alcohol fuel cell (e.g., a direct alcohol fuel cell with methanol or ethanol as an anode fuel), etc. Preferably, the fuel cell is a hydrogen fuel cell. Specifically, the sulfur-containing platinum-carbon catalyst may be used as an anode catalyst and/or a cathode catalyst in a fuel cell, preferably as a cathode catalyst.

According to the present invention, the cathode reaction conditions are sufficient as long as the cathode reaction can be carried out. Specifically, the cathode reaction conditions also include: the voltage is 0V or above, preferably 0-1.5V, and more preferably 0-1. 1V. The cathode reaction can be carried out in an acidic electrolyte solution, and various organic acids and/or inorganic acid solutions, such as perchloric acid solution or sulfuric acid solution can be used. In addition, when the cathode reaction is carried out in an electrolyte solution, the cathode reaction conditions may include: the hydrogen ion concentration in the electrolyte solution is 0.01M or more, preferably 0.05-1.0M.

This embodiment IV also provides the use of a sulfur-containing platinum-carbon catalyst in improving the resistance of the platinum-carbon catalyst to SOₓ toxicity, wherein the sulfur-containing platinum-carbon catalyst comprises a sulfur-modified carbon carrier and a platinum metal loaded thereon, wherein the sulfur-modified carbon carrier is sulfur-modified conductive carbon black, and the total sulfur content in the sulfur-containing platinum-carbon catalyst is greater than or equal to the surface sulfur content, preferably the total sulfur content is equal to or more than 1.2 times, and more preferably equal to or more than 1.5 times the surface sulfur content, and the weight fraction of platinum is 20-70wt.% based on the total weight of the catalyst.

The features and technical solutions regarding the various components, carbon materials, catalysts, its preparation process and uses, etc. not specifically mentioned in this embodiment IV can be referred to other embodiments, especially embodiments I and II, as long as they do not contradict the specific disclosures of this embodiment.

### Embodiment V: use of sulfur-containing platinum-carbon catalyst in CO toxicity resistance

Embodiment V of the present invention provides a use of a sulfur-containing platinum-carbon catalyst in improving the resistance of a platinum-carbon catalyst to CO toxicity. The sulfur-containing platinum-carbon catalyst comprises the sulfur-modified carbon carrier of the present invention and a platinum metal loaded thereon. The total sulfur content in the sulfur-modified carbon carrier is greater than or equal to the surface sulfur content. Preferably, the total sulfur content is equal to or more than 1.2 times, and more preferably equal to or more than 1.5 times the surface sulfur content. Based on the total weight of the catalyst, the weight fraction of platinum is 20-70wt.%.

In other words, the sulfur-containing platinum-carbon catalyst used in embodiment V of the present invention may preferably be the sulfur-containing platinum-carbon catalyst described in embodiment II of the present invention.

According to the present invention, by using the above-mentioned sulfur-containing platinum-carbon catalyst of the present invention, a better anti-CO toxicity effect can be provided on the basis of the existing platinum-carbon catalyst, thereby achieving the effect of extending the life of the platinum-carbon catalyst. Specifically, the sulfur-containing platinum-carbon catalyst can be used as an anode catalyst in a fuel cell, a cathode catalyst for electrolysis of water, etc.

The source of CO that causes CO toxicity may be, for example, impurity CO that is mixed into the raw gas or is difficult to remove (taking into account of preparation process and cost), or CO generated during the reaction, such as CO generated by oxidation of carbon carriers and carbon paper.

In the sulfur-containing platinum-carbon catalyst of the present invention, by compounding sulfur elements inside the carbon carrier, it is more conducive to platinum loading inside the carbon carrier, so that the sulfur-containing platinum-carbon catalyst has better electrocatalytic performance. Preferably, the total sulfur content in the sulfur-modified carbon carrier is equal to or more than 1.7 times, equal to or more than 2 times, equal to or more than 3 times, etc., for example, 1.5-10 times the surface sulfur content. Wherein, the surface sulfur content represents the sulfur weight fraction measured by XPS analysis, and the total sulfur content represents the sulfur weight fraction measured by a sulfur-carbon analyzer.

In the sulfur-containing platinum-carbon catalyst of the present invention, the sulfur-containing platinum-carbon catalyst has a Pt 4f 7/2 characteristic peak located at 71.6 eV or above in the XPS spectrum, for example, at 71.6-72.2 eV, such as 71.7 eV. The above XPS spectrum refers to the XPS spectrum corrected with the C1s peak located at 284.3 eV. Normally, for example, when platinum is loaded on a carbon carrier that does not contain a compounded element, the Pt 4f 7/2 characteristic peak is located near 71.3 eV, which indicates that the sulfur-containing platinum-carbon catalyst of the present invention has a Pt 4f 7/2 characteristic peak shifted to high electron volts by 0.3 eV or more in the XPS spectrum.

In the sulfur-containing platinum-carbon catalyst of the present invention, preferably, based on the total weight of the catalyst, the weight fraction of platinum is 20-70wt.%, for example may be 20-60wt.%, 20-40wt.% or 40-70wt.%, etc. Preferably, the sulfur-containing platinum-carbon catalyst of the present invention does not contain other metal elements than platinum.

The preparation process of the sulfur-containing platinum-carbon catalyst of the present invention only needs to make the catalyst have the above-mentioned properties. Specifically, as the above mentioned preparation process of the sulfur-containing platinum-carbon catalyst, it may comprise:
(1) impregnating the carbon carrier with a solution containing sulfur at 10-80 °C for 1-5h, and drying the impregnated product to obtain a sulfur-modified carbon carrier;
(2) removing a solvent from the homogeneous mixture containing the sulfur-modified carbon carrier obtained in step (1), the platinum source and the solvent to obtain a precursor material;
(3) in a reducing atmosphere, heat-treating the precursor material obtained in step (2) at 80-200 °C for 1-4 h to obtain a sulfur-containing platinum-carbon catalyst;
wherein, in step (2), the amount of the platinum source used is 0.25-2.4g in terms of platinum element relative to 1 g of the sulfur-modified carbon carrier.

Preferably, the amount of the platinum source used is 0.25-2.4 g, preferably 0.25-0.67 g in terms of platinum element, relative to 1 g of the sulfur-modified carbon carrier.

Embodiment V also provides an anode reaction process for a hydrogen fuel cell, the process comprising: under anode reaction conditions, bringing H₂ in the raw gas into contact with a sulfur-containing platinum-carbon catalyst;
wherein, the content of CO in the raw gas is 1500ppm or less;
the sulfur-containing platinum-carbon catalyst includes a sulfur-modified carbon carrier and a platinum metal loaded thereon, wherein the sulfur-modified carbon carrier is sulfur-modified conductive carbon black, and the total sulfur content in the sulfur-modified carbon carrier is greater than or equal to the surface sulfur content, preferably the total sulfur content is equal to or more than 1.2 times, and more preferably equal to or more than 1.5 times the surface sulfur content. Based on the total weight of the catalyst, the weight fraction of platinum is 20-70wt.%.

As the raw gas in the present invention, for example, a raw gas with a hydrogen content of 99.5% by weight (preferably 99.85% by weight or more) can be used, for example, hydrogen produced by following methods: methane steam reforming, coal hydrogen production, methanol hydrogen production, ammonia decomposition hydrogen production, hydrogen recovery and purification, biomass hydrogen production, etc. can also be used, and hydrogen produced as a byproduct of a reaction device, such as hydrogen-containing gas produced by a catalytic cracking device in a refinery, can also be used.

By using the sulfur-containing platinum-carbon catalyst of the present invention, even if the raw gas contains CO, as long as the content is below a prescribed amount, the catalyst activity can be maintained and the anode reaction can be carried out for a long time.

Preferably, the CO content in the raw gas is preferably 1200 ppm or less, and more preferably 1000 ppm or less, for example, 100-800 ppm. Specifically, the CO content in the raw gas may be 100, 200, 300, 400, 500, 600, 700, 800, 900, 1000, 1100 or 1200 ppm.

According to the present invention, the anode reaction conditions are sufficient as long as the anode reaction can be carried out. Specifically, the anode reaction conditions may include: the voltage is 0V or above, preferably 0-0.4V, and more preferably 0-0.2V. The anode reaction can be carried out, for example, in an acidic electrolyte solution, and various organic acids and/or inorganic acid solutions, such as perchloric acid solution or sulfuric acid solution can be used. In addition, when the anode reaction is carried out in an electrolyte solution, the anode reaction conditions may include: the hydrogen ion concentration in the electrolyte solution is 0.0001M or more, preferably 0.001-1.0M.

This embodiment V also provides the use of a sulfur-containing platinum-carbon catalyst in a fuel cell, wherein the sulfur-containing platinum-carbon catalyst includes a sulfur-modified carbon carrier and a platinum metal loaded thereon, wherein the sulfur-modified carbon carrier is a sulfur-modified conductive carbon black, and the total sulfur content in the sulfur-modified carbon carrier is greater than or equal to the surface sulfur content, preferably the total sulfur content is equal to or more than 1.2 times, and more preferably equal to or more than 1.5 times the surface sulfur content, and the weight fraction of platinum is 20-70wt.% based on the total weight of the catalyst; wherein the CO content in the raw gas of the fuel cell is 1500ppm or less.

The fuel cell may be, for example, a hydrogen fuel cell (e.g., a proton exchange membrane hydrogen fuel cell), a direct alcohol fuel cell (e.g., a direct alcohol fuel cell with methanol or ethanol as an anode fuel), etc. Preferably, the fuel cell is a hydrogen fuel cell. Specifically, the sulfur-containing platinum-carbon catalyst may be used as an anode catalyst or a cathode catalyst in a fuel cell, preferably as an anode catalyst.
preferably, the content of CO in the raw gas is preferably 1200 ppm or less, and more preferably 1000 ppm or less, for example, it can be 100-1000 ppm. Specifically, the content of CO in the raw gas can be 100, 200, 300, 400, 500, 600, 700, 800, 900, 1000, 1100 or 1200 ppm. In addition, in the application of the third aspect of the present invention, the raw gas used and its properties can be the same as those in the second aspect, and will not be repeated here.

According to the present invention, the anode reaction conditions are sufficient as long as the anode reaction can be carried out. Specifically, the anode reaction conditions may include: the voltage is 0V or above, preferably 0-0.4V. The anode reaction can be carried out in an acidic electrolyte solution, and various organic acids and/or inorganic acid solutions can be used, such as perchloric acid solution or sulfuric acid solution. In addition, when the anode reaction is carried out in an electrolyte solution, the anode reaction conditions may include: the hydrogen ion concentration in the electrolyte solution is 0.01M or more, preferably 0.05-1.0M.

This embodiment V also provides a process for electrolyzing water, which comprises: contacting water with a sulfur-containing platinum-carbon catalyst under conditions for electrolyzing water; wherein at least part of the contact is carried out in the presence of CO; the sulfur-containing platinum-carbon catalyst comprises a sulfur-modified carbon carrier and a platinum metal loaded thereon, the sulfur-modified carbon carrier is sulfur-modified conductive carbon black, the total sulfur content in the sulfur-modified carbon carrier is greater than or equal to the surface sulfur content, preferably the total sulfur content is equal to or more than 1.2 times, and more preferably equal to or more than 1.5 times the surface sulfur content, and the weight fraction of platinum is 20-70wt.% based on the total weight of the catalyst.

The conditions for electrolyzing water are not particularly limited, and preferably may include: the voltage is -0.4 V or above, preferably -0.4 to 1.0 V, and more preferably -0.4 to 0 V.

Preferably, the process for electrolyzing water is proton exchange membrane electrolysis of water.

This embodiment V also provides the use of a sulfur-containing platinum-carbon catalyst in improving the resistance of the platinum-carbon catalyst to CO toxicity, wherein the sulfur-containing platinum-carbon catalyst comprises a sulfur-modified carbon carrier and a platinum metal loaded thereon, wherein the sulfur-modified carbon carrier is sulfur-modified conductive carbon black, and the total sulfur content in the sulfur-containing platinum-carbon catalyst is greater than or equal to the surface sulfur content, preferably the total sulfur content is equal to or more than 1.2 times, and more preferably equal to or more than 1.5 times the surface sulfur content, and the weight fraction of platinum is 20-70wt.% based on the total weight of the catalyst.

The features and technical solutions regarding the various components, carbon materials, catalysts, preparation process, uses, etc. not specifically mentioned in this embodiment V can be referred to other embodiments, especially embodiments I and II, as long as they do not contradict the specific disclosures of this embodiment.

### Embodiment VI: Use of sulfur-containing platinum-carbon catalyst in resisting H₂S toxicity

Embodiment VI of the present invention provides a use of a sulfur-containing platinum-carbon catalyst in improving the resistance of a platinum-carbon catalyst to H₂S toxicity. The sulfur-containing platinum-carbon catalyst comprises a sulfur-modified carbon carrier and a platinum metal loaded thereon. The total sulfur content in the sulfur-modified carbon carrier is greater than or equal to the surface sulfur content. Preferably, the total sulfur content is equal to or more than 1.2 times, and more preferably equal to or more than 1.5 times the surface sulfur content. The weight fraction of platinum is 20-70wt.% based on the total weight of the catalyst.

In other words, the sulfur-containing platinum-carbon catalyst used in embodiment V of the present invention may preferably be the sulfur-containing platinum-carbon catalyst described in embodiment II of the present invention.

According to the present invention, by using the sulfur-containing platinum-carbon catalyst of the present invention, a better anti-H₂S toxicity effect can be provided on the basis of the existing platinum-carbon catalyst, thereby achieving the effect of extending the life of the platinum-carbon catalyst. Specifically, the sulfur-containing platinum-carbon catalyst can be used as an anode catalyst in a fuel cell.

As the source of H₂S causing H₂S toxicity, for example, it can be impurity H₂S mixed into the raw gas due to the preparation process, constituents etc., or difficult to be removed from the raw gas.

The preparation process of the sulfur-containing platinum-carbon catalyst of the present invention only needs to make the catalyst have the above-mentioned properties. Specifically, as the preparation process of the sulfur-containing platinum-carbon catalyst, it may compries:
(1) impregnating the carbon carrier with a solution containing sulfur at 10-80 °C for 1-5h, and drying the impregnated product to obtain a sulfur-modified carbon carrier;
(2) removing a solvent from the homogeneous mixture containing the sulfur-modified carbon carrier obtained in step (1), the platinum source and the solvent to obtain a precursor material;
(3) in a reducing atmosphere, heat-treating the precursor material obtained in step (2) at 80-200 °C for 1-4 h to obtain a sulfur-containing platinum-carbon catalyst;
wherein, in step (2), the amount of the platinum source used is 0.25-2.4 g in terms of platinum element relative to 1 g of the sulfur-modified carbon carrier.

This embodiment VI also provides an anode reaction process of a hydrogen fuel cell, wherein the process comprises: contacting H₂ in a raw gas with a sulfur-containing platinum-carbon catalyst under anode reaction conditions;
wherein the H₂S content in the raw gas is 15 ppm or less.

The sulfur-containing platinum-carbon catalyst comprises a sulfur-modified carbon carrier and a platinum metal loaded thereon, wherein the sulfur-modified carbon carrier is sulfur-modified conductive carbon black, and the total sulfur content in the sulfur-modified carbon carrier is greater than or equal to the surface sulfur content, preferably the total sulfur content is equal to or more than 1.2 times, and more preferably equal to or more than 1.5 times the surface sulfur content. Based on the total weight of the catalyst, the weight fraction of platinum is 20-70wt.%.

As the raw gas in the present invention, for example, a raw gas with a hydrogen content of 99.5wt.% (99.98wt.% or more) can be used, for example, hydrogen produced by following methods: methane steam reforming hydrogen production, coal hydrogen production, methanol hydrogen production, ammonia decomposition hydrogen production, hydrogen recovery and purification, biomass hydrogen production, etc. can also be used, and hydrogen produced as a byproduct of other reactions, such as hydrogen-containing gas produced by a catalytic cracking device in a refinery, can also be used.

By using the sulfur-containing platinum-carbon catalyst of the present invention, even if the raw gas contains H₂S, as long as the content is below a prescribed amount, the catalyst activity can be maintained and the anode reaction can be carried out for a long time.

Preferably, the H₂S content in the raw gas is preferably 15 ppm or less, and more preferably 10 ppm or less, for example, 0.4-5 ppm. Specifically, the H₂S content in the raw gas can be 0.4, 0.6, 0.8, 1, 1.5, 2, 2.5, 3, 3.5, 4, 4.5, 5, 5.5, 6, 6.5, 7, 7.5, 8, 8.5, 9, 9.5, 10, 11, 12, 13, 14 or 15 ppm, etc.

According to the present invention, the anode reaction conditions are sufficient as long as the anode reaction can be carried out. Specifically, the anode reaction conditions also include: the voltage is 0V or above, preferably 0.01-0.4V. For example, the anode reaction can be carried out in an acidic electrolyte solution, various organic acids and/or inorganic acid solutions, such as perchloric acid solution or sulfuric acid solution can be used. In addition, when the anode reaction is carried out in an electrolyte solution, the anode reaction conditions may include: the hydrogen ion concentration in the electrolyte is 0.01M or above, preferably 0.05-1.0M.

This embodiment VI also provides the use of a sulfur-containing platinum-carbon catalyst in a fuel cell, wherein the sulfur-containing platinum-carbon catalyst comprises a sulfur-modified carbon carrier and a platinum metal loaded thereon, wherein the sulfur-modified carbon carrier is sulfur-modified conductive carbon black, and the total sulfur content in the sulfur-modified carbon carrier is greater than or equal to the surface sulfur content, preferably the total sulfur content is equal to or more than 1.2 times, and more preferably equal to or more than 1.5 times the surface sulfur content, and the weight fraction of platinum is 20-70wt.% based on the total weight of the catalyst; wherein the content of H₂S in the raw gas of the fuel cell is 15ppm or less, and preferably 0.4-5ppm.

The fuel cell may be, for example, a hydrogen fuel cell (e.g., a proton exchange membrane hydrogen fuel cell), a direct alcohol fuel cell (e.g., a direct alcohol fuel cell with methanol or ethanol as an anode fuel), etc. Preferably, the fuel cell is a hydrogen fuel cell. Specifically, the sulfur-containing platinum-carbon catalyst may be used as an anode catalyst or a cathode catalyst in a fuel cell, preferably as an anode catalyst.

Preferably, the content of H₂S in the raw gas is 10 ppm or less, preferably 5 ppm or less. Specifically, the content of H₂S in the raw gas can be 0.4, 0.6, 0.8, 1, 1.5, 2, 2.5, 3, 3.5, 4, 4.5, 5, 5.5, 6, 6.5, 7, 7.5, 8, 8.5, 9, 9.5, 10, 11, 12, 13, 14 or 15 ppm, etc. In addition, in the use of the third aspect of the present invention, the raw gas used and its properties can be the same as those in the second aspect, which will not be repeated here.

This embodiment VI also provides the use of a sulfur-containing platinum-carbon catalyst in improving the resistance of the platinum-carbon catalyst to H₂S toxicity. The sulfur-containing platinum-carbon catalyst includes a sulfur-modified carbon carrier and a platinum metal loaded thereon. The sulfur-modified carbon carrier is sulfur-modified conductive carbon black. The total sulfur content in the sulfur-containing platinum-carbon catalyst is greater than or equal to the surface sulfur content. Preferably, the total sulfur content is equal to or more than 1.2 times, and more preferably equal to or more than 1.5 times the surface sulfur content. Based on the total weight of the catalyst, the weight fraction of platinum is 20-70wt.%.

The features and technical solutions regarding the various components, carbon materials, catalysts and its preparation process, uses, etc. not specifically mentioned in this embodiment VI can be referred to other embodiments, especially embodiment V, and can also be referred to embodiments I and II and other embodiments, as long as they do not contradict the specific disclosures of this embodiment.

### Example

The present invention is described in detail below in conjunction with specific examples. The following examples will help those skilled in the art to further understand the present invention, but are not intended to limit the present invention in any form.

Unless otherwise specified, all reagents used in the present invention are analytically pure and commercially available.

### Reagents, Instruments and Test

The model of high-resolution transmission electron microscope (HRTEM) is JEM-2100 (HRTEM) (JEOL Ltd.), and the test condition is: acceleration voltage of 200 kV.

The X-ray photoelectron spectrometer was an ESCALab220i-XL model X-ray electron spectrometer equipped with Avantage V5.926 software and produced by VG Scientific. The X-ray photoelectron spectrometer analysis test conditions are as follows: the excitation source was monochromatic A1Kα X-ray, the power was 330W, and the basic vacuum during the analysis test was 3 × 10⁻⁹ mbar. In addition, the electron binding energy was calibrated using the C1s peak (284.3 eV) of elemental carbon, and the post-peak processing software was XPSPEAK.

The specific process of detecting the surface sulfur content by XPS analysis is as follows: the scanning range of the full spectrum scan was 0-1200eV, the band pass energy (pass energy) was 100eV, the analysis energy step was 1.0eV, the number of channels was 1211, and the number of scans was 1. The narrow spectrum scan pass energy was 30.0eV, the analysis energy step was 0.05eV, the number of channels was 401, and the number of Scanning circles was 16.

The sulfur-carbon analyzer is the CS-844 model produced by LECO Corporation of the United States.

The spherical aberration corrected transmission electron microscope (AC-STEM) was a ARM200F model from JEOL Ltd..

Instruments, process and conditions for testing the weight fraction of platinum in sulfur-containing platinum-carbon catalysts: Taking 30 mg of the prepared Pt/C catalyst, adding 30 mL of aqua regia hereinto, condensing and refluxing at 120 °C for 12 hours, cooling it to room temperature, taking the supernatant and diluting it, and using ICP-AES to test the Pt content.

ORR electrochemical performance test, the instrument model is Solartron analytical EnergyLab and Princeton Applied Research (Model 636A), the process and test conditions: the polarization curve LSV of the catalyst was tested in 0.1M HClO₄ saturated with O₂ at a speed of 1600rpm, and the electrochemical active area ECSA was tested in 0.1M HClO₄ saturated with Ar. During the stability test, after scanning 5000 cycles in the range of 0.6V-0.95V (vs. RHE) in 0.1M HClO₄ saturated with O₂, LSV and ECSA were tested according to the above process. In the above tests, the catalyst was prepared into a uniformly dispersed slurry and applied to a glassy carbon electrode with a diameter of 5mm. The amount of platinum in the catalyst on the electrode was controlled in the range of 1-4µg, and no iR correction was performed during the calculation.

HER electrochemical performance test, instrument model Solartron analytical EnergyLab and Princeton Applied Research (Model 636A), process and test conditions: the polarization curve LSV of the catalyst was tested in 0.5M H₂SO₄ saturated with N₂ at a speed of 2500rpm, and the electrochemical active area ECSA was tested in 0.5M H₂SO₄ saturated with N₂. During the stability test, the range of -0.1V-0.2V (vs. RHE) was scanned at 2500rpm in 0.5M H₂SO₄ saturated with N₂. After a certain number of cycles of scanning, LSV and ECSA were tested according to the above process. In the above tests, the catalyst was prepared into a uniformly dispersed slurry and applied to a glassy carbon electrode with a diameter of 5mm. The amount of platinum in the catalyst on the electrode was controlled in the range of 1-4µg, and no iR correction was performed during the calculation.

Ketjenblack ECP600JD (Ketjenblack, produced by Lion Co., Ltd., Japan) was tested using the aforementioned instrumental process, and the results showed: the specific surface area was 1362 m²/g, the pore volume was 2.29 mL/g, the oxygen weight fraction was 6.9%, and the I_{D}/ I_{G} was 1.25.

The commercial platinum-carbon catalyst 1 (brand HISPEC4000, produced by Johnson Matthey Company) was tested by using the aforementioned instrumental process, and the results showed that the weight fraction of platinum was 40.2%.

The commercial platinum-carbon catalyst 2 (brand number TEC10F50E, produced by Tanaka Precious Metals Industries, Ltd.) was tested by using the aforementioned instrumental process, and the results showed that the platinum loading was 46wt.%.

VXC72 (Vulcan XC72, produced by Cabot Corporation, USA) was purchased from Suzhou Yilongsheng Energy Technology Co., Ltd. The results of the test using the aforementioned instrumental process showed that the specific surface area was 258 m²/g, the pore volume was 0.388 mL/g, the oxygen weight fraction was 8.72%, and the I_{D}/I_{G} was 1.02.

Instruments, process and conditions for XRD analysis: X-ray diffraction analysis (XRD) was carried out on a Shimadzu XRD-6000 X-ray diffractometer. The test conditions included: tube voltage 40 kV, tube current 40 mA, Cu target Kα radiation, and 2θ scanning range 10° to 70°.

The calculation method ofNI/(FWHM*m _{Pt} ) is as follows: (1) under the working conditions of the powder X-ray diffractometer (tube voltage 40 kV, tube current 40 mA, Cu target Kα radiation), the X-ray diffraction spectrum of the catalyst to be tested was collected in the range of 2θ 20-70°. After deducting the background signal and Kα2, the maximum value of the intensity data in the range of 2θ 22-28° was 1, and the minimum value of the intensity data in the range of 65-70° was 0. The normalized peak intensities of the Pt(111) characteristic peak at 39.8±0.2° and the Pt(200) characteristic peak at 46.2±0.2° of the catalyst to be tested were obtained. (2) The normalized X-ray diffraction spectrum was subjected to peak fitting to obtain the full width at half maximum (in degrees) of the Pt(111) characteristic peak and the Pt(200) characteristic peak. (3) The normalized peak intensities of the Pt(111) characteristic peak and the Pt(200) characteristic peak were divided by the corresponding full width at half maximum and the weight content of platinum in the catalyst to obtain the NI/(FWHM*m _{Pt} ) of the Pt(111) characteristic peak and the Pt(200) characteristic peak of the catalyst.

Instrument and process for testing the in-situ infrared curve of CO: infrared spectrometer: Thermo Fisher is50; during the test, it was purged by nitrogen at room temperature first, then reduced at 250 °C for 1 hour under H₂ atmosphere, and then vacuumed. 5% CO/He was introduced to adsorb CO at room temperature for 1 hour, and after vacuum desorption to remove physically adsorbed CO, the test was performed at 25 °C.

Method for characterizing elemental sulfur: Synchrotron radiation X-ray fine spectroscopy was used to characterize sulfur in carbon carriers. The equipment is Beijing Electron-Positron Collider 4B7A-Medium Energy X- ray Experiment Station. Elemental sulfur and 2,2'-bithiophene are used as standards.

### Embodiment I

### Example 1.1

0.1 g of sulfur was dissolved in 70 ml of cyclohexane to form a homogeneous solution, 9.9 g of Ketjenblack ECP600JD was dispersed therein, stirred evenly, immersed for 5 h, and vacuum dried at 50 °C, to obtain sulfur-modified carbon material A.

### Example I.2

0.40 g of sulfur was dissolved in 70 ml of cyclohexane to form a homogeneous solution, 9.60 g of Ketjenblack ECP600JD was dispersed therein, stirred evenly, immersed for 5 h, and vacuum dried at 50 °C to obtain sulfur-modified carbon material C.

### Example I.3

0.55 g of sulfur was dissolved in 70 ml of cyclohexane to form a homogeneous solution, 9.45 g of Ketjenblack ECP600JD was dispersed therein, stirred evenly, immersed for 5 h, and vacuum dried at 50 °C to obtain sulfur-modified carbon material D.

### Comparative Example I.1

A commercially available platinum-carbon catalyst of brand HISPEC4000 was used.

### Comparative Example I.2

The carbon material was prepared according to the process of Example I.1, except that no sulfur was used, that is, a carbon material having no compounded elements was used.

### Comparative Example I.3

Sulfur-doped carbon materials were prepared according to the process of the literature "Nature Communications, 2019, 10:4977".

### Test Example 1.1

The surface sulfur content and total sulfur content in the sulfur-modified carbon materials obtained in Examples I.1 to I.3 and Comparative Example I.3 were measured. The results are shown in Table I.1.

**Table 1.1**

| | Surface sulfur content | Total sulfur content | Total sulfur content/surface sulfur content |
|---|---|---|---|
| Example I.1 | 0.52% | 1.0wt.% | 1.9 |
| Example I.2 | 2.66% | 4.0wt.% | 1.5 |
| Example I.3 | 3.49% | 5.5wt.% | 1.6 |
| Comparative Example I.3 | 10.74% | 4.61wt.% | 0.4 |

In Table I.1, the surface sulfur content represents the sulfur weight fraction measured by XPS analysis, and the total sulfur content represents the sulfur weight fraction measured by a sulfur-carbon analyzer.

### Test Example I.2

The carbon materials of Examples I.1 to I.3 and Comparative Example I.2 were used to load platinum to prepare sulfur-containing platinum-carbon catalysts with a platinum loading of 40wt.%. The process for loading platinum was as follows:
0.40 g of chloroplatinic acid, calculated on the basis of platinum, was dissolved in 20 mL of a solution having a volume ratio of water to ethanol of 10: 1, and 0.6 g of each of the above carbon materials was dispersed in the chloroplatinic acid solution, wherein they were stirred and dispersed evenly. After standing for 24 hours, the mixture was placed in a vacuum drying oven for drying. The dried precursor was placed in a tubular furnace, the temperature was raised to 140 °C at a rate of 5 °C/min, and reduced for 2 hours in an atmosphere of N₂:H₂=5:1, and the temperature was lowered in an N₂ atmosphere to obtain a sulfur-containing platinum-carbon catalyst.

The performance of the sulfur-containing platinum-carbon catalyst prepared as above and the commercial platinum-carbon catalyst of Comparative Example 1.1 were measured. The obtained ORR performance was shown in Table I.2 below. Figure I.1 shows the polarization curves of the ORR reaction catalyzed by the sulfur-containing platinum-carbon catalyst prepared by the carbon materials of Example 1.1 and Comparative Example I.2 and the commercial platinum-carbon catalyst of Comparative Example I.1.

**Table I.2**

| serial number | Platinum loading | Platinum dosage on the electrode/ µg | Weight specific activity/ A/mg-Pt |
|---|---|---|---|
| Example I.1 | 40wt.% | 4 | 0.15 |
| Example I.2 | 40wt.% | 4 | 0.16 |
| Example I.3 | 40wt.% | 4 | 0.13 |
| Comparative Example I.1 | 40wt.% | 4 | 0.11 |
| Comparative Example I.2 | 40wt.% | 4 | 0.08 |

From the results in Table I.2, it can be seen that by using the sulfur-modified carbon material of the present invention, the effect of improving the weight specific activity of the prepared sulfur-containing platinum-carbon catalyst can be achieved.

### Test Example I.3

The carbon carriers of Example 1.1 and Comparative Example I.3 were used to prepare sulfur-containing platinum-carbon catalysts according to the process of Test Example 2-2, and the platinum loading used was shown in Table 1.3. The performance of the sulfur-containing platinum-carbon catalysts prepared as above and the commercial catalyst of Comparative Example 1.1 was measured, and the obtained HER performance was shown in Table 3 below.

Figure I.2 shows the polarization curves before and after the stability of the HER reaction catalyzed by the sulfur-containing platinum-carbon catalyst prepared by the sulfur-modified carbon material of Example I.1, and Figure I.3 shows the polarization curves before and after the stability of the HER reaction catalyzed by the commercial platinum-carbon catalyst of Comparative Example I.1.

**Table I.3**

| serial number | Example I.1 | Comparative Example I.1 | Comparative Example I.3 |
|---|---|---|---|
| Platinum loading | 20wt.% | 40wt.% | 40wt.% |
| Platinum dosage on electrode/µg | 2 | 4 | 4 |
| Overpotential/mV | 11.1 | 19.9 | 35.9 |
| Overpotential after 12000 cycles stability/mV | 15.3 | 26.5 | - |
| Weight specific activity/ A/mg-Pt | 1.7 | 0.5 | 0.15 |
| Weight specific activity after 12000 cycles of stability/ A/mg-Pt | 1.4 | 0.3 | - |

It can be seen from the results in Table I.3 that the sulfur-containing platinum-carbon catalyst of the sulfur-modified carbon material of Example 1.1 of the present invention has a lower overpotential and a higher weight specific activity than the commercial catalyst of Comparative Example 1.1, and the performance degradation of the overpotential and weight specific activity after 12,000 cycles of stability is smaller.

### Test Example I.4

The sulfur-containing platinum-carbon catalyst with a platinum loading of 40wt.% prepared by using the carbon material of Comparative Example I.2 in Test Example I.2 was observed using STEM to obtain the STEM photograph in Figure I.4.

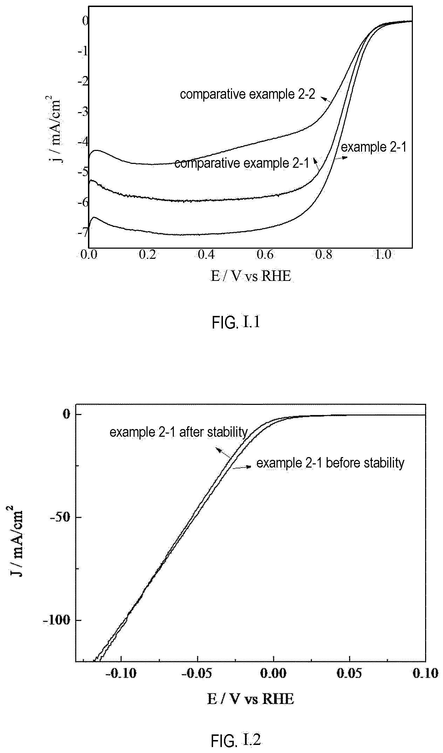

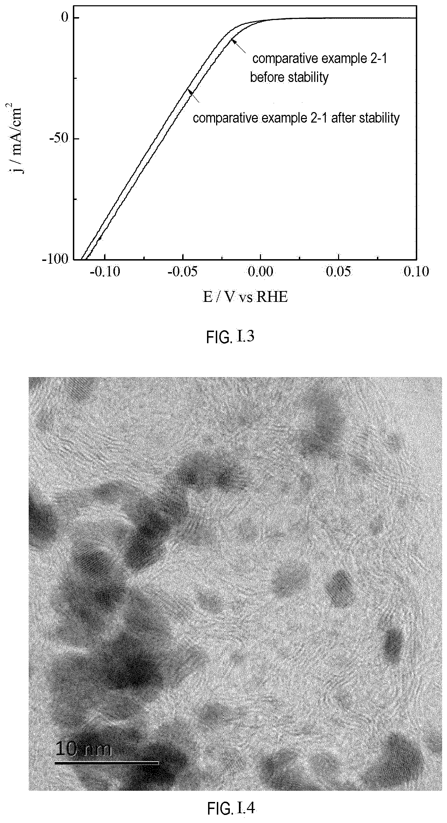

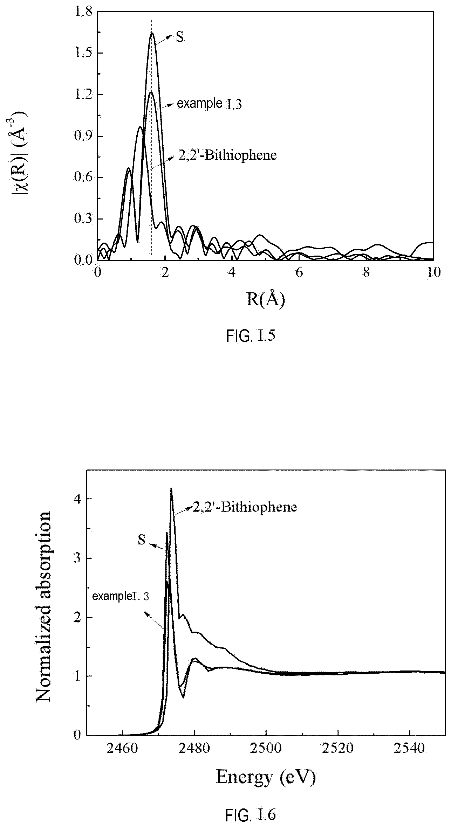

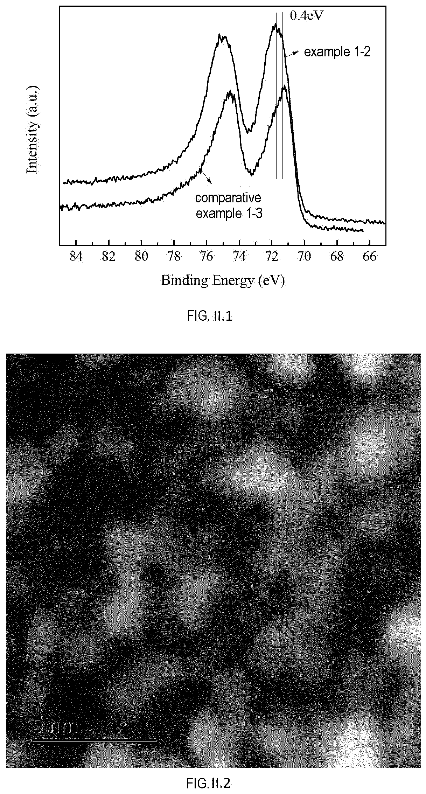

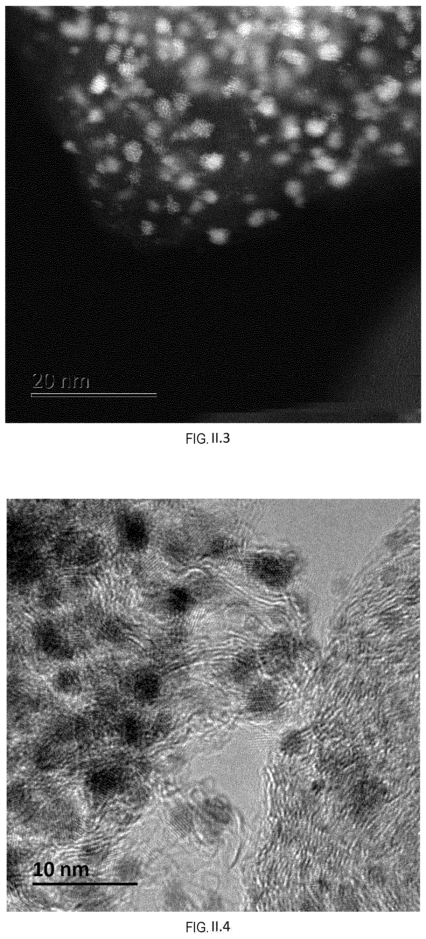

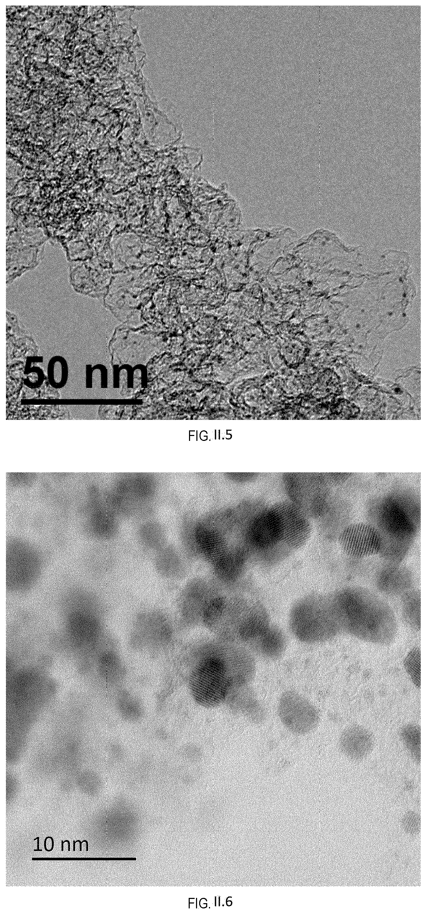

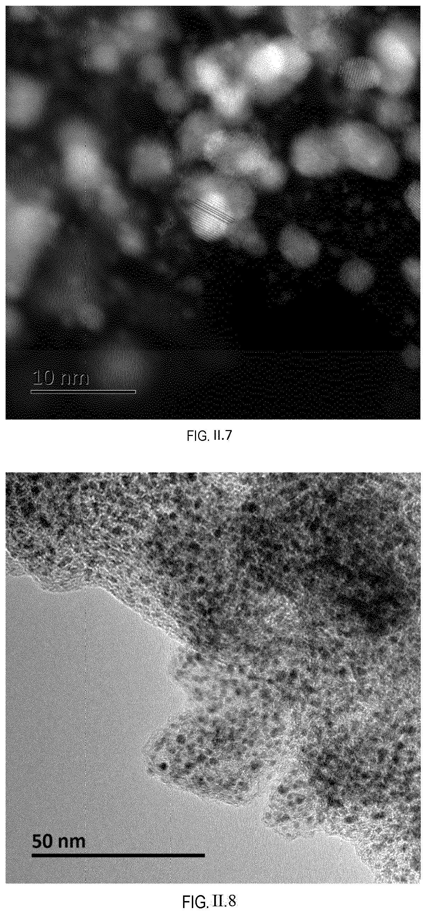

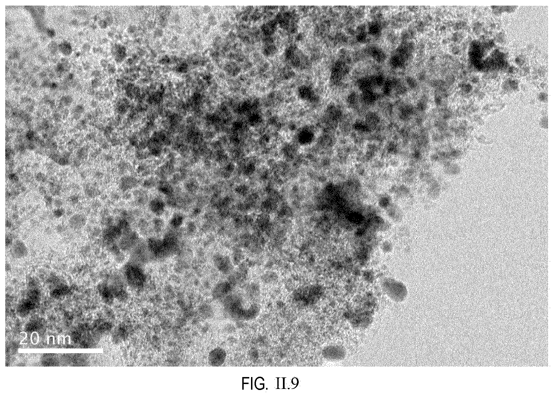

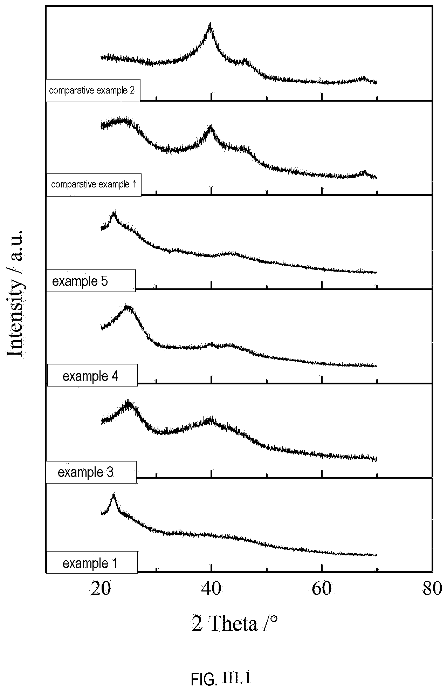

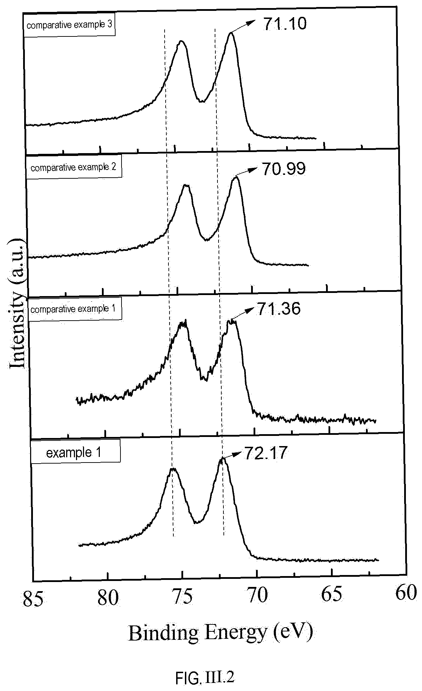

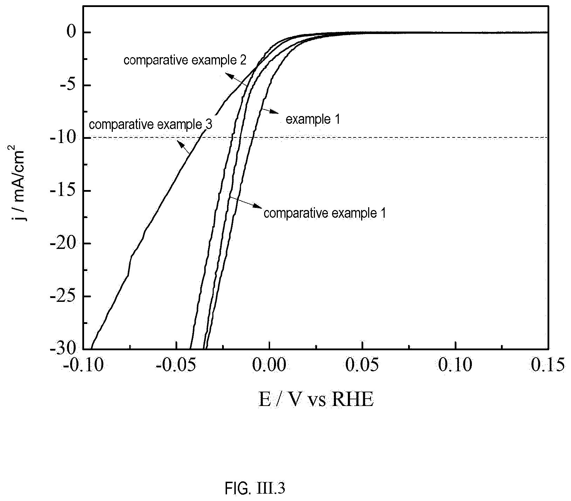

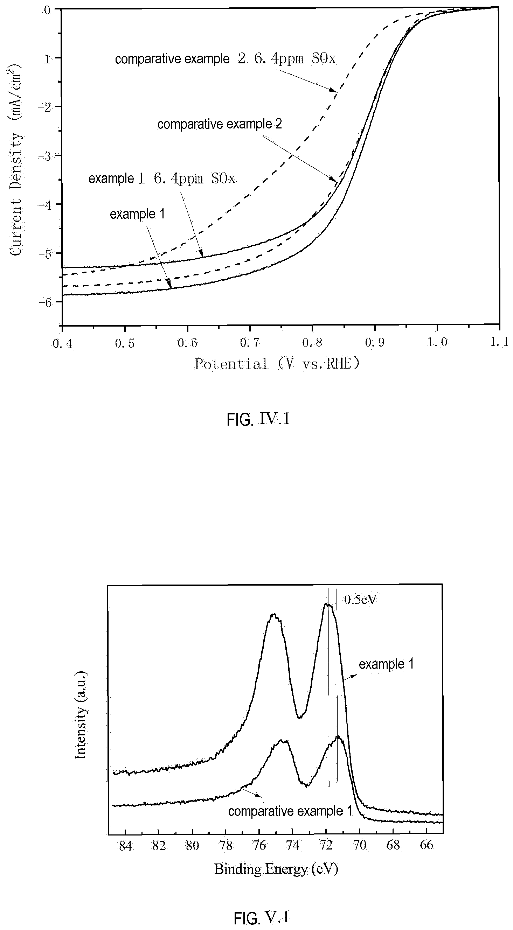

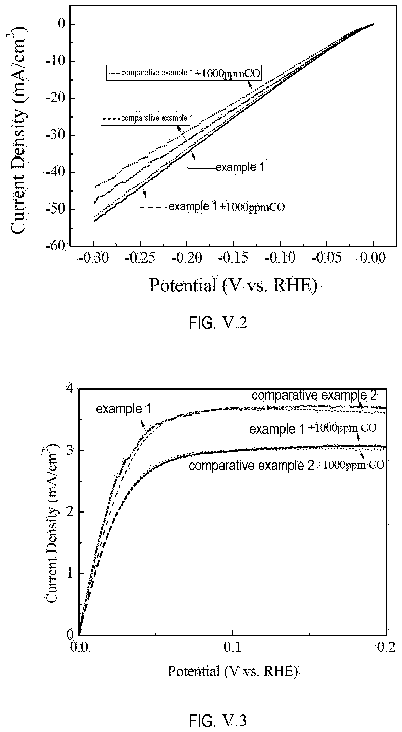

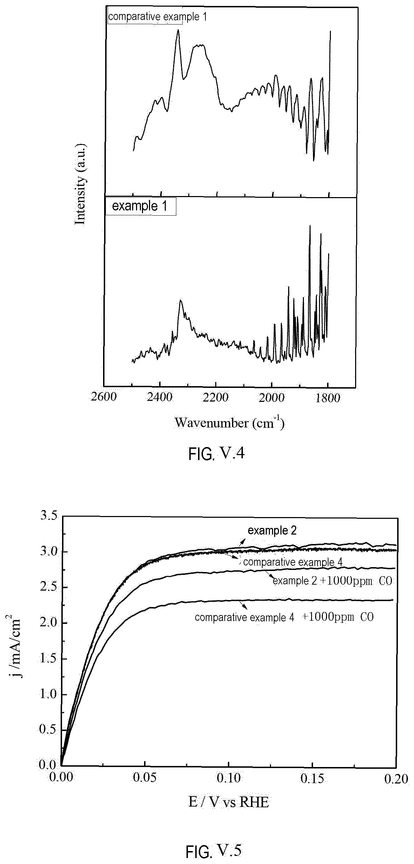

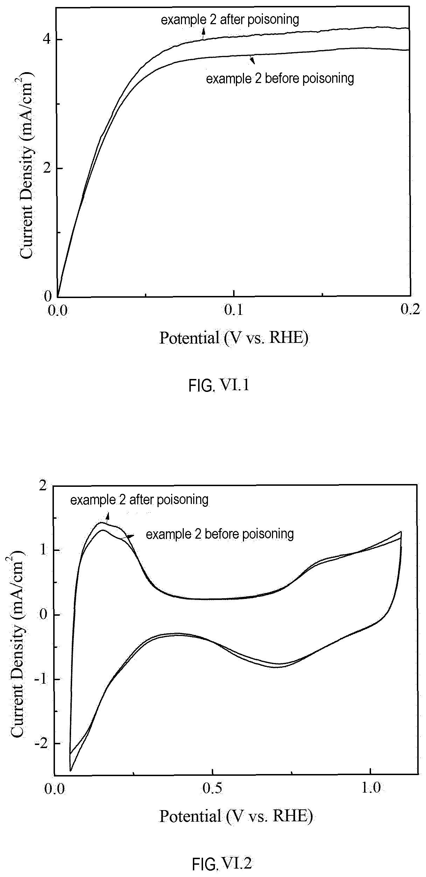

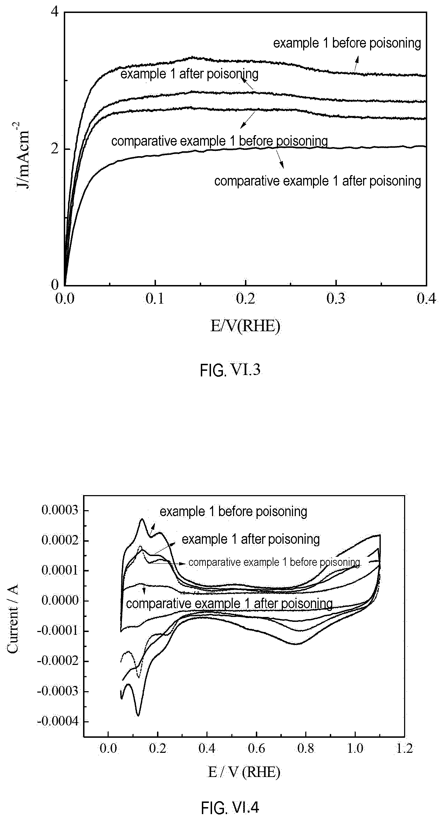

According to the statistics of the STEM photograph in Figure 1.4, it can be seen that the platinum particles with regular lattice fringes in the sulfur-containing platinum-carbon catalyst are about 100% by weight.

The same process was used to observe the sulfur-containing platinum-carbon catalyst with a platinum loading of 40wt.% prepared using the carbon material of Example I.3, wherein the platinum particles with regular lattice fringes did not exceed 40wt.%.

### Test Example I.5

the sulfur-modified carbon material of Example I.3 was characterized by synchrotron radiation X-ray fine spectrum, and the equipment was Beijing Electron-Positron Collider 4B7A- Medium Energy X-ray Experiment Station. Elemental sulfur and 2,2'-dithiophene were used as standard substances. Figure I.5 reflects the bond length information of the two standard substances and the three samples of the sulfur-modified carbon material. By comparison, it can be seen that S in carbon carrier D has bonds at about 0.93Å and 1.62Å, which completely overlaps with elemental sulfur, proving that it is elemental sulfur. Figure I.6 reflects the valence information of the three samples. Similarly, the sulfur in carbon carrier D overlaps with elemental sulfur, which is completely different from thiophene sulfur, further proving that it is elemental sulfur.

### Embodiment II

### Example II.1

0.1 g of sulfur was dissolved in 70 ml of cyclohexane to form a homogeneous solution, 9.9 g of Ketjenblack ECP600JD was dispersed therein, stirred evenly, immersed for 5 hours, and vacuum dried at 50 °C to obtain a sulfur-containing conductive carbon black as a sulfur-containing carbon carrier; 1.4 g of chloroplatinic acid in terms of platinum was dissolved in 100 mL of a solution with a volume ratio of water to ethanol of 10:1, 0.6 g of the above sulfur-containing carbon carrier was dispersed in the chloroplatinic acid solution, stirred and dispersed evenly; and after standing for 24 hours, the unadsorbed chloroplatinic acid solution was filtered out, and the obtained solid was placed in a vacuum drying oven for drying; the dried precursor was placed in a tubular furnace, raised to 180 °C at a rate of 8 °C/min, reduced for 2 hours in an atmosphere of N₂:H₂=5:1, and cooled in an N₂ atmosphere to obtain a sulfur-containing platinum-carbon catalyst.

### Example II.2

0.25 g of sulfur was dissolved in 70 ml of cyclohexane to form a homogeneous solution, 9.75 g of Ketjenblack ECP600JD was dispersed therein, stirred evenly, immersed for 5 hours, and vacuum dried at 50 °C to obtain sulfur-containing conductive carbon black as a sulfur-containing carbon carrier; 0.52 g of chloroplatinic acid in terms of platinum was dissolved in 20 mL of a solution with a volume ratio of water to ethanol of 10:1, 0.6 g of the above sulfur-containing carbon carrier was dispersed in the chloroplatinic acid solution, stirred and dispersed evenly; after standing for 24 hours, the dispersion then was placed in a vacuum drying oven for drying; the dried precursor was placed in a tubular furnace, raised to 160 °C at a rate of 6 °C/min, reduced for 2 hours in an atmosphere of N₂:H₂=5:1, and cooled in an N₂ atmosphere to obtain a sulfur-containing platinum-carbon catalyst.

### Example II.3

0.40g of sulfur was dissolved in 70ml of cyclohexane to form a homogeneous solution, 9.60g of Ketjenblack ECP600JD was dispersed therein, stirred evenly, immersed for 5h, and vacuum dried at 50 °C to obtain sulfur-containing conductive carbon black as a sulfur-containing carbon carrier; 0.15g of chloroplatinic acid in terms of platinum was dissolved in 20mL of a solution with a volume ratio of water to ethanol of 10:1, 0.6g of the above sulfur-containing carbon carrier was dispersed in the chloroplatinic acid solution, stirred and dispersed evenly; after standing for 24h, the dispersion was then placed in a vacuum drying oven for drying; the dried precursor was placed in a tubular furnace, raised to 100 °C at a rate of 4 °C/min, reduced for 2h in an atmosphere of N₂:H₂=5: 1, and cooled in an N₂ atmosphere to obtain a sulfur-containing platinum-carbon catalyst.

### Example II.4

0.55g of sulfur was dissolved in 70ml of cyclohexane to form a homogeneous solution, 9.45g of Ketjenblack ECP600JD was dispersed therein, stirred evenly, immersed for 5h, and vacuum dried at 50 °C to obtain sulfur-containing conductive carbon black as a sulfur-containing carbon carrier; 0.40g of chloroplatinic acid in terms of platinum was dissolved in 20mL of a solution with a volume ratio of water to ethanol of 10:1, 0.6g of the above sulfur-containing carbon carrier was dispersed in the chloroplatinic acid solution, stirred and dispersed evenly, allowed to stand for 24h, and then the dispersion was placed in a vacuum drying oven for drying; the dried precursor was placed in a tubular furnace, raised to 140 °C at a rate of 5 °C/min, reduced for 2h in an atmosphere of N₂:H₂=5:1, and cooled in an N₂ atmosphere to obtain a sulfur-containing platinum-carbon catalyst.

### Comparative Example II.1

The sulfur-containing platinum-carbon catalyst was prepared according to the process of Example II.1, except that the heat treatment temperature was 240 °C.

### Comparative Example II.2

A platinum-carbon catalyst was prepared according to the process of Example II.1, except that the carbon carrier used was Ketjenblack ECP600JD having no compounded elements.

### Comparative Example II.3

The platinum-carbon catalyst was prepared according to the process of Example II.3, except that the carbon carrier used is Ketjenblack ECP600JD having no compounded elements.

### Comparative Example II.4

The sulfur-containing platinum-carbon catalyst was prepared according to the process of Example II.4, except that the carbon carrier used is a sulfur-doped carbon material prepared according to the process of the document "Nature Communications, 2019, 10:4977".

### Test Example II.1

The surface sulfur content and total sulfur content of the carbon carriers prepared in Examples II.1 to II.4 and Comparative Example II.4 were measured; and the results are shown in Table II.1.

**Table II.1**

| | Surface sulfur content | Total sulfur content | Total sulfur content / surface sulfur content |
|---|---|---|---|
| Example II.1 | 0.52% | 1.0wt.% | 1.9 |
| Example II.2 | 1.76% | 2.5% | 1.4 |
| Example II.3 | 2.66% | 4.0wt.% | 1.5 |
| Example II.4 | 3.49% | 5.5% | 1.6 |
| Comparative Example II.4 | 10.74% | 4.61% | 0.4 |

In Table II.1, the surface sulfur content represents the sulfur weight fraction measured by XPS analysis, and the total sulfur content represents the sulfur weight fraction measured by a sulfur-carbon analyzer.

### Test Example 1-2

The XPS spectrum of the sulfur-containing platinum-carbon catalysts of Example II.2 and Comparative Example II.3 are shown in FIG. II.1. As shown in Figure II.1, the Pt 4f 7/2 characteristic peak of the sulfur-containing platinum-carbon catalyst of Example II.2 is located at 71.72 eV, which is shifted to a higher electron volt by about 0.4 eV relative to Comparative Example II.3.

The XPS spectrum of Examples II. 1, II.3 and II.4 were measured in the same manner as above, and their Pt 4f 7/2 characteristic peaks were all located at 71.6 eV or above.

### Test Example 1-3

The sulfur-containing platinum-carbon catalysts of Examples II.2, II.3 and Comparative Examples II. 1, II.2, and II.4 were observed by TEM and STEM. Wherein, Figure II.2 shows a STEM photo of the sulfur-containing platinum-carbon catalyst of Example II.2; Figure II.3 shows a STEM photo of the sulfur-containing platinum-carbon catalyst of Example II.3; Figure II.4 shows a TEM photo of the sulfur-containing platinum-carbon catalyst of Comparative Example II. 1; Figure II.5 shows a TEM photo of the sulfur-containing platinum-carbon catalyst of Comparative Example II.2; Figure II.6 shows a STEM photo of the sulfur-containing platinum-carbon catalyst of Comparative Example II.4; Figure II.7 shows a STEM photo of platinum particles with regular lattice stripes; Figure II.8 shows a TEM photo of the sulfur-containing platinum-carbon catalyst of Example II.2; Figure II.9 shows a TEM photo of the sulfur-containing platinum-carbon catalyst of Comparative Example II.4.

When the platinum particles have a lattice and the lattice fringes are parallel, as shown by the black parallel lines in Figure II.7, they are considered to contain regular lattice fringes. For each sulfur-containing platinum-carbon catalyst, the number of platinum metal particles with regular lattice fringes in 100 platinum metal particles randomly counted, and their proportion was calculated.

The results are as follows: the platinum metal particles with regular lattice stripes in the sulfur-containing platinum-carbon catalysts of Example II.2 and Example II.3 account for 6% and 9% respectively, while the platinum metal particles with regular lattice stripes in the sulfur-containing platinum-carbon catalysts of Comparative Examples II. 1 and 1-4 account for no less than 70wt.% and 99% respectively. In Comparative Example II.2, due to the low Pt content, the number of counts was insufficient and had no statistical significance.

The same process was used to observe and count the sulfur-containing platinum-carbon catalysts of Examples II. 1 and II.4, wherein the platinum metal particles having regular lattice fringes did not exceed 20wt.%.

In the TEM image, the relative positions of 200 metal platinum particles along the edge of the carbon carrier and the carbon carrier were randomly counted, and the proportion of metal platinum particles protruding from the carbon carrier is calculated, and (100-A)% is used to represent the proportion of platinum metal particles loaded inside the carbon carrier. Statistics are taken for the samples in Figures II.8 and II.9. In Example II.2, more than 98% of the platinum particles are located inside the carbon carrier, while in Comparative Example II.4, only about 70wt.% of the platinum particles are located inside the carbon carrier.

The same process was used to observe and count the sulfur-containing platinum-carbon catalysts of Examples II. 1, II.3 and II.4, in which at least 94% of the platinum metal particles were loaded inside the carbon carrier.

### Test Example II.4

The performance of the sulfur-containing platinum-carbon catalysts prepared in Examples II.1 to II.4 and Comparative Examples II.1 to II.4 was measured; the results are shown in Table II.2 and Table II.3.

**Table II.2 ORR results**

| sample | Platinum loading/ wt.% | Platinum dosage of catalyst on electrode/µg | ECSA/ m²/g (Pt) | Weight specific activity/ A mg⁻¹ -Pt |
|---|---|---|---|---|
| Example II.1 | 42% | 4.2 | 76.9 | 0.14 |
| Example II.2 | 46% | 4.6 | 171.8 | 0.294 |
| Comparative Example II.1 | 42% | 4.2 | 37 | 0.05 |
| Comparative Example II.2 | 9% | 1.8 | 103 | 0.085 |

**Table II.3 HER results**

| sample | Platinum loading/ wt.% | Platinum dosage of catalyst on electrode/µg | Overpotential/ mV | Weight specific activity/ A mg⁻¹ -Pt @20mV |
|---|---|---|---|---|
| Example II.3 | 20wt.% | 2 | 7.26 | 1.78 |
| Example II.4 | 40wt.% | 4 | 9.81 | 0.93 |
| Comparative Example II.3 | 20wt.% | 2 | 15.64 | 1.30 |
| Comparative Example II.4 | 40wt.% | 4 | 35.9 | 0.15 |

It can be seen from the results in Table II.2 and Table II.3 that Examples II. 1 to II.4, by using the sulfur-containing carbon carriers of the present invention, have better electrochemical performance than Comparative Examples II.2 to II.3 using carbon carriers having no compounded elements.

By comparing Example II. 1 with Comparative Example II. 1, it can be seen that the sulfur-containing carbon carrier prepared by the process of the present invention can achieve better electrochemical performance by heat-treating at a lower temperature.

### Embodiment III

### Preparation Example III. 1

0.55 g of sulfur was dissolved in 70 ml of cyclohexane to form a homogeneous solution, 9.45 g of Ketjenblack ECP600JD was dispersed therein, stirred evenly, immersed for 5 h, and dried at 50 °C in vacuum to obtain sulfur-modified carbon carrier A.

### Preparation Example III.2

0.1 g of sulfur was dissolved in 40 ml of cyclohexane to form a homogeneous solution, 9.9 g of Vulcan XC72 was dispersed therein, stirred evenly, immersed for 5 h, and dried under vacuum at 50 °C to obtain sulfur-modified carbon carrier B.

### Comparative Preparation Example III. 1

Sulfur-doped carbon material D1 was prepared according to the process of the literature "Nature Communications, 2019, 10:4977".

### Comparative Preparation Example III.2

A sulfur-modified carbon carrier was prepared according to the process of Preparation Example III.1, except that the used amount of sulfur was 0.9 g and the used amount of Ketjenblack ECP600JD was 9.1 g. A sulfur-modified carbon carrier D2 was obtained.

### Test Example III.1

The surface sulfur content and total sulfur content of the carbon carriers prepared in Preparation Example III. and Comparative Preparation Example III. were measured, and the results are shown in Table III.1.

**Table III.1**

| | Surface sulfur content | Total sulfur content | Total sulfur content/surface sulfur content |
|---|---|---|---|
| Sulfur modified carbon carrier A | 3.49% | 5.5% | 1.6 |
| Sulfur modified carbon carrier B | 0.41% | 1.0wt.% | 2.4 |
| Sulfur-doped carbon carrier D1 | 10.74% | 4.61% | 0.4 |
| Sulfur modified carbon carrier D2 | 7.58% | 9.0wt.% | 1.2 |

In Table III. 1, the surface sulfur content represents the sulfur weight fraction measured by XPS analysis, and the total sulfur content represents the sulfur weight fraction measured by a sulfur-carbon analyzer.

### Example III.1

According to the ratio of 0.57mmol chloroplatinic acid per gram of carbon carrier, chloroplatinic acid was first dissolved in 15ml of a solution of water-ethanol at a volume ratio of 1:1, and 1g of carbon carrier A was dispersed in the chloroplatinic acid solution, dispersed evenly, and allowed to stand for 16h, and then dried in an oven at 60 °C to obtain a catalyst precursor. The precursor was ground and placed in a tube furnace, raised to 160 °C, and heat treated for 2h in an atmosphere of N₂:H₂=4:1, and cooled in an N₂ atmosphere to obtain a sulfur-containing platinum-carbon catalyst with a loading of 10wt.%.

### Example III.2

A sulfur-containing platinum-carbon catalyst was prepared according to the process of Example III. 1, except that the carbon carrier A prepared in Preparation Example III. 1 was used, 1.28 mmol of chloroplatinic acid was added per gram of carbon carrier, and the reduction temperature was 140 °C, to obtain a sulfur-containing platinum-carbon catalyst with a loading of 20wt.%.

### Example III.3

A sulfur-containing platinum-carbon catalyst was prepared according to the process of Example III. 1, except that the carbon carrier B prepared in Preparation Example III.2 was used and the reduction temperature was 160 °C, to obtain a sulfur-containing platinum-carbon catalyst with a loading of 10wt.%.

### Example III.4

A sulfur-containing platinum-carbon catalyst was prepared according to the process of Example III. 1, except that the carbon carrier B prepared in Preparation Example III.2 was used, 0.27 mmol of chloroplatinic acid was added per gram of carbon carrier, and the reduction temperature was 100 °C, to obtain a sulfur-containing platinum-carbon catalyst with a loading of 5wt.%.

### Example III.5

A sulfur-containing platinum-carbon catalyst was prepared according to the process of Example III.2, except that 0.27 mmol of chloroplatinic acid was added per gram of carbon carrier, and the heat treatment temperature was 100 °C, to obtain a sulfur-containing platinum-carbon catalyst with a loading of 5wt.%.

### Example III.6

A sulfur-containing platinum-carbon catalyst was prepared according to the process of Example III.2, except that 0.27 mmol of chloroplatinic acid was added per gram of carbon carrier, and the heat treatment temperature was 180 °C, to obtain a sulfur-containing platinum-carbon catalyst with a loading of 5wt.%.

### Comparative Example III.1

A sulfur-containing platinum-carbon catalyst was prepared according to the process of Example III.2, except that the carrier was Ketjenblack ECP600JD, 0.57 mmol of chloroplatinic acid was added per gram of carbon carrier, and a sulfur-containing platinum-carbon catalyst with a loading of 10wt.% was obtained.

### Comparative Example III.2

The platinum-carbon catalyst is a commercial catalyst with the brand name HISPEC4000.

### Comparative Example III.3

A sulfur-containing platinum-carbon catalyst was prepared according to the process of Example III.1, except that the sulfur-doped carbon material D1 of Comparative Preparation Example III.1 was used as a carrier, to obtain a platinum-carbon atom cluster catalyst with a loading of 6.24wt.%.

### Test Example III.2

The XRD spectrum of the sulfur-containing platinum-carbon catalysts of Examples III.1, 3-5 and Comparative Examples III.1-2 were measured, as shown in Figure III.1. The NI/(FWHM*m_{Pt}) of the Pt(111) characteristic peak and the Pt(200) characteristic peak were calculated from the XRD spectrum of Figure III.1, and the results are shown in Table III.2.

**Table III.2**

| sample | NI of Pt(111) characteristic peak / (FWHM*m_{Pt}) | NI of Pt(111) characteristic peak /(FWHM*m_{Pt}) |
|---|---|---|
| Example III. 1 | not present | not present |
| Example III.3 | 0.444 | 0.205 |
| Example III.4 | 0.337 | 0.282 |
| Example III.5 | not present | not present |
| Comparative Example III. 1 | 1.141 | 0.665 |
| Comparative Example III.2 | 1.213 | 0.284 |

In the above table, "not present" means that the sulfur-containing platinum-carbon catalyst does not have the corresponding Pt characteristic peak.

It can be seen from the results of Table III.2 that the sulfur-containing platinum-carbon catalysts of the present invention all satisfy: there is no Pt characteristic peak, or the NI/(FWHM*m_{Pt}) of the Pt(111) characteristic peak is not greater than 0.8 and the NI/(FWHM*m_{Pt}) of the Pt(200) characteristic peak is not greater than 0.5, and when the platinum content of the sulfur-containing platinum-carbon catalyst is less than 10wt.%, the sulfur-containing platinum-carbon catalyst of the present invention has no Pt characteristic peak in the XRD spectrum, or the NI/(FWHM*m_{Pt}) of the Pt(111) characteristic peak is not greater than 0.6 and the NI/(FWHM*m_{Pt}) of the Pt(200) characteristic peak is not greater than 0.4.

The XRD spectrum of Example III.2 was measured in the same manner as described above, and the results were similar to those of Example III.1. The NI/(FWHM*m_{Pt}) of the Pt(111) characteristic peak and the Pt(200) characteristic peak were calculated, which also satisfied the above relationship.

### Test Example III.3

The XPS spectrum of the sulfur-containing platinum-carbon catalysts of Example III.1 and Comparative Examples III.1-3 were measured, as shown in Figure III.2. As shown in Figure III.2, the Pt 4f 7/2 characteristic peak of the sulfur-containing platinum-carbon catalyst of Example III.2 is located at 72.2 eV, which is shifted toward high electron volts by about 0.8 eV relative to Comparative Example III.1.

The XPS spectrum of Example III.2-6 were measured in the same manner as above, and the Pt 4f 7/2 characteristic peaks thereof were all located above 71.9 eV.

### Test Example III.4

The performance of the sulfur-containing platinum-carbon catalysts prepared in the above examples and comparative examples was measured, and the results are shown in Table III.3 and Figure III.3. Figure III.3 shows the LSV curves of the sulfur-containing platinum-carbon catalysts of Example III.1 and Comparative Examples III.1-3.

**Table III.3**

| sample | Platinum content/ wt.% | Platinum dosage of catalyst on electrode/µg | Overpotential/ mV | Weight specific activity/ A mg⁻¹ -Pt @ 20mV |
|---|---|---|---|---|
| Example III.1 | 10wt.% | 2 | 8.59 | 1.82 |
| Example III.2 | 20wt.% | 2 | 11.1 | 1.75 |
| Example III.3 | 10wt.% | 2 | 12.6 | 1.44 |
| Example III.4 | 5% | 1 | 13.2 | 1.33 |
| Example III.5 | 5% | 1 | 12.0 | 2.0 |
| Example III.6 | 5% | 1 | 14.4 | 1.41 |
| Comparative Example III.1 | 10wt.% | 2 | 15.6 | 1.23 |
| Comparative Example III.2 | 40.2% | 4 | 19.9 | 0.52 |
| Comparative Example III.3 | 6.24% | 1.25 | 37.0 | 0.91 |

It can be seen from the results in Table III.3 that Examples III. 1-6 using the sulfur-containing platinum-carbon catalyst of the present invention have lower overpotential and higher weight specific activity than the commercial catalyst of Comparative Example III.2.

By comparing Examples III.1-6 with Comparative Example III.3, it can be seen that the sulfur-containing platinum-carbon catalyst of the present invention, by using the sulfur-modified carbon carrier of the present invention, can significantly reduce the overpotential while improving the weight specific activity.

By comparing Examples III.2 and 5-6, it can be seen that the heat treatment temperature is 100-140 °C, which can further reduce the overpotential and improve the weight specific activity.

### Embodiment IV

### Example IV. 1

0.1 g of sulfur was dissolved in 70 ml of cyclohexane to form a homogeneous solution, 9.9 g of Ketjenblack ECP600JD was dispersed therein, stirred evenly, immersed for 5 hours, and dried at 50 °C in vacuum to obtain a sulfur-modified carbon carrier; 0.4 g of chloroplatinic acid in terms of platinum was dissolved in 20 mL of a solution with a volume ratio of water to ethanol of 10: 1, 0.6 g of the above-mentioned sulfur-modified carbon carrier was dispersed in the chloroplatinic acid solution, stirred and dispersed evenly, allowed to stand for 24 hours, and then placed in a vacuum drying oven for drying; the dried precursor was placed in a tubular furnace, raised to 140 °C at a rate of 8 °C/min, reduced for 2 hours in an atmosphere of N₂:H₂=5:1, and cooled in an N₂ atmosphere to obtain a sulfur-containing platinum-carbon catalyst.

### Example IV.2

0.55 g of sulfur was dissolved in 70ml of cyclohexane to form a homogeneous solution, 9.45g of Ketjenblack ECP600JD was dispersed therein, stirred evenly, immersed for 5h, and dried in vacuum at 50 °C to obtain a sulfur-modified carbon carrier; 0.4g of chloroplatinic acid in terms of platinum was dissolved in 20mL of a solution with a volume ratio of water to ethanol of 10: 1, 0.6g of the above-mentioned sulfur-modified carbon carrier was dispersed in the chloroplatinic acid solution, stirred and dispersed evenly, allowed to stand for 24h, and then placed in a vacuum drying oven for drying; the dried precursor was placed in a tubular furnace, raised to 160 °C at a rate of 6 °C/min, reduced for 2h in an atmosphere of N₂:H₂=5:1, and cooled in an N₂ atmosphere to obtain a sulfur-containing platinum-carbon catalyst.

### Comparative Example IV. 1

The carbon carrier used was unmodified Ketjenblack ECP600JD, and the Pt loading process and loading amount were the same as those in Example IV. 1 to obtain a platinum-carbon catalyst.

### Comparative Example IV.2

The platinum carbon catalyst was commercially available TEC10F50E, with a platinum loading of 46wt.%.

### Test Example IV. 1

The surface sulfur content and total sulfur content of the carbon carriers prepared in the above Example IV were measured. The results are shown in Table 1.

**Table IV. 1**

| Carbon carrier | Surface sulfur content | Total sulfur content | Total sulfur content / surface sulfur content |
|---|---|---|---|
| Example IV.1 | 0.52% | 1.0wt.% | 1.9 |
| Example IV.2 | 3.49% | 5.5% | 1.6 |

In Table IV.1, the surface sulfur content represents the sulfur weight fraction measured by XPS analysis, and the total sulfur content represents the sulfur weight fraction measured by a sulfur-carbon analyzer.

### Test Example IV.2

The ORR activity of each platinum-carbon catalyst prepared in Example IV and Comparative Example IV before and after SOₓ poisoning treatment was tested according to the following process. The test process is as follows:
For electrochemical performance testing, the instrument models were Solartron analytical EnergyLab and Princeton Applied Research (Model 636A).

ORR activity test process: (i) In 0.1M HClO₄ saturated with N₂, the catalyst was electrochemically pretreated by triangular wave scanning at a speed of 50mV·s⁻¹ for 10 cycles in the potential range of 0-1.1V. (ii) In 0.1M HClO₄ saturated with N₂, the cyclic voltammetry curve of the catalyst was tested by cyclic scanning at a speed of 50mV·s⁻¹ for 10 cycles in the potential range of 0-1.1V. (iii) In 0.1M HClO₄ saturated with O₂, the rotating disk speed was set to 1600rpm, and the polarization curve of the catalyst was tested by cyclic scanning at a speed of 10mV·s⁻¹ for 10 cycles in the potential range of 0-1.1V. The kinetic current value was calculated by the K-L equation, and the area specific activity or weight specific activity of the catalyst was obtained by dividing the kinetic current by the electrochemical active area or the Pt content on the electrode surface.

SOₓ tolerance test method in ORR: the catalytic electrode was placed in a N₂ gas flow for electrochemical pretreatment, and then placed in an O₂ gas flow to record the ORR polarization curve of the initial state. After the scan was completed, the electrode is inserted into a 0.1 mol/L HClO₄ solution containing 0.1 mmol/L Na₂SO₃ (equivalent to 6.4ppm SOₓ in terms of SO₂), and poisoned at a constant voltage of 0.65 V (vs RHE) under N₂ saturation conditions for 120 s. The electrode is then taken out and placed in a 0.1M HClO₄ solution without poisoning substance, and the ORR activity of the catalyst after poisoning treatment is tested according to the activity test process. The gas saturation state is maintained for each test, and the polarization curve scan rate is 10 mV·s⁻¹.

The test results are shown in Figure IV.1 and Table IV.2. Figure IV. 1 shows the LSV curves of ORR of the platinum-carbon catalysts synthesized in Example IV. 1 and Comparative Example IV.2 before and after SOₓ poisoning treatment.

**Table IV.2 ORR test results**

| Platinum Carbon Catalyst | Platinum content/ wt.% | Platinum dosage on electrode/µg | Half-wave potential/ V | Weight specific activity decrease/% |
|---|---|---|---|---|
| Example IV.1-without SOₓ | 40 | 4 | 0.880 | 12.32 |
| Example IV.1-6.4 ppm SOₓ | 40 | 4 | 0.878 | |
| Example IV.2- without SOₓ | 40 | 4 | 0.887 | 19.41 |
| Example IV.2-6.4 ppm SOₓ | 40 | 4 | 0.878 | |
| Comparative Example IV.1-without SOₓ | 40 | 4 | 0.848 | 38.04 |
| Comparative Example IV.1 -6.4 ppm SOₓ | 40 | 4 | 0.808 | |
| Comparative Example IV.2-without SOₓ | 46 | 4.6 | 0.869 | 75.74 |
| Comparative Example IV.2 -6.4 ppm SOₓ | 46 | 4.6 | 0.782 | |

From the results in Table IV.2, it can be seen that Example IV.1-2, by using the sulfur-containing platinum-carbon catalyst of the present invention, has significantly better electrochemical performance, such as higher weight specific activity and SOₓ tolerance, than Comparative Example IV.2 under SOₓ poisoning conditions.

It can be seen from the above results that the sulfur-containing platinum-carbon catalyst of the present invention has the effect of improving the resistance of the platinum-carbon catalyst to SOₓ toxicity.

### Embodiment V

### Example V.1

0.1 g of sulfur was dissolved in 70 ml of cyclohexane to form a homogeneous solution, 9.9 g of Ketjenblack ECP600JD was dispersed therein, stirred evenly, immersed for 5 hours, and dried at 50 °C in vacuum to obtain a sulfur-modified carbon carrier; 0.4 g of chloroplatinic acid, in terms of platinum, was dissolved in 20 mL of a solution with a volume ratio of water to ethanol of 10:1, 0.6 g of the above-mentioned sulfur-modified carbon carrier was dispersed in the chloroplatinic acid solution, stirred and dispersed evenly, allowed to stand for 24 hours, and then placed in a vacuum drying oven for drying; the dried precursor was placed in a tubular furnace, raised to 140 °C at a rate of 8 °C/min, reduced for 2 hours in an atmosphere of N₂:H₂=5:1, and cooled in an N₂ atmosphere to obtain a sulfur-containing platinum-carbon catalyst.

### Example V.2

0.55g of sulfur was dissolved in 70ml of cyclohexane to form a homogeneous solution, 9.45g of Ketjenblack ECP600JD was dispersed therein, stirred evenly, immersed for 5h, and dried in vacuum at 50 °C to obtain a sulfur-modified carbon carrier; 0.35g of chloroplatinic acid, in terms of platinum, was dissolved in 20mL of a solution with a volume ratio of water to ethanol of 10:1, 0.6g of the above-mentioned sulfur-modified carbon carrier was dispersed in the chloroplatinic acid solution, stirred and dispersed evenly, allowed to stand for 24h, and then placed in a vacuum drying oven for drying; the dried precursor was placed in a tubular furnace, raised to 160 °C at a rate of 6 °C/min, reduced for 2h in an atmosphere of N₂:H₂=5:1, and cooled in an N₂ atmosphere to obtain a sulfur-containing platinum-carbon catalyst.

### Comparative Example V. 1

The carbon carrier used was unmodified Ketjenblack ECP600JD, and the loading process and loading amount of Pt were the same as those in Example V. 1 to obtain a platinum-carbon catalyst.

### Comparative Example V.2

A commercially available platinum-carbon catalyst was used, with the grade TEC10F50E, with a platinum loading of 46 wt %.

### Comparative Example V.3

The sulfur-doped carbon material was prepared according to the process of the document "Nature Communications, 2019, 10:4977", and platinum was loaded according to the process of Example V.1 to prepare a sulfur-containing platinum-carbon catalyst.

### Comparative Example V.4

A commercially available platinum-carbon catalyst was used, with the grade HISPEC4000 and a platinum loading of 40wt.%.

### Test Example V.1

The surface sulfur content and total sulfur content of the carbon carriers prepared in the above example and comparative example V.3 were measured. The results are shown in Table 1.

**Table V.1**

| Carbon carrier | Surface sulfur content | Total sulfur content | Total sulfur content / surface sulfur content |
|---|---|---|---|
| Example V.1 | 0.52% | 1.0wt.% | 1.9 |
| Example V.2 | 3.49% | 5.5% | 1.6 |
| Comparative Example V.3 | 10.74% | 4.61% | 0.4 |

In Table V.1, the surface sulfur content represents the sulfur weight fraction measured by XPS analysis, and the total sulfur content represents the sulfur weight fraction measured by a sulfur-carbon analyzer.

### Test Example V.2

The HOR and HER activities of the platinum-carbon catalysts of Example V. and Comparative Example V. before and after CO poisoning treatment were tested according to the following process. The test process is as follows:
for electrochemical performance testing, the instrument models were Solartron analytical EnergyLab and Princeton Applied Research (Model 636A).

HOR activity test process: (i) in N₂-saturated 0.1M HClO₄ or 0.5M H₂SO₄, the catalyst was electrochemically pretreated by triangular wave scanning at a rate of 50mV·s⁻¹ for 10 cycles in the potential range of 0.05-1.0V; (ii) in N₂-saturated 0.1M HClO₄, the catalyst was cyclically scanned at a rate of 50mV·s⁻¹ for 10 cycles in the potential range of 0.05-1.1V to test the cyclic voltammetry curve of the catalyst; (iii) in H₂-saturated HClO₄, the catalyst was cyclically scanned at a rate of 10mV·s ⁻¹ for 10 cycles in the potential range of 0-0.2V with the rotating disk speed set to 1600rpm, to test the polarization curve of the catalyst. The HOR activity of the catalyst was evaluated by calculating the overpotential at a specified current density (j) in the polarization curve, the apparent weight activity (MA, calculated as Pt weight) obtained by dividing the apparent current value (i) at a specified electrode potential by the Pt content (mPt) on the electrode surface, etc.

CO tolerance test process in HOR: The catalytic electrode is placed in N₂ gas flow for electrochemical pretreatment, and then placed in H₂ gas flow to record the HOR polarization curve of the initial state. After that, the catalytic electrode is placed in H₂ gas flow mixed with 1000ppm CO, and the HOR polarization curve when high concentration CO is mixed in the system is recorded. Each test maintains the gas saturation state, and the polarization curve scan rate is 10mV·s⁻¹.

HER test process: The polarization curve LSV of the catalyst was tested in 0.1M HClO₄ saturated with N₂ at a speed of 2500rpm, with a potential range of -0.2 to 0.2V, and the electrochemical active area ECSA was tested in 0.1M HClO₄ saturated with N ₂ In the above tests, the catalyst was prepared into a uniformly dispersed slurry and applied to a glassy carbon electrode with a diameter of 5mm. The amount of platinum in the catalyst on the electrode was controlled in the range of 1-4µg.

The CO tolerance test process in HER is the same as that in HOR.

The test results are shown in Figures V.1-5 and Tables V.2-3. Figure V.1 is a XPS spectrum of the platinum-carbon catalysts of Example V. 1 and Comparative Example V.1; Figure V.2 is the LSV curves of HER of the platinum-carbon catalysts of Example V.1 and Comparative Example V.1 before and after CO poisoning treatment; Figure V.3 is the LSV curves of HOR of the platinum-carbon catalysts of Example V. 1 and Comparative Example V.2 before and after CO poisoning treatment; Figure V.4 is the CO in-situ infrared curve of the platinum-carbon catalysts of Example V. 1 and Comparative Example V.1; Figure V.5 is the LSV curves of HOR of the platinum-carbon catalysts of Example V.2 and Comparative Example V.4 before and after CO poisoning treatment. Wherein, when Example V.1 and Comparative Examples V.1-3 were tested, the raw gas flow rate was 200 mL/min, and when Example V.2 and Comparative Example V.4 were tested, the raw gas flow rate was 100 mL/min.

**Table V.2 HOR test results**

| Platinum Carbon Catalyst | Platinum content/ wt.% | Platinum dosage on electrode/µg | Over potential/ mV@2 mA/cm² | Weight specific activity/A mg ⁻¹ -Pt@20mV |
|---|---|---|---|---|
| Example V.1 - without CO | 40 | 4 | 18 | 0.17 |
| Example V.1 - 1000 ppm CO | 40 | 4 | 26 | 0.14 |
| Example V.2 - without CO | 37 | 3.7 | 23 | 0.10 |
| Example V.2 - 1000 ppm CO | 37 | 3.7 | 26 | 0.09 |
| Comparative | 40 | 4 | 48 | 0.13 |
| Example V.1 - without CO | | | | |
| Comparative Example V.1-1000ppm CO | 40 | 4 | Not reached ^{[a]} | 0.09 |
| Comparative Example V.2 - without CO | 46 | 4.6 | 21 | 0.14 |
| Comparative Example V.2-1000ppm CO | 46 | 4.6 | 26 | 0.12 |
| Comparative Example V.3 - without CO | 40 | 4 | 25 | 0.07 |
| Comparative Example V.3-1000ppm CO | 40 | 4 | 27 | 0.05 |
| Comparative Example V.4 - without CO | 40 | 4 | 23 | 0.09 |
| Comparative Example V.4-1000ppm CO | 40 | 4 | 36 | 0.07 |

| | | | | |
|---|---|---|---|---|
| [a] "Not reached" means that within the measured potential range, the current density of the sample has never reached 2mA/cm² | | | | |

**Table V.3 HER test results**

| Platinum Carbon Catalyst | Platinum content/ wt.% | Platinum dosage on the electrode/µg | Over potential/ mV@10mA/cm² |
|---|---|---|---|
| Example V.1 - without CO | 40 | 4 | 65 |
| Example V.1 - 1000 ppm CO | 40 | 4 | 68 |
| Comparative Example V.1 - without CO | 40 | 4 | 82 |
| Comparative Example | 40 | 4 | 96 |
| V.1-1000ppm | | | |
| Comparative Example V.2 - without CO | 46 | 4.6 | 66 |
| Comparative Example V2-1000ppm CO | 46 | 4.6 | 69 |

It can be seen from the results of Table V.2 and Table V.3 that Example V.1-2 has better electrochemical performance, such as higher weight specific activity and higher CO tolerance, than Comparative Example V.1-4 under CO poisoning conditions by using the sulfur-containing platinum-carbon catalyst of the present invention.

It can be seen from Figure V.4 that by using the sulfur-modified carbon carrier of the present invention, the obtained sulfur-containing platinum-carbon catalyst has substantially no CO chemical adsorption to CO and therefore has CO tolerance.

It can be seen from the above results that the sulfur-containing platinum-carbon catalyst of the present invention has the effect of improving the resistance of the platinum-carbon catalyst to CO toxicity.

### Embodiment VI

### Example VI.1

0.1 g of sulfur was dissolved in 70 ml of cyclohexane to form a homogeneous solution, 9.9 g of Ketjenblack ECP600JD was dispersed therein, stirred evenly, immersed for 5 hours, and dried at 50 °C in vacuum to obtain a sulfur-modified carbon carrier; 0.4 g of chloroplatinic acid, in terms of platinum, was dissolved in 20 mL of a solution with a volume ratio of water to ethanol of 10:1, 0.6 g of the above-mentioned sulfur-modified carbon carrier was dispersed in the chloroplatinic acid solution, stirred and dispersed evenly, allowed to stand for 24 hours, and then placed in a vacuum drying oven for drying; the dried precursor was placed in a tubular furnace, raised to 140 °C at a rate of 8 °C/min, reduced for 2 hours in an atmosphere of N₂:H₂=5:1, and cooled in an N₂ atmosphere to obtain a sulfur-containing platinum-carbon catalyst.

### Example VI.2

0.25 g of sulfur was dissolved in 70 ml of cyclohexane to form a homogeneous solution, 9.75 g of Ketjenblack ECP600JD was dispersed therein, stirred evenly, immersed for 5 hours, and dried at 50 °C in vacuum to obtain a sulfur-modified carbon carrier; 0.52 g of chloroplatinic acid in terms of platinum was dissolved in 20 mL of a solution with a volume ratio of water to ethanol of 10: 1, 0.6 g of the above-mentioned sulfur-modified carbon carrier was dispersed in the chloroplatinic acid solution, stirred and dispersed evenly, allowed to stand for 24 hours, and then placed in a vacuum drying oven for drying; the dried precursor was placed in a tubular furnace, raised to 160 °C at a rate of 6 °C/min, reduced for 2 hours in an atmosphere of N₂:H₂=5:1, and cooled in an N₂ atmosphere to obtain a sulfur-containing platinum-carbon catalyst.

### Comparative Example VI. 1

Commercial catalyst of brand HISPEC4000, platinum loading 40wt.%.

### Comparative Example VI.2

The sulfur-doped carbon material was prepared according to the process of the document "Nature Communications, 2019, 10:4977", and the platinum was loaded according to the process of Example VI. 1 to prepare a platinum-carbon catalyst.

### Test Example VI. 1

The surface sulfur content and total sulfur content of the carbon carriers prepared in the above examples and comparative examples were measured. The results are shown in Table VI. 1.

**Table VI. 1**

| serial number | Surface sulfur content | Total sulfur content | Total sulfur content/ surface sulfur content |
|---|---|---|---|
| Example VI.1 | 0.52% | 1.0wt.% | 1.9 |
| Example VI.2 | 1.76% | 2.5% | 1.4 |
| Comparative Example VI.2 | 10.74% | 4.61% | 0.4 |

In Table VI.1, the surface sulfur content represents the sulfur weight fraction measured by XPS analysis, and the total sulfur content represents the sulfur weight fraction measured by a sulfur-carbon analyzer.

### Test Example VI.2

HOR electrochemical performance test, instrument model Solartron analytical EnergyLab and Princeton Applied Research (Model 636A), process and test conditions: the polarization curve LSV of catalyst was tested in 0.1M HClO₄ saturated with H₂ at a speed of 2500rpm, the scanning speed was 10mV/s, and the electrochemical active area ECSA was tested in 0.1M HClO₄ saturated with N₂, the scanning speed was 50mV/s. In the above tests, the catalyst was prepared into a uniformly dispersed slurry, and 10µl was taken and applied to a glassy carbon electrode with a diameter of 5mm. H₂S toxicity resistance test process 1: 0.4ppm H₂S was mixed into H₂, and the HOR activity was tested again in 0.1M HClO₄ saturated with H₂+0.4ppm H₂S, and the changes in activity before and after introducing H₂S were compared. H₂S toxicity resistance test process 2: 10 µmol/L Na₂S was add to 0.5M H₂SO₄, poisoning was conducted for 5 h at a constant voltage of 0.1 V, and the change of catalyst performance was tested before and after poisoning.

Process 1 was used to test the HOR activity of the platinum-carbon catalyst of Example VI.2 before and after H₂S poisoning treatment, and process 2 was used to test the HOR activity of the platinum-carbon catalyst of Example VI.1 and Comparative Examples VI.1-2 before and after H₂S poisoning treatment. The results are shown in Table VI.2. Figures VI.1 and VI.2 respectively show the LSV curve and CV curve of the platinum-carbon catalyst of Example VI.2 before and after H₂S poisoning; Figures VI.3 and VI.4 respectively show the LSV curve and CV curve of the platinum-carbon catalyst of Example VI.1 and Comparative Example VI.1 before and after H₂S poisoning.

**Table VI.2**

| serial number | Platinum content/ wt.% | Platinum dosage on electrode/µg | Limiting current density/mA/cm2 | Weight specific activity/A mg⁻¹ -Pt@20mV |
|---|---|---|---|---|
| Example VI.1 - without H₂S | 40 | 4 | 3.10 | 0.125 |
| Example VI. 1- 10 µmol/L H₂S | 40 | 4 | 2.72 | 0.102 |
| Example VI.2-without H₂S | 46 | 4.6 | 3.89 | 0.082 |
| Example VI.2- 0.4 ppm H₂S | 46 | 4.6 | 3.97 | 0.085 |
| Comparative Example VI.1-without H₂S | 40 | 4 | 2.48 | 0.096 |
| Comparative Example VI.1- 10 µmol/L H₂S | 40 | 4 | 2.02 | 0.065 |
| Comparative Example VI.2-without H₂S | 40 | 4 | 0.99 | 0.049 |
| Comparative Example VI.2- 10 µmol/L H₂S | 40 | 4 | 0.44 | 0.022 |

It can be seen from the results in Table VI.2 that Example VI. 1-2 has better electrochemical performance and better tolerance to sulfide toxicity than Comparative Example VI. 1-2 under H₂S poisoning conditions by using the sulfur-modified carbon carrier of the present invention.

It can be seen from the above results that the sulfur-containing platinum-carbon catalyst of the present invention has the effect of improving the resistance of the platinum-carbon catalyst to H₂S toxicity.

The preferred embodiments of the present invention are described in detail above, but the present invention is not limited thereto. Within the technical concept of the present invention, the technical solution of the present invention can be subjected to a variety of simple modifications, including the combination of various technical features in any other suitable manner, and these simple modifications and combinations should also be regarded as the contents disclosed by the present invention and belong to the protection scope of the present invention.

## Claims

1. A sulfur-containing platinum-carbon catalyst, comprising sulfur-containing conductive carbon black as a carrier and a platinum metal loaded thereon, **characterized in that** at least 70wt.% of platinum metal particles are loaded inside the sulfur-containing conductive carbon black, and compared with the benchmark platinum carbon catalyst using sulfur-free conductive carbon black as a carrier, the sulfur-containing platinum carbon catalyst has a characteristic peak of Pt 4f 7/2 in the XPS spectrum that is increased by at least 0.3 eV, optionally increased by up to 1.3 eV.

2. The sulfur-containing platinum-carbon catalyst according to claim 1, wherein the Pt 4f 7/2 characteristic peak of the benchmark platinum-carbon catalyst is located at about 71.3 eV in the XPS spectrum; the Pt 4f 7/2 characteristic peak of the sulfur-containing platinum-carbon catalyst is located at about 71.6 eV or above, about 71.7 eV or above, or about 71.9 eV or above in the XPS spectrum, and preferably the Pt 4f 7/2 characteristic peak of the sulfur-containing platinum-carbon catalyst is located at about 72.6 eV or less, preferably about 72.2 eV or less in the XPS spectrum.

3. The sulfur-containing platinum-carbon catalyst according to claim 1, wherein the sulfur-containing platinum-carbon catalyst has no Pt characteristic peak in the XRD spectrum, or the ratio of the unit weight platinum normalized peak intensity to the full width at half-maximum of the Pt (111) characteristic peak is not greater than 0.8 and the ratio of the unit weight platinum normalized peak intensity to the full width at half-maximum of the Pt (200) characteristic peak is not greater than 0.5;
preferably, when the platinum content of the sulfur-containing platinum-carbon catalyst is 10wt.% or less, the sulfur-containing platinum-carbon catalyst has no Pt characteristic peak in the XRD spectrum, or the ratio of the unit weight platinum normalized peak intensity to the full width at half-maximum of the Pt (111) characteristic peak is not greater than 0.6 and the ratio of the unit weight platinum normalized peak intensity to the full width at half-maximum of the Pt (200) characteristic peak is not greater than 0.4.

4. The sulfur-containing platinum-carbon catalyst according to claim 1, wherein the overall average sulfur content of the sulfur-containing conductive carbon black is greater than or equal to the surface sulfur content, and preferably the total sulfur content is equal to or more than 1.2 times, preferably equal to or more than 1.5 times the surface sulfur content.

5. The sulfur-containing platinum-carbon catalyst according to claim 1, wherein the total sulfur content of the sulfur-containing conductive carbon black is 0.1-10wt.%, preferably 1-8wt.%, and further preferably 1-4wt.%.

6. The sulfur-containing platinum-carbon catalyst according to claim 1, wherein the content of platinum is 1-20wt.%, preferably 5-20wt.%, preferably 5-15wt.%, and further preferably 7-10wt.%, based on the total weight of the sulfur-containing platinum-carbon catalyst.

7. The sulfur-containing platinum-carbon catalyst according to claim 1, wherein the content of platinum is 20-70wt.%, preferably 20-60wt.%, and more preferably 40-60wt.%, based on the total weight of the sulfur-containing platinum-carbon catalyst.

8. The sulfur-containing platinum-carbon catalyst according to claim 1, wherein the platinum metal particles having regular lattice fringes do not exceed 60%, preferably are 40wt.% or less, and further preferably 10wt.% or less.

9. A process for preparing the sulfur-containing platinum-carbon catalyst according to claim 1, **characterized in that** the process comprises:
(1) impregnating the conductive carbon black with a solution containing sulfur at 10-80 °C for 1-5 hours, and drying the impregnated product to obtain sulfur-containing conductive carbon black;
(2) removing a solvent from the homogeneous mixture containing the sulfur-containing conductive carbon black obtained in step (1), the platinum source and the solvent to obtain a precursor material;
(3) heat-treating the precursor material in a reducing atmosphere to obtain the sulfur-containing platinum-carbon catalyst.

10. The process according to claim 9, wherein the concentration of sulfur in the sulfur-containing solution is 0.0004-0.02 g/mL.

11. The process according to claim 9, wherein the amount of sulfur used is 0.005-0.06 g relative to 1 g of the conductive carbon black.

12. The process according to claim 9, wherein the heat treatment in step (3) is performed at 80-200 °C.

13. The process according to claim 9, wherein the drying conditions in step (1) include: a temperature of 20-100 °C and a time of 5-10 hours.

14. Use of the sulfur-containing platinum-carbon catalyst according to any one of claims 1 to 8 in a proton exchange membrane fuel cell or proton exchange membrane electrolysis of water.

15. Use of the sulfur-containing platinum-carbon catalyst according to any one of claims 1-8 for improving the resistance of a platinum-carbon catalyst to catalyst poisoning, wherein the poisoning is selected from SOₓ poisoning, CO poisoning and H₂S poisoning.

16. The use according to claim 15, the sulfur-containing platinum-carbon catalyst is used in the cathode reaction of fuel cells, wherein O₂ in a raw gas is contacted with the sulfur-containing platinum-carbon catalyst, and the content of SOₓ in the raw gas is 120 ppm or less, preferably 100 ppm or less, and also preferably 50 ppm or less.

17. The use according to claim 15, the sulfur-containing platinum-carbon catalyst is used in the anode reaction of hydrogen fuel cells, wherein H₂ in a raw gas is contacted with the sulfur-containing platinum-carbon catalyst, and the CO content in the raw gas is 1500 ppm or less, preferably 1200 ppm or less, and also preferably 1000 ppm or less.

18. The use according to claim 15, the sulfur-containing platinum-carbon catalyst is used in the anode reaction of hydrogen fuel cells, wherein H₂ in a raw gas is contacted with the sulfur-containing platinum-carbon catalyst, and the content of H₂S in the raw gas is 15 ppm or less, preferably 10 ppm or less, and further preferably 5 ppm or less.
